# EUROPÄISCHE PATENTSCHRIFT

(11) **EP 2 705 334 B1**
(45) Veröffentlichungstag und Bekanntmachung des Hinweises auf die Patenterteilung: **24.01.2018**
(21) Anmeldenummer: 12718652.6
(22) Anmeldetag: 02.05.2012
(51) Int. Cl.: G01F 1/84

(54) **MESSAUFNEHMER VOM VIBRATIONSTYP SOWIE DAMIT GEBILDETES MESSSYSTEM**
VIBRATION-TYPE MEASURING SENSOR AND MEASURING SYSTEM FORMED THEREWITH
CAPTEUR DE MESURE DE TYPE VIBRATOIRE ET SYSTÈME DE MESURE FORMÉ AVEC CE CAPTEUR DE MESURE

(30) Priorität: 02.05.2011 DE 102011075084
(43) Veröffentlichungstag der Anmeldung: 12.03.2014
(73) Patentinhaber: Endress+Hauser Flowtec AG, 4153 Reinach (CH)
(72) Erfinder: BITTO, Ennio, CH-4147 Aesch (BL) (CH); TSCHABOLD, Peter, CH-4226 Breitenbach (CH); MUNDSCHIN, Dieter, CH-4410 Liestal (CH); SCHÜTZE, Christian, CH-4055 Basel (CH); ANKLIN, Martin, CH-4143 Dornach (CH); RIEDER, Alfred, 84032 Landshut (DE)
(74) Vertreter: Andres, Angelika Maria
(86) Internationale Anmeldenummer: PCT/EP2012/057989
(87) Internationale Veröffentlichungsnummer: WO 2012/150241

(56) Entgegenhaltungen:
- EP-A1- 0 119 638
- DE-A1-102009 027 580
- US-A- 4 879 910
- US-A- 5 090 253

## Beschreibung

Die Erfindung betrifft einen Meßaufnehmer vom Vibrationstyp zum Messen eines in einer Rohrleitung geführten strömungsfähigen Mediums, insb. eines Gases, einer Flüssigkeit, eines Pulvers oder eines anderen strömungsfähigen Stoffes, insb. zum Messen einer Dichte und/oder einer Massendurchflußrate, insb. auch eines über ein Zeitintervall totalisierten Gesamt-Massendurchflusses, eines in einer Rohrleitung zumindest zeitweise mit einer Massendurchflußrate von mehr als 1000 t/h, insb. mehr als 1500 t/h, strömenden Mediums. Ferner betrifft die Erfindung ein, etwa als In-line-Meßgerät ausgebildetes, Meßsystem mit einem solchen Meßaufnehmer.

In der Prozeßmeß- und Automatisierungstechnik werden für die Messung physikalischer Parameter, wie z.B. dem Massedurchfluß, der Dichte und/oder der Viskosität, von in Rohrleitungen strömenden Medien, etwa einer wässrigen Flüssigkeit, einem Gas, einem Flüssigkeits-Gas-Gemisch, einem Dampf, einem Öl, einer Paste, einem Schlamm oder einem anderen strömungsfähigen Stoff, oftmals solche In-Line-Meßgeräte verwendet, die mittels eines vom Medium durchströmten Meßaufnehmers vom Vibrationstyp und einer daran angeschlossenen Meß- und Betriebsschaltung, im Medium Reaktionskräfte, wie z.B. mit dem Massedurchfluß korrespondierende Corioliskräfte, mit der Dichte des Mediums korrespondierende Trägheitskräfte und/oder mit der Viskosität des Mediums korrespondierende Reibungskräfte etc., bewirken und von diesen abgeleitet ein den jeweiligen Massedurchfluß, die jeweilige Viskosität und/oder ein die jeweilige Dichte des Mediums repräsentierendes Meßsignal erzeugen. Derartige, insb. als Coriolis-Massedurchflußmesser oder Coriolis-Massedurchfluß-/ Dichtemesser ausgebildete, Meßaufnehmer sind z.B. in der EP-A 1 001 254, der EP-A 553 939, der US-A 2002/0157479, der US-A 2006/0150750, der US-A 53 70 002, der US-A 57 96 011, der US-B 63 08 580, der US-B 64 15 668, der US-B 67 11 958, der US-B 69 20 798, der US-B 71 34 347, der US-B 73 92 709 oder der WO-A 03/027616 der ausführlich und detailliert beschrieben.

Jeder der Meßaufnehmer weist ein Aufnehmer-Gehäuse auf, von dem ein einlaßseitiges erstes Gehäuseende zumindest anteilig mittels eines genau zwei jeweils voneinander beabstandeten kreiszylindrische oder kegelförmige Strömungsöffnungen aufweisenden ersten Strömungsteiler und ein auslaßseitiges zweites Gehäuseende zumindest anteilig mittels eines genau zwei jeweils voneinander beabstandeten Strömungsöffnungen aufweisenden zweiten Strömungsteilers gebildet sind. Bei einigen der in der US-A 57 96 011, der US-B 73 50 421, oder der US-A 2007/0151368 gezeigten Meßaufnehmern umfaßt das Aufnehmer-Gehäuse ein eher dickwandiges kreiszylindrisches Rohrsegment, das zumindest ein Mittelsegment des Aufnehmer-Gehäuses bildet.

Zum Führen von zumindest zeitweise strömendem, ggf. auch extrem heißem, Medium umfassen die Meßaufnehmer desweiteren jeweils genau zwei strömungstechnisch parallel geschaltete, gebogene Meßrohre aus Metall, insb. Stahl oder Titan, die innerhalb des Aufnehmer-Gehäuses plaziert und darin mittels vorgenannter Strömungsteiler schwingfähig gehaltert sind. Ein erstes der, zumeist baugleichen und zueinander parallel verlaufenden, Meßrohre mündet mit einem einlaßseitigen ersten Meßrohrende in eine erste Strömungsöffnung des einlaßseitigen ersten Strömungsteilers und mit einem auslaßseitigen zweiten Meßrohrende in eine erste Strömungsöffnung des auslaßseitigen zweiten Strömungsteilers und ein zweites der Meßrohre mündet mit einem einlaßseitigen ersten Meßrohrende in eine zweite Strömungsöffnung des ersten Strömungsteilers und mit einem auslaßseitigen zweiten Meßrohrende in eine zweite Strömungsöffnung des zweiten Strömungsteilers. Jeder der Strömungsteiler weist ferner jeweils einen Flansch mit einer Dichtfläche zum fluiddichten Anschließen des Meßaufnehmers an ein dem Zuführen von Medium zum bzw. dem Abführen von Medium vom Meßaufnehmer dienendes Rohrsegment der Rohrleitung auf.

Die Meßrohre werden zum Erzeugen oben genannter Reaktionskräfte, angetrieben von einer dem Erzeugen bzw. Aufrechterhalten von mechanischen Schwingungen, insb. von Biegeschwingungen, der Meßrohre im sogenannten Antriebs- oder Nutzmode dienenden Erregeranordnung, im Betrieb vibrieren gelassen. Die Schwingungen im Nutzmode sind zumeist, insb. bei Verwendung des Meßaufnehmers als Coriolis-Massedurchfluß- und/oder Dichtemesser, zumindest anteilig als laterale Biege-Schwingungen ausgebildet und im Falle von durch die Meßrohre hindurchströmendem Medium infolge von darin induzierten Corioliskräften durch zusätzliche, frequenzgleiche Schwingungen im sogenannten Coriolismode überlagert. Dementsprechend ist die - hier zumeist elektro-dynamische - Erregeranordnung derart ausgebildet, daß damit die beiden Meßrohre im Nutzmode zumindest anteilig, insb. auch überwiegend, zu gegengleichen Biegeschwingungen differentiell - also durch Eintrag gleichzeitig entlang einer gemeinsamen Wirkungslinie, jedoch in entgegengesetzter Richtung wirkender Erregerkräfte - anregbar sind.

Zum Erfassen von Vibrationen, insb. von mittels der Erregeranordnung angeregten Biegeschwingungen, der Meßrohre und zum Erzeugen von Vibrationen repräsentierenden Schwingungssignalen weisen die Meßaufnehmer ferner jeweils eine auf relative Bewegungen der Meßrohre reagierende, zumeist ebenfalls elektrodynamische Sensoranordnung auf. Typischerweise ist die Sensoranordnung mittels eines einlaßseitigen, Schwingungen der Meßrohre differentiell - also lediglich relative Bewegungen der Meßrohre - erfassenden Schwingungssensors sowie eines auslaßseitigen, Schwingungen der Meßrohre differentiell erfassenden Schwingungssensors gebildet ist. Jeder der üblicherweise einander baugleichen Schwingungssensoren ist mittels eines am ersten Meßrohr gehalterten Permanentmagneten und einer von dessen Magnetfeld durchfluteten, am zweiten Meßrohr gehalterten Zylinderspule gebildet ist.

Im Betrieb wird die vorbeschriebene, mittels der zwei Meßrohre gebildete Rohranordnung mittels der elektro-mechanischen Erregeranordnung zumindest zeitweise im Nutzmode zu mechanischen Schwingungen auf wenigstens einer dominierenden Nutz-Schwingungsfrequenz angeregt. Als Schwingungsfrequenz für die Schwingungen im Nutzmode wird dabei üblicherweise eine natürliche momentane Resonanzfrequenz der Rohranordnung gewählt, die wiederum im wesentlichen sowohl von Größe, Form und Material der Meßrohre als auch von einer momentanen Dichte des Mediums abhängig ist; ggf. kann diese Nutz-Schwingungsfrequenz auch von einer momentanen Viskosität des Mediums signifikant beeinflußt sein. Infolge schwankender Dichte des zu messenden Mediums und/oder infolge von im Betrieb vorgenommen Mediumswechseln ist die Nutz-Schwingungsfrequenz im Betrieb des Meßaufnehmers naturgemäß zumindest innerhalb eines kalibrierten und insoweit vorgegebenen Nutz-Frequenzbandes veränderlich, das entsprechend eine vorgegebene untere und eine vorgegebene obere Grenzfrequenz aufweist.

Zum Definieren einer Nutz-Schwinglänge der Meßrohre und damit einhergehend zum Justieren des Nutzfrequenzbandes umfassen Meßaufnehmer der vorbeschriebenen Art ferner zumeist wenigstens ein einlaßseitiges Kopplerelement zum Bilden von einlaßseitigen Schwingungsknoten für gegengleiche Vibrationen, insb. Biegeschwingungen, beider Meßrohre, das von beiden Strömungsteilern beabstandet an beiden Meßrohren fixiert ist, sowie wenigstens ein auslaßseitiges Kopplerelement zum Bilden von auslaßseitigen Schwingungsknoten für gegengleiche Vibrationen, insb. Biegeschwingungen, der Meßrohre, das sowohl von beiden Strömungsteilern als auch vom einlaßseitigen Kopplerelement beabstandet an beiden Meßrohren fixiert ist. Im Falle gebogener Meßrohre entspricht dabei die Länge eines zwischen dem einlaßseitigem und dem auslaßseitigen Kopplerelement verlaufenden Abschnitts einer Biegelinie des jeweiligen Meßrohrs, mithin einer die Flächenschwerpunkte aller gedachten Querschnittsflächen des jeweiligen Meßrohrs verbindende gedachte Mittelllinie des nämlichen Meßrohrs, der Nutz-Schwinglänge der Meßrohre. Mittels der - insoweit mit zur Rohranordnung gehörigen - Kopplerelementen kann zudem auch eine Schwingungsgüte der Rohranordnung wie auch die Empfindlichkeit des Meßaufnehmers insgesamt beeinflußt werden, in der Weise, daß für eine minimal geforderte Empfindlichkeit des Meßaufnehmers zumindest eine minimale Nutz-Schwinglänge bereitzustellen ist. In der US-A 50 90 253 sind zudem auch Meßaufnehmer vom Vibrationstyp mit acht oder mehr strömungstechnisch parallel geschalteten gebogenen Meßrohren gezeigt, wobei die Meßrohre zu genau zwei Rohrbündeln zusammengefaßt sind und wobei lediglich die beiden Rohrbündel insgesamt mittels einer Erregeranordnung zu gegengleichen Biegeschwingungen differentiell anregbar sind, während aus der DE-A 10 2009 027580 Meßaufnehmer vom Vibrationstyp mit genau vier strömungstechnisch parallel geschalteten geraden Meßrohren bekannt sind, die mittels einer Erregeranordnung jeweils paarweise zu gegengleichen Biegeschwingungen anregbar sind.

Die Entwicklung auf dem Gebiet der Meßaufnehmer vom Vibrationstyp hat inzwischen einen Stand erreicht, daß moderne Meßaufnehmer der beschriebenen Art praktisch für ein breites Anwendungsspektrum der Durchflußmeßtechnik höchsten Anforderungen hinsichtlich Präzision und Reproduzierbarkeit der Meßergebnisse genügen können. So werden solche Meßaufnehmer in der Praxis für Massendurchflußraten von nur einigen wenigen g/h (Gramm pro Stunde) bis zu einigen t/min (Tonnen pro Minute), bei Drücken von bis zu 100 bar für Flüssigkeiten oder sogar über 300 bar für Gase eingesetzt. Die dabei erreichte Meßgenauigkeit liegt üblicherweise bei etwa 99,9% vom tatsächlichen Wert oder darüber bzw. einem Meßfehler von etwa 0,1 %, wobei eine untere Grenze des garantierten Meßbereichs durchaus bei etwa 1% des Meßbereichsendwerts liegen kann.

Aufgrund der hohen Bandbreite ihrer Einsatzmöglichkeiten werden industrietaugliche Meßaufnehmer vom Vibrationstyp mit nominellen Nennweiten (entspricht dem Kaliber der an den Meßaufnehmer anzuschließenden Rohrleitung bzw. dem Kaliber des Meßaufnehmers gemessen am Anschlußflansch) angeboten, die in einem Nennweitenbereich zwischen 1 mm und 250 mm liegen und bei maximaler nomineller Massendurchflußrate 1000 t/h jeweils für Druckverluste von weniger als 3 bar spezifiziert sind. Ein Kaliber der Meßrohre liegt hierbei etwa in einem Bereich zwischen 80 mm und 100 mm.

Trotzdem inzwischen Meßaufnehmer für den Einsatz in Rohrleitungen mit sehr hohen Massendurchflußraten und damit einhergehend sehr großem Kaliber von weit über 100 mm angeboten werden, besteht nach wie vor ein erhebliches Interesse daran, Meßaufnehmer von hoher Präzision und niedrigem Druckverlust auch für noch größer Rohrleitungskaliber, etwa 300 mm oder mehr, bzw. Massendurchflußraten, von 1500 t/h oder mehr, einzusetzen, etwa für Anwendungen der petrochemischen Industrie oder im Bereich des Transports und Umschlags von Erdöl, Erdgas, Treibstoffen etc.. Dies führt bei entsprechend maßstäblicher Vergrößerung der aus dem Stand der Technik, insb. der *EP-A 1 001 254, der EP-A 553 939, der US-A 2002/0157479, der US-A 53 70 002, der US-A 57 96 011, der US-B 63 08 580, der US-B 67 11 958, der US-B 71 34 347, der US-B 73 50 421, oder der WO-A 03/027616, bekannten und bereits etablierter Meßaufnehmerkonzepte dazu, daß die, insb. den gewünschten Schwingungseigenschaften, der erforderlichen Belastungsfähigkeit sowie dem maximal erlaubten Druckverlust geschuldeten, geometrischen Abmessungen, insb. die einem Abstand zwischen den Dichtflächen beider Flansche entsprechende Einbaulänge und, im Falle gebogener Meßrohre, eine maximale seitliche Ausdehnung des Meßaufnehmers, exorbitant hohe Ausmaße annehmen würde. Damit einhergehend nimmt zwangsläufig auch die Leermasse des Meßaufnehmers zu, wobei konventionelle Meßaufnehmer großer Nennweite bereits mit einer Leermasse von etwa 400 kg realisiert werden. Untersuchungen, die für Meßaufnehmer mit zwei gebogenen Meßrohren, etwa gemäß der US-B 73 50 421 oder der US-A 57 96 011, hinsichtlich ihrer maßstäblichen Anpassung zu noch größeren Nennweiten durchgeführt worden sind, haben beispielsweise ergeben, daß für nominelle Nennweiten von mehr als 300 mm die Leermasse eines maßstäblich vergrößerten konventionellen Meßaufnehmers weit über 500 kg liegen würde einhergehend mit einer Einbaulänge von mehr als 3000 mm und einer maximalen seitlichen Ausdehnung von mehr als 1000 mm.

Ausgehend vom oben genannten Stand der Technik besteht daher eine Aufgabe der Erfindung darin, einen Meßaufnehmer von hoher Empfindlichkeit und Schwingungsgüte anzugeben, der auch bei großen Massendurchflußraten von mehr als 1000 t/h einen geringen Druckverlust von möglichst weniger als 3 bar verursacht, und der auch mit großer nomineller Nennweite von über 100 mm eine möglichst kompakter Bauweise aufweist und nicht zuletzt auch für Anwendungen mit extrem heißen bzw. extrem kalten, nicht zuletzt aber auch gasförmigen, Medien und/oder mit signifikant schwankenden Mediumstemperaturen geeignet ist.

Zur Lösung der Aufgabe besteht die Erfindung in einem Meßaufnehmer vom Vibrationstyp zum Erfassen wenigstens einer physikalischen Meßgröße eines in einer Rohrleitung geführten strömungsfähigen Mediums, beispielsweise eines Gases, einer Flüssigkeit, eines Pulvers oder eines anderen strömungsfähigen Stoffes, und/oder zum Erzeugen von dem Erfassen einer Massendurchflußrate eines in einer Rohrleitung geführten strömungsfähigen Mediums, insb. eines Gases, einer Flüssigkeit, eines Pulvers oder eines anderen strömungsfähigen Stoffes, dienenden Corioliskräften. Der Meßaufnehmer umfaßt erfindungsgemäß ein, beispielsweise zumindest teilweise im wesentlichen rohrförmiges und/oder zumindest teilweise außen kreiszylindrisches, Aufnehmer-Gehäuse, von dem ein einlaßseitiges erstes Gehäuseende mittels eines acht jeweils voneinander beabstandeten, beispielsweise kreiszylindrische, kegelförmige oder konusförmige, Strömungsöffnungen aufweisenden einlaßseitigen ersten Strömungsteiler und ein auslaßseitiges zweites Gehäuseende mittels eines acht jeweils voneinander beabstandeten, beispielsweise kreiszylindrische, kegelförmige oder konusförmige, Strömungsöffnungen aufweisenden auslaßseitigen zweiten Strömungsteilers gebildet sind. Desweiteren umfaßt der Meßaufnehmer eine Rohranordnung mit acht unter Bildung strömungstechnisch parallel geschalteter Strömungspfade an die, beispielsweise baugleichen, Strömungsteiler angeschlossene, insb. lediglich mittels nämlicher Strömungsteiler im Aufnehmer-Gehäuse schwingfähig gehalterte und/oder baugleiche und/oder zueinander paarweise parallelen, gebogenen, beispielsweise zumindest abschnittsweise V-förmigen und/oder zumindest abschnittsweise kreisbogenförmigen, Meßrohren zum Führen von strömendem Medium. Von den acht, beispielsweise sowohl hinsichtlich Geometrie als auch hinsichtlich Material baugleichen, Meßrohren münden ein erstes Meßrohr mit einem einlaßseitigen ersten Meßrohrende in eine erste Strömungsöffnung des ersten Strömungsteilers und mit einem auslaßseitigen zweiten Meßrohrende in eine erste Strömungsöffnung des zweiten Strömungsteilers, ein zum ersten Meßrohr zumindest abschnittsweise paralleles zweites Meßrohr mit einem einlaßseitigen ersten Meßrohrende in eine zweite Strömungsöffnung des ersten Strömungsteilers und mit einem auslaßseitigen zweiten Meßrohrende in eine zweite Strömungsöffnung des zweiten Strömungsteilers, ein drittes Meßrohr mit einem einlaßseitigen ersten Meßrohrende in eine dritte Strömungsöffnung des ersten Strömungsteilers und mit einem auslaßseitigen zweiten Meßrohrende in eine dritte Strömungsöffnung des zweiten Strömungsteilers sowie ein zum dritten Meßrohr zumindest abschnittsweise paralleles viertes Meßrohr mit einem einlaßseitigen ersten Meßrohrende in eine vierte Strömungsöffnung des ersten Strömungsteilers und mit einem auslaßseitigen zweiten Meßrohrende in eine vierte Strömungsöffnung des zweiten Strömungsteilers, ein fünftes Meßrohr mit einem einlaßseitigen ersten Meßrohrende in eine fünfte Strömungsöffnung des ersten Strömungsteilers und mit einem auslaßseitigen zweiten Meßrohrende in eine fünfte Strömungsöffnung des zweiten Strömungsteilers, ein, beispielsweise zum fünften Meßrohr zumindest abschnittsweise paralleles, sechstes Meßrohr mit einem einlaßseitigen ersten Meßrohrende in eine sechste Strömungsöffnung des ersten Strömungsteilers und mit einem auslaßseitigen zweiten Meßrohrende in eine sechste Strömungsöffnung des zweiten Strömungsteilers, ein siebentes Meßrohr mit einem einlaßseitigen ersten Meßrohrende in eine siebente Strömungsöffnung des ersten Strömungsteilers und mit einem auslaßseitigen zweiten Meßrohrende in eine siebente Strömungsöffnung des zweiten Strömungsteilers, und ein, beispielsweise zum siebente Meßrohr zumindest abschnittsweise paralleles, achtes Meßrohr mit einem einlaßseitigen ersten Meßrohrende in eine achte Strömungsöffnung des ersten Strömungsteilers und mit einem auslaßseitigen zweiten Meßrohrende in eine achte Strömungsöffnung des zweiten Strömungsteilers. Ferner umfaßt der Meßaufnehmer eine elektro-mechanische, mittels mehreren elektro-dynamischen Schwingungserregern gebildete Erregeranordnung zum Erzeugen und/oder Aufrechterhalten von mechanischen Schwingungen, insb. von Biegeschwingungen, der acht Meßrohre, wobei die Erregeranordnung mittels eines, beispielsweise elektrodynamischen, Schwingungen des ersten Meßrohrs relativ zum zweiten Meßrohr differentiell anregenden ersten Schwingungserregers, mittels eines, beispielsweise elektrodynamischen, Schwingungen des dritten Meßrohrs relativ zum vierten Meßrohr differentiell anregenden zweiten Schwingungserregers, mittels eines, beispielsweise elektrodynamischen, Schwingungen des fünften Meßrohrs relativ zum siebenten Meßrohr anregenden dritten Schwingungserregers sowie mittels eines, beispielsweise elektrodynamischen, Schwingungen des sechsten Meßrohrs relativ zum achten Meßrohr jeweils differentiell anregenden vierten Schwingungserregers gebildet ist.

Darüberhinaus besteht die Erfindung in einem Meßsystem zum Messen einer Dichte und/oder einer Massendurchflußrate, beispielsweise auch eines über ein Zeitintervall totalisierten Gesamt-Massendurchflusses, eines in einer Rohrleitung zumindest zeitweise, beispielsweise auch mit einer Massendurchflußrate von mehr als 1000 t/h, strömenden Mediums, etwa eines Gases, einer Flüssigkeit, eines Pulvers oder eines anderen strömungsfähigen Stoffes, welches, beispielsweise als In-Line-Meßgerät und/oder Meßgerät in Kompaktbauweise ausgebildete, Meßsystem nämlichen Meßaufnehmer sowie eine mit dem Meßaufnehmer elektrisch gekoppelte, beispielsweise in einem mechanisch mit dem Aufnehmer-Gehäuse verbundenen Elektronik-Gehäuse angeordneten, Umformer-Elektronik zum Ansteuern des Meßaufnehmers, nicht zuletzt auch von dessen Erregeranordnung, und zum Auswerten von vom Meßaufnehmer gelieferten Schwingungssignalen umfaßt; bzw. auch in der Verwendung nämlichen Meßsystems zum Messen einer Dichte und/oder einer Massendurchflußrate, nicht zuletzt auch eines über ein Zeitintervall totalisierten Gesamt-Massendurchflusses, und/oder einer Viskosität und/oder einer Reynoldszahl eines in einer Prozeßleitung, etwa einer Rohrleitung, zumindest zeitweise mit einer Massendurchflußrate von mehr als 1000 t/h, beispielsweise mehr als 1500 t/h, strömenden Mediums, wie z.B. eines Gases, einer Flüssigkeit, eines Pulvers oder eines anderen strömungsfähigen Stoffes.

Nach einer ersten Ausgestaltung des Meßaufnehmers der Erfindung ist die Erregeranordnung derart ausgebildet, daß damit jedes der acht Meßrohre, beispielsweise auch simultan, zu Biegeschwingungen anregbar ist, etwa zu Biegeschwingungen in einem der Rohranordnung immanenten natürlichen Schwingungsmode und/oder auf einer diesem zugehörigen Resonanzfrequenz.

Nach einer zweiten Ausgestaltung des Meßaufnehmers der Erfindung ist die Erregeranordnung derart ausgebildet, daß damit das erste Meßrohr und das zweite Meßrohr zu gegengleichen Biegeschwingungen und das dritte Meßrohr und das vierte Meßrohr gegengleichen Biegeschwingungen anregbar sind, und/oder daß damit das fünfte Meßrohr und das siebente Meßrohr zu gegengleichen Biegeschwingungen und das sechste Meßrohr und das achte Meßrohr zu gegengleichen, beispielsweise auch zu gegengleichen Biegeschwingungen anregbar sind.

Nach einer dritten Ausgestaltung des Meßaufnehmers der Erfindung sind die Meßrohre so ausgebildet und im Meßaufnehmer angeordnet, daß die Rohranordnung eine zwischen der ersten gedachten Längsschnittebene und der zweiten gedachten Längsschnittebene des Meßaufnehmers liegende, zur ersten gedachten Längsschnittebene des Meßaufnehmers und zur zweiten gedachten Längsschnittebene des Meßaufnehmers jeweils parallele erste gedachte Längsschnittebene aufweist, bezüglich der die Rohranordnung spiegelsymmetrisch ist, und daß die Rohranordnung eine zu deren gedachten ersten Längsschnittebene senkrechte zweite gedachte Längsschnittebene aufweist, bezüglich der die Rohranordnung gleichfalls spiegelsymmetrisch ist. Diese Ausgestaltung der Erfindung weiterbildend ist ferner vorgesehen, daß die Rohranordnung eine sowohl zur ersten gedachten Längsschnittebene als auch zur zweiten gedachten Längsschnittebene jeweils senkrechte gedachte Querschnittebene aufweist, innerhalb der ein Massenschwerpunkt der Rohranordnung liegt und/oder bezüglich der die Rohranordnung gleichfalls spiegelsymmetrisch ist.

Nach einer vierten Ausgestaltung des Meßaufnehmers der Erfindung ist ferner vorgesehen, daß die beiden Strömungsteiler zudem so ausgebildet und im Meßaufnehmer angeordnet, daß eine die erste Strömungsöffnung des ersten Strömungsteilers mit der ersten Strömungsöffnung des zweiten Strömungsteilers imaginär verbindende gedachte erste Verbindungsachse des Meßaufnehmers parallel zu einer die zweite Strömungsöffnung des ersten Strömungsteilers mit der zweiten Strömungsöffnung des zweiten Strömungsteilers imaginär verbindende gedachten zweiten Verbindungsachse des Meßaufnehmers verläuft, daß eine die dritte Strömungsöffnung des ersten Strömungsteilers mit der dritten Strömungsöffnung des zweiten Strömungsteilers imaginär verbindende gedachte dritten Verbindungsachse des Meßaufnehmers parallel zu einer die vierte Strömungsöffnung des ersten Strömungsteilers mit der vierten Strömungsöffnung des zweiten Strömungsteilers imaginär verbindende gedachten vierten Verbindungsachse des Meßaufnehmers verläuft, daß eine die fünfte Strömungsöffnung des ersten Strömungsteilers mit der fünften Strömungsöffnung des zweiten Strömungsteilers imaginär verbindende gedachte fünfte Verbindungsachse des Meßaufnehmers parallel zu einer die sechste Strömungsöffnung des ersten Strömungsteilers mit der sechsten Strömungsöffnung des zweiten Strömungsteilers imaginär verbindende gedachten sechsten Verbindungsachse des Meßaufnehmers verläuft, und daß eine die siebente Strömungsöffnung des ersten Strömungsteilers mit der siebenten Strömungsöffnung des zweiten Strömungsteilers imaginär verbindende gedachte siebente Verbindungsachse des Meßaufnehmers parallel zu einer die achte Strömungsöffnung des ersten Strömungsteilers mit der achten Strömungsöffnung des zweiten Strömungsteilers imaginär verbindende gedachten achten Verbindungsachse des Meßaufnehmers verläuft.
Diese Ausgestaltung der Erfindung weiterbildend ist ferner beispielsweise vorgesehen, daß die beiden Strömungsteiler so ausgebildet und im Meßaufnehmer angeordnet sind, daß eine erste gedachte Längsschnittebene des Meßaufnehmers, innerhalb der die, beispielsweise zu einer mit der Rohrleitung fluchtenden Hauptströmungsachse des Meßaufnehmers parallele, erste gedachte Verbindungsachse und die zweite gedachte Verbindungsachse verlaufen, parallel zu einer zweiten gedachten Längsschnittebene des Meßaufnehmers, innerhalb der die gedachte dritte Verbindungsachse und die gedachte vierte Verbindungsachse verlaufen, ist, daß eine dritte gedachte Längsschnittebene des Meßaufnehmers, innerhalb der die gedachte erste Verbindungsachse und die die gedachte dritte Verbindungsachse verlaufen, parallel zu einer vierten gedachten Längsschnittebene des Meßaufnehmers, innerhalb der die gedachte zweite Verbindungsachse und die die gedachte vierte Verbindungsachse verlaufen, ist, und daß eine fünfte gedachte Längsschnittebene des Meßaufnehmers, innerhalb der die gedachte fünfte Verbindungsachse und die die gedachte sechste Verbindungsachse verlaufen, parallel zu einer sechsten gedachten Längsschnittebene des Meßaufnehmers, innerhalb der die gedachte siebente Verbindungsachse und die die gedachte achte Verbindungsachse verlaufen, ist, und , daß eine siebente gedachte Längsschnittebene des Meßaufnehmers, innerhalb der die gedachte fünfte Verbindungsachse und die die gedachte siebente Verbindungsachse verlaufen, parallel zu einer achten gedachten Längsschnittebene des Meßaufnehmers, innerhalb der die gedachte sechste Verbindungsachse und die die gedachte achte Verbindungsachse verlaufen, ist. Diese Ausgestaltung der Erfindung weiterbildend ist ferner beispielsweise vorgesehen, daß die erste gedachte Längsschnittebene der Rohranordnung zwischen der fünften gedachten Längsschnittebene des Meßaufnehmers und der sechsten gedachten Längsschnittebene des Meßaufnehmers verläuft, beispielsweise derart, daß die erste gedachte Längsschnittebene der Rohranordnung parallel zur fünften gedachten Längsschnittebene des Meßaufnehmers und parallel zur sechsten gedachten Längsschnittebene des Meßaufnehmers ist, und/oder daß die zweite gedachte Längsschnittebene der Rohranordnung zwischen der dritten gedachten Längsschnittebene des Meßaufnehmers und der vierten gedachten Längsschnittebene des Meßaufnehmers verläuft, beispielsweise derart, daß die zweite gedachte Längsschnittebene der Rohranordnung parallel zur dritten gedachten Längsschnittebene des Meßaufnehmers und parallel zur vierten gedachten Längsschnittebene des Meßaufnehmers ist.

Nach einer fünften Ausgestaltung des Meßaufnehmers der Erfindung ist ferner vorgesehen, daß die acht Strömungsöffnungen des ersten Strömungsteilers so angeordnet sind, daß zu, insb. kreisförmigen, Querschnittsflächen der Strömungsöffnungen des ersten Strömungsteilers zugehörige gedachte Flächenschwerpunkte die Eckpunkte eines gedachten regelmäßigen Achtecks bilden, wobei nämliche Querschnittsflächen in einer gemeinsamen gedachten Querschnittsschnittebene des ersten Strömungsteilers liegen.

Nach einer sechsten Ausgestaltung des Meßaufnehmers der Erfindung ist ferner vorgesehen, daß die acht Strömungsöffnungen des zweiten Strömungsteilers so angeordnet sind, daß zu, insb. kreisförmigen, Querschnittsflächen der Strömungsöffnungen des zweiten Strömungsteilers zugehörige gedachte Flächenschwerpunkte die Eckpunkte eines gedachten regelmäßigen Achtecks bilden, wobei nämliche Querschnittsflächen in gemeinsamen gedachten Querschnittsschnittebene des zweiten Strömungsteilers liegen.

Nach einer siebenten Ausgestaltung des Meßaufnehmers der Erfindung ist ferner vorgesehen, daß jedes der acht, insb. gleichgroßen, Meßrohre ein Kaliber aufweist, das mehr als 40 mm, insb. mehr als 60 mm, beträgt. Diese Ausgestaltung der Erfindung weiterbildend ist ferner vorgesehen, daß die Meßrohre so gebogen und so angeordnet sind, daß ein Kaliber-zu-Höhe-Verhältnis der Rohranordnung, definiert durch ein Verhältnis des Kalibers des ersten Meßrohrs zu einer maximalen seitlichen Ausdehnung der Rohranordnung, gemessen von einem Scheitelpunkt des ersten Meßrohrs zu einem Scheitelpunkt des dritten Meßrohrs, mehr als 0.05, insb. mehr als 0.07 und/oder weniger als 0.5, insb. weniger als 0.4, beträgt.

Nach einer achten Ausgestaltung des Meßaufnehmers der Erfindung ist ferner vorgesehen, daß der erste Strömungsteiler einen, insb. eine Masse von mehr als 50 kg aufweisenden, Flansch zum Anschließen des Meßaufnehmers an ein dem Zuführen von Medium zum Meßaufnehmer dienendes Rohrsegment der Rohrleitung und der zweite Strömungsteiler einen, insb. eine Masse von mehr als 50 kg aufweisenden, Flansch zum Anschließen des Meßaufnehmers an ein dem Abführen von Medium vom Meßaufnehmer dienendes Rohrsegment der Rohrleitung aufweisen. Diese Ausgestaltung der Erfindung weiterbildend weist jeder der Flansche jeweils eine Dichtfläche zum fluiddichten Verbinden des Meßaufnehmers mit dem jeweils korrespondierenden Rohrsegment der Rohrleitung auf, wobei ein Abstand zwischen den Dichtflächen beider Flansche eine, insb. mehr als 1000 mm betragende und/oder weniger als 3000 mm betragende, Einbaulänge des Meßaufnehmers definiert. Im besonderen ist der Meßaufnehmer ferner so ausgebildet, daß dabei eine einer Länge eines zwischen der ersten Strömungsöffnung des ersten Strömungsteilers und der ersten Strömungsöffnung des zweiten Strömungsteilers verlaufenden Abschnitts der Biegelinie des ersten Meßrohrs entsprechende Meßrohrlänge des ersten Meßrohrs so gewählt ist, daß ein Meßrohrlänge-zu-Einbaulänge-Verhältnis des Meßaufnehmers, definiert durch ein Verhältnis der Meßrohrlänge des ersten Meßrohrs zur Einbaulänge des Meßaufnehmers, mehr als 0.7, insb. mehr als 0.8 und/oder weniger als 1.2, beträgt, und/oder daß ein Kaliber-zu-Einbaulänge-Verhältnis, des Meßaufnehmers, definiert durch ein Verhältnis eines Kalibers des ersten Meßrohrs zur Einbaulänge des Meßaufnehmers, mehr als 0.02, insb. mehr als 0.05 und/oder weniger als 0.09, beträgt. Alternativ oder in Ergänzung dazu ist der Meßaufnehmer so ausgebildete, daß ein Nennweite-zu Einbaulänge-Verhältnis des Meßaufnehmers, definiert durch ein Verhältnis der nominellen Nennweite des Meßaufnehmers zur Einbaulänge des Meßaufnehmers kleiner als 0.3, insb. kleiner als 0.2 und/oder größer als 0.1, ist, wobei die nominelle Nennweite einem Kaliber der Rohrleitung, in deren Verlauf der Meßaufnehmer einzusetzen ist, entspricht.

Nach einer neunten Ausgestaltung des Meßaufnehmers der Erfindung ist ferner vorgesehen, daß eine einer Länge eines zwischen der ersten Strömungsöffnung des ersten Strömungsteilers und der ersten Strömungsöffnung des zweiten Strömungsteilers verlaufenden Abschnitts der Biegelinie des ersten Meßrohrs entsprechende Meßrohrlänge des ersten Meßrohrs mehr als 1000 mm, insb. mehr als 1200 mm und/oder weniger als 3000 mm, insb. weniger als 2500, beträgt.

Nach einer zehnten Ausgestaltung des Meßaufnehmers der Erfindung ist ferner vorgesehen, daß ein Massenverhältnis einer Leermasse des gesamten Meßaufnehmers zu einer Leermasse des ersten Meßrohrs größer als 10, insb. größer als 15 und kleiner als 25, ist.

Nach einer elften Ausgestaltung des Meßaufnehmers der Erfindung ist ferner vorgesehen, daß eine Leermasse, M₁₈, des ersten Meßrohrs, insb. jedes der Meßrohre größer als 20 kg, insb. größer als 30 kg und/oder kleiner als 50 kg, ist.

Nach einer zwölften Ausgestaltung des Meßaufnehmers der Erfindung ist ferner vorgesehen, daß eine Leermasse des Meßaufnehmers größer als 200 kg, insb. größer als 300 kg, ist.

Nach einer dreizehnten Ausgestaltung des Meßaufnehmers der Erfindung ist ferner vorgesehen, daß eine nominellen Nennweite des Meßaufnehmers, die einem Kaliber der Rohrleitung, in deren Verlauf der Meßaufnehmer einzusetzen ist, entspricht, mehr als 50 mm beträgt, insb. größer als 100 mm ist. In vorteilhafter Weise ist der Meßaufnehmer ferner so ausgebildet, daß ein Masse-zu-Nennweite-Verhältnis des Meßaufnehmers, definiert durch ein Verhältnis der Leermasse des Meßaufnehmers zur nominellen Nennweite des Meßaufnehmers kleiner als 2 kg/mm, insb. kleiner als 1 kg/mm und/oder größer als 0.5 kg/mm, ist.

Nach einer vierzehnten Ausgestaltung des Meßaufnehmers der Erfindung ist ferner vorgesehen, daß ein Kaliber-zu-Nennweite-Verhältnis des Meßaufnehmers, definiert durch ein Verhältnis eines Kalibers des ersten Meßrohrs zu einer einem Kaliber der Rohrleitung, in deren Verlauf der Meßaufnehmer einzusetzen ist, entsprechenden nominellen Nennweite des Meßaufnehmers kleiner als 0.4, insb. kleiner als 0.35 und/oder größer als 0.21, ist.

Nach einer fünfzehnten Ausgestaltung des Meßaufnehmers der Erfindung ist ferner vorgesehen, daß die acht Meßrohre hinsichtlich eines Materials, aus dem deren Rohrwände bestehen, und/oder hinsichtlich ihrer geometrischen Rohr-Abmessungen, insb. einer Meßrohrlänge, einer Rohrwandstärke, eines Rohr-Außendurchmessers und/oder eines Kalibers, baugleich sind.

Nach einer sechzehnten Ausgestaltung des Meßaufnehmers der Erfindung ist ferner vorgesehen, daß ein Material, aus dem die Rohrwände der acht Meßrohre zumindest anteilig bestehen, Titan und/oder Zirconium und/oder, beispielsweise rostfreier und/oder hochfester, Stahl ist, Duplexstahl und/oder Superduplexstahl, oder Hastelloy ist.

Nach einer siebzehnten Ausgestaltung des Meßaufnehmers der Erfindung ist ferner vorgesehen, daß das Aufnehmer-Gehäuse, die Strömungsteiler und Rohrwände der Meßrohre jeweils aus, beispielsweise rostfreiem, Stahl bestehen.

Nach einer achtzehnten Ausgestaltung des Meßaufnehmers der Erfindung ist ferner vorgesehen, daß der erste Schwingungserreger der Erregeranordnung mittels eines am ersten Meßrohr gehalterten Permanentmagneten und einer von dessen Magnetfeld durchfluteten, am zweiten Meßrohr gehalterten Zylinderspule gebildet ist, und daß der zweite Schwingungserreger mittels eines am dritten Meßrohr gehalterten Permanentmagneten und einer von dessen Magnetfeld durchfluteten, am vierten Meßrohr gehalterten Zylinderspule gebildet ist.

Nach einer ersten Weiterbildung des Meßaufnehmers der Erfindung umfaßt dieser weiters wenigstens acht, beispielsweise jeweils plattenförmige, Kopplerelemente erster Art, von denen jedes zum Einstellen von Eigenfrequenzen natürlicher, nicht zuletzt für die Generierung von Corioliskräften im durch die Meßrohre strömenden Medium und/oder für die Messung einer Massendurchflußrate des durch die Meßrohre strömenden Mediums nutzbarer, Schwingungsmoden der Rohranordnung und/oder zum Bilden von ein- bzw. auslaßseitigen Schwingungsknoten für Vibrationen, etwa auch Biegeschwingungen, der Meßrohre sowohl jeweils vom ersten als auch vom zweiten Strömungsteiler beabstandet ein- bzw. auslaßseitig an zwei der Meßrohre, insb. lediglich an nämli8chen zwei, ansonsten aber an keinem weiteren der acht Meßrohre, fixiert ist.
Ferner weist der Meßaufnehmer gemäß einer weiteren Ausgestaltung der Erfindung wenigsten vier, beispielsweise jeweils plattenförmige oder stabförmige Kopplerelemente zweiter Art zum Einstellen von Eigenfrequenzen natürlicher, nicht zuletzt auch für die Generierung von Corioliskräften im durch die Meßrohre strömenden Medium und/oder für die Messung einer Massendurchflußrate des durch die Meßrohre strömenden Mediums nutzbarer, Schwingungsmoden der Rohranordnung auf, von denen jedes sowohl vom ersten Strömungsteiler als auch vom zweiten Strömungsteiler wie auch von den Kopplerelementen erster Art jeweils beabstandet an jeweils zwei der acht Meßrohre, insb. ansonsten an keinem weiteren der acht Meßrohre, fixiert ist.

Nach einer zweiten Weiterbildung der Erfindung umfaßt der Meßaufnehmer weiters eine auf Vibrationen, insb. mittels der Erregeranordnung angeregten Biegeschwingungen, der Meßrohre reagierende, beispielsweise elektro-dynamische und/oder mittels einander baugleicher Schwingungssensoren gebildete, Sensoranordnung zum Erzeugen von Vibrationen, insb. Biegeschwingungen, der Meßrohre repräsentierenden Schwingungssignalen.

Nach einer ersten Ausgestaltung des Meßsystems der Erfindung ist ferner vorgesehen, daß die Umformer-Elektronik anhand von in der Erregeranordnung umgesetzter elektrischer Erregerleistung einen die Viskosität des strömenden Mediums repräsentierenden Viskosität-Meßwert generiert; und/oder daß die Umformer-Elektronik anhand von vom Meßaufnehmer gelieferten Schwingungssignalen einen die Massendurchflußrate des strömenden Mediums repräsentierenden Massendurchfluß-Meßwert und/oder einen die Dichte des strömenden Mediums repräsentierenden Dichte-Meßwert generiert.

Ein Grundgedanke der Erfindung besteht darin, anstelle der bei konventionellen Meßaufnehmern großer Nennweite üblicherweise verwendeten Rohranordnungen mit zwei parallel durchströmten gebogenen Meßrohren Rohranordnungen mit acht - beispielsweise V-förmig oder kreisbogenförmig - gebogenen und parallel durchströmten Meßrohren zu verwenden, und so einerseits eine optimale Ausnutzung des begrenzten Platzangebotes zu ermöglichen, anderseits einen akzeptablen Druckverlust über einen weiten Meßbereich, insb. auch bei sehr hohen Massendurchflußraten von weit über 1000 t/h, gewährleisten zu können. Darüber hinaus kann der sich aus dem Gesamtquerschnitt der achte Meßrohre ergebende effektive Strömungsquerschnitt der Rohranordnung im Vergleich zu herkömmlichen nur zwei Meßrohre aufweisenden Meßaufnehmern gleicher nomineller Nennweite und gleicher Leermasse ohne weiteres um mehr als 20% erhöht, mithin kann ein davon mitbestimmter Strömungswiderstand des Meßaufnehmers entsprechend verringert werden.

Ein Vorteil der Erfindung besteht zudem u.a. darin, daß aufgrund der Symmetrieeigenschaften der Rohranordnung auch jene durch Biegeschwingungen gebogener Meßrohre Querkräfte weitgehend neutralisiert werden können, die - wie u.a. in den eingangs erwähnten EP-A 1 248 084 und US-B 73 50 421 diskutiert - im wesentlich senkrecht zu den Längsschnittebenen des jeweiligen Meßaufnehmers bzw. dessen Rohranordnung wirken und für die Meßgenauigkeit von Meßaufnehmern vom Vibrationstyp durchaus schädlich sein können. Zudem konnte bei Meßaufnehmern der vorgenannten Art im Vergleich zu konventionellen Meßaufnehmern mit nur einem oder zwei gebogenen Meßrohren eine erhöhte Schwingungsgüte des Meßaufnehmers insgesamt, dies nicht zuletzt auch infolge einer erheblich geringer ausfallenden Dissipation von Schwingungsenergie aus dem Meßaufnehmer in die daran angeschlossene Rohrleitung, etwa infolge von eigentlich unerwünschten Deformationen der Strömungsteiler, festgestellt werden. Darüberhinaus weisen die Schwingungen der Meßrohre von Meßaufnehmern gemäß der vorliegenden Erfindung auch eine - im Vergleich zu herkömmlichen Meßaufnehmer - erheblich verringerte Druckstoß- bzw. Schallabhängigkeit auf.

Ein weiterer Vorteil des erfindungsgemäßen Meßaufnehmers ist ferner auch darin zu sehen, daß überwiegend etablierte Konstruktionskonzepte, wie etwa hinsichtlich der verwendeten Materialien, der Fügetechnik, der Fertigungsabläufe etc., angewendet werden können oder nur geringfügig modifiziert werden müssen, wodurch auch die Herstellkosten insgesamt durchaus vergleichbaren zu denen herkömmlicher Meßaufnehmer sind. Insofern ist ein weiterer Vorteil der Erfindung darin zu sehen, daß dadurch nicht nur eine Möglichkeit geschaffen wird, vergleichsweise kompakte Meßaufnehmer vom Vibrationstyp auch mit großer nomineller Nennweite von über 150 mm, insb. mit einer Nennweite von größer 250 mm, mit handhabbaren geometrischen Abmessungen und Leermassen, sondern zudem auch ökonomisch sinnvoll realisiert werden können.

Der erfindungsgemäße Meßaufnehmer ist daher besonders zum Messen von strömungsfähigen Medien geeignet, die in einer Rohrleitung mit einem Kaliber von größer 150 mm, insb. von 300 mm oder darüber, geführt sind. Zu dem ist der Meßaufnehmer auch zum Messen auch solcher Massendurchflüsse geeignet, die zumindest zeitweise größer als 1000 t/h sind, insb. zumindest zeitweise mehr als 1500 t/h betragen, wie sie z.B. bei Anwendungen zur Messung von Erdöl, Erdgas oder anderen petrochemischen Stoffen auftreten können.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich. Im einzelnen zeigen:
- Fign. 1: ein, beispielsweise als Coriolis-Durchfluss/Dichte/Viskositäts-Meßgerät dienendes, In-Line-Meßgerät in perspektivischen, teilweise auch geschnittenen, Seitenansichten;
- Fign. 2a, b: eine Projektion des In-line-Meßgerät gemäß Fig. 1 in zwei verschiedenen Seitenansichten;
- Fig. 3a: in perspektivischer Seitenansicht einen Meßaufnehmer vom Vibrationstyp mit einer mittels acht gebogenen Meßrohren gebildeten Rohranordnung, eingebaut in ein In-line-Meßgerät gemäß Fig. 1;
- Fig. 3b: in perspektivischer Seitenansicht die Rohranordnung gemäß Fig. 4a;
- Fign. 4a-d: eine Projektion des Meßaufnehmers gemäß Fig. 4a in vier verschiedenen Seitenansichten;
- Fign. 5: Projektionen einer Rohranordnung gemäß Fig. 4b in einer weiteren Seitenansicht;
- Fign. 6a, b, c: schematisch Schwingungsmoden einer Rohranordnung gemäß Fig. 4b, jeweils in Projektion auf eine gedachte Querschnittsebene nämlicher Rohranordnung; und.
- Fig. 7: in einer Seitenansicht eine weitere Variante des erfindungsgemäßen Meßaufnehmers.

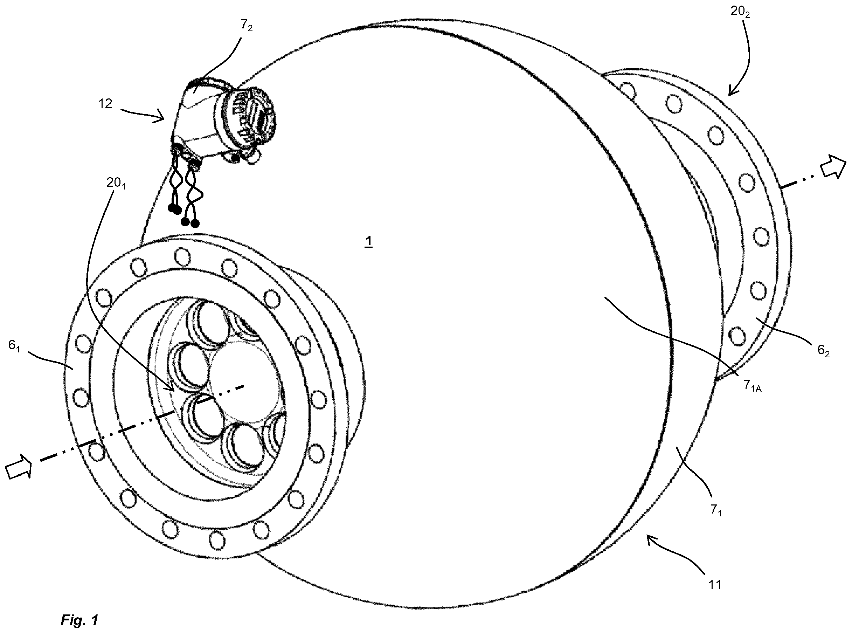

In den Fig. 1 ist ein, insb. als Coriolis-Massedurchfluß- und/oder Dichte-Meßgerät ausgebildetes, Meßsystem 1 schematisch dargestellt, das im nicht zuletzt dazu dient, einen Massendurchfluß m eines in einer - hier aus Übersichtlichkeitsgründen nicht dargestellten - Rohrleitung strömenden Mediums zu erfassen und in einen diesen Massendurchfluß momentan repräsentierenden Massendurchfluß-Meßwert abzubilden. Medium kann praktisch jeder strömungsfähige Stoff sein, beispielsweise ein Pulver, eine Flüssigkeit, ein Gas, ein Dampf oder dergleichen. Alternativ oder in Ergänzung kann das Meßsystem 1 ggf. auch dazu verwendet werden eine Dichte ρ und/oder eine Viskosität η des Mediums zu messen. Im besonderen ist das Meßsystem 1 dafür vorgesehen, solche Medien, wie z.B. Erdöl, Erdgas oder andere petrochemische Stoffe, zu messen, die in einer Rohrleitung mit einem Kaliber von größer als 250 mm, insb. einem Kaliber von 300 mm oder darüber, strömen. Nicht zuletzt ist das In-Line-Meßgerät auch dafür vorgesehen strömende Medien der vorgenannten Art zu messen, die mit einer Massendurchflußrate von größer als 1000 t/h, insb. von größer 1500 t/h, strömen gelassen sind.

Das - hier als In-Line-Meßgerät, nämlich in den Verlauf der Rohrleitung einsetzbares Meßgerät, in Kompaktbauweise gezeigte - Meßsystem 1 umfaßt dafür einen im Betrieb vom zu messenden Medium durchströmten Meßaufnehmer 11 vom Vibrationstyp sowie eine mit dem Meßaufnehmer 11 elektrisch verbundene - hier nicht im einzelnen dargestellte - Umformer-Elektronik 12 zum Ansteuern des Meßaufnehmers und zum Auswerten von vom Meßaufnehmer gelieferten Schwingungssignalen. In vorteilhafter Weise kann die, beispielsweise mittels einem oder mehreren Mikroprozessoren und/oder mittels eines oder mehreren digitalen Signalprozessoren gebildete Umformer-Elektronik 12 z.B. so ausgelegt sein, daß sie im Betrieb des Meßsystems 1 mit einer diesem übergeordneten Meßwertverarbeitungseinheit, beispielsweise einer speicherprogrammierbaren Steuerung (SPS), einem Personalcomputer und/oder einer Workstation, via Datenübertragungssystem, beispielsweise einem leitungsgebundenen Feldbussystem und/oder drahtlos per Funk, Meß- und/oder andere Betriebsdaten austauschen kann. Des weiteren kann die Umformer-Elektronik 12 so ausgelegt sein, daß sie von einer externen Energieversorgung, beispielsweise auch über das vorgenannte Feldbussystem, gespeist werden kann. Für den Fall, daß das Meßsystem 1 für eine Ankopplung an ein Feldbus- oder ein anderes Kommunikationssystem vorgesehen ist, kann die, beispielsweise auch vor Ort und/oder via Kommunikationssystem (re-)programmierbare, Umformer-Elektronik 12 zu dem eine entsprechende Kommunikations-Schnittstelle für eine Datenkommunikation aufweisen, z.B. zum Senden der Meßdaten an die bereits erwähnte speicherprogrammierbare Steuerung oder ein übergeordnetes Prozeßleitsystem und/oder zum Empfangen von Einstelldaten für das Meßsystem.

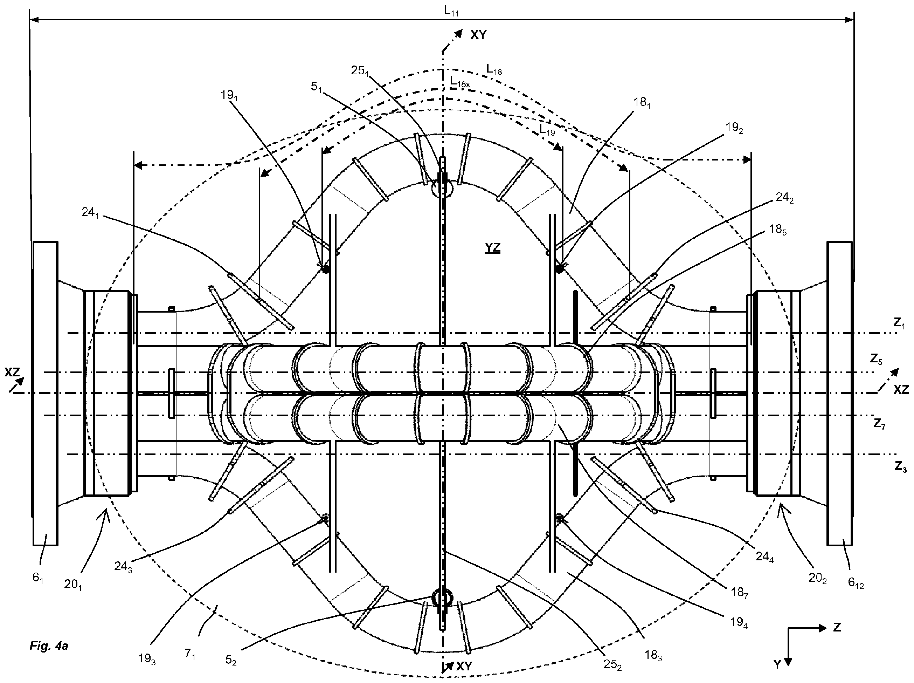

In den Fig. 4a, 4b, 5a, 5b, 6a, 6b ist in unterschiedlichen Darstellungen ein Ausführungsbeispiel für einen für das Meßsystem 1 geeigneten, insb. als Coriolis-Massedurchfluss-, als Dichte- und/oder als Viskositäts-Aufnehmer dienenden, Meßaufnehmer 11 vom Vibrationstyp gezeigt, welcher Meßaufnehmer 11 im Betrieb in den Verlauf einer vom jeweils zu messenden, etwa pulvrigen, flüssigen, gasförmigen oder dampfförmigen, Medium durchströmten - hier nicht dargestellten - Rohrleitung eingesetzt ist. Der Meßaufnehmer 11 dient, wie bereits erwähnt, dazu, in einem hindurchströmenden Medium solche mechanische Reaktionskräfte, insb. von der Massenduchflußrate abhängige Corioliskräfte, von der Mediumsdichte abhängige Trägheitskräfte und/oder von der Mediumsviskosität abhängige Reibungskräfte, zu erzeugen, die meßbar, insb. sensorisch erfaßbar, auf den Meßaufnehmer zurückwirken. Abgeleitet von diesen das Medium beschreibenden Reaktionskräften können mittels in der Umformer-Elektronik entsprechend implementierten Auswerte-Verfahren in der dem Fachmann bekannten Weise z.B. die m Massendurchflußrate, mithin der Massendurchfluß, und/oder die Dichte und/oder die Viskosität des Mediums gemessen werden.

Der Meßaufnehmer 11 weist ein - hier zumindest teilweise im wesentlichen rotationsellipsoidförmiges oder auch zumindest teilweise kugel-förmiges - Aufnehmer-Gehäuse 7₁ auf, in dem weitere, dem Erfassen der wenigstens einen Meßgröße dienende Komponenten des Meßaufnehmers 11 vor äußeren Umwelteinflüssen, mithin Staub oder Spritzwasser oder auch allfällig auf den Meßaufnehmer von außen einwirkenden Kräften etc., geschützt untergebracht sind.

Ein - hier im wesentlichen kreiszylindrisches - einlaßseitiges erstes Gehäuseende des Aufnehmer-Gehäuses 7₁ ist mittels eines einlaßseitigen ersten Strömungsteilers 20₁ und ein - hier im wesentlichen kreiszylindrisches - auslaßseitiges zweites Gehäuseende des Aufnehmer-Gehäuses 7₁ ist mittels auslaßseitigen zweiten Strömungsteilers 20₂ gebildet. Jeder der beiden, insoweit als integraler Bestandteil des Gehäuses ausgebildeten, Strömungsteiler 20₁, 20₂ weist genau acht jeweils voneinander beabstandeten, beispielsweise kreiszylindrische oder kegelförmige bzw. jeweils als Innenkonus ausgebildete, Strömungsöffnungen 20_{1A}, 20_{1B}, 20_{1C}, 20_{1D}, 20_{1E}, 20_{1F}, 20_{1G}, 20_{1H} bzw. 20_{2A}, 20_{2B}, 20_{2C}, 20_{2D}, 20_{2E}, 20_{2F}, 20_{2G}, 20_{2H} auf. Darüberhinaus ist jeder der, beispielsweise aus Stahl gefertigten, Strömungsteiler 20₁, 20₂ jeweils mit einem, beispielsweise aus Stahl gefertigten, Flansch 6₁ bzw. 6₂ zum Anschließen des Meßaufnehmers 11 an ein dem Zuführen von Medium zum Meßaufnehmer dienendes Rohrsegment der Rohrleitung bzw. an ein dem Abführen von Medium vom Meßaufnehmer dienendes Rohrsegment der erwähnten Rohrleitung versehen. Jeder der beiden Flansche 6₁, 6₂ weist gemäß einer Ausgestaltung der Erfindung eine Masse von mehr als 50 kg, insb. von mehr als 60 kg und/oder weniger als 100 kg, auf.

Als Material für das Aufnehmer-Gehäuse 7₁ können im übrigen - je nach Anwnedungsfall -alle für solchen Gehäuse üblicherweise verwendeten Stähle, wie etwa auch Baustahl bzw. rostfreier Stahl, oder auch andere geeignete bzw. üblicherweise hierfür geeignete hochfeste Werkstoffe verwendet werden. Für die meisten Anwendungen der industriellen Meßtechnik, insb. auch in der petrochemischen Industrie, können zudem auch Meßrohre aus rostfreiem Stahl, beispielsweise auch Duplexstahl, Superduplexstahl oder einem anderen (hochfesten) Edelstahl, den Anforderungen hinsichtlich der mechanischen Festigkeit, der chemischen Beständigkeit sowie den thermischen Anforderungen genügen, so daß in zahlreichen Anwendungsfällen das Aufnehmer-Gehäuse 7₁, die Strömungsteiler 20₁, 20₂ wie auch die Rohrwände der Meßrohre jeweils aus Stahl von jeweils ausreichend hoher Güte bestehen können, was insb. im Hinblick auf die Material- und Fertigungskosten wie auch das thermisch bedingte Dilatationsverhalten des Meßaufnehmers 11 im Betrieb von Vorteil sein kann. Überdies kann das Aufnehmer-Gehäuse 7₁ ferner in vorteilhafter Weise auch so ausgeführt und so bemessen sein, daß es bei allfälligen Schäden an einem oder mehreren der Meßrohre, z.B. durch Rißbildung oder Bersten, ausströmendes Medium bis zu einem geforderten maximalen Überdruck im Inneren des Aufnehmer-Gehäuses 7₁ möglichst lange vollständig zurückzuhalten kann, wobei solche kritischen Zustand, wie beispielsweise auch in der eingangs erwähnten US-B 73 92 709 erwähnt, mittels entsprechenden Drucksensoren und/oder anhand von der erwähnten Umformer-Elektronik 12 im Betrieb intern erzeugten Betriebsparametern möglichst frühzeitig erfaßt und signalisiert werden können. Zur Vereinfachung des Transports des Meßaufnehmers bzw. des gesamten damit gebildeten In-line-Meßgeräts können ferner, wie beispielsweise auch in der eingangs erwähnten US-B 73 50 421 vorgeschlagen, einlaßseitig und auslaßseitig am außen am Aufnehmer-Gehäuse fixierte eine Transport-Öse vorgesehen sein.

Zum leckagefreien, insb. fluiddichten, Verbinden des Meßaufnehmers mit dem jeweils korrespondierenden Rohrsegment der Rohrleitung weist jeder der Flansche ferner jeweils eine entsprechende, möglichst plane Dichtfläche 6_{1A} bzw. 6_{2A} auf. Ein Abstand zwischen den beiden Dichtflächen 6_{1A}, 6_{2A} beider Flansche definiert somit praktisch eine Einbaulänge, L₁₁, des Meßaufnehmers 11. Die Flansche sind, insb. hinsichtlich ihres Innendurchmessers, ihrer jeweiligen Dichtfläche sowie den der Aufnahme entsprechender Verbindungsbolzen dienenden Flanschbohrungen, entsprechend der für den Meßaufnehmer 11 vorgesehenen nominelle Nennweite D₁₁ sowie den dafür ggf. einschlägigen Industrienormen dimensioniert, die einem Kaliber der Rohrleitung, in deren Verlauf der Meßaufnehmer einzusetzen ist, entspricht. Infolge der für den Meßaufnehmer im besondern angestrebten großen Nennweite beträgt dessen Einbaulänge L₁₁ gemäß einer Ausgestaltung der Erfindung mehr als 1200mm. Ferner ist aber vorgesehen, die Einbaulänge des Meßaufnehmers 11 möglichst klein, insb. kleiner als 3000mm zu halten. Die Flansche 6₁, 6₂ können, wie auch aus Fig. 4a ohne weiteres ersichtlich und wie bei derartigen Meßaufnehmer durchaus üblich, dafür möglichst nah an den Strömungsöffnungen der Strömungsteiler 20₁, 20₂ angeordnet sein, um so einen möglichst kurzen Vor- bzw. Auslaufbereich in den Strömungsteilern zu schaffen und somit insgesamt eine möglichst kurze Einbaulänge L₁₁ des Meßaufnehmers, insb. von weniger als 3000 mm, zu schaffen. Für einen möglichst kompakten Meßaufnehmer mit einem - nicht zuletzt auch bei angestrebt hohen Massendurchflußraten von über 1000 t/h - sind nach einer anderen Ausgestaltung der Erfindung die Einbaulänge und die nominelle Nennweite des Meßaufnehmers aufeinander abgestimmt so bemessen, daß ein Nennweite-zu-Einbaulänge-Verhältnis D₁₁/L₁₁ des Meßaufnehmers, definiert durch ein Verhältnis der nominellen Nennweite D₁₁ des Meßaufnehmers zur Einbaulänge L₁₁ des Meßaufnehmers kleiner als 0.3, insb. kleiner als 0.2 und/oder größer als 0.1, ist. Im hier gezeigten Ausführungsbeispiel ist zumindest ein mittleres Teilsegment 7_{1A} des Aufnehmer-Gehäuses 7₁ mittels eines ellipsoidförmigen - hier sogar kugelförmigen und zunächst aus zwei Kugelhalbschalen -gebildet, so daß zur Fertigung des Aufnehmer-Gehäuses 7₁ beispielsweise auch kostengünstige Tiefziehteile aus Stahlblech verwendet werden können.

Zum Führen des zumindest zeitweise durch Rohrleitung und Meßaufnehmer strömenden Mediums umfaßt der erfindungsgemäße Meßaufnehmer ferner eine Rohranordnung mit - hier genau - acht im Aufnehmer-Gehäuse 10 schwingfähig gehalterte gebogenen, beispielsweise zumindest abschnittsweise kreisbogenförmigen und/oder - wie hier schematisch dargestellt - zumindest abschnittsweise V-förmigen, Meßrohren 18₁, 18₂, 18₃, 18₄, 18₅, 18₆, 18₇, 18₈. Die acht - hier gleichlangen sowie paarweise parallel verlaufenden - Meßrohre 18₁, 18₂, 18₃, 18₄, 18₅, 18₆, 18₇, 18₈ kommunizieren jeweils mit der an den Meßaufnehmer angeschlossenen Rohrleitung und werden im Betrieb zumindest zeitweise, insb. auch simultan, in wenigstens einem für Ermittlung der physikalischen Meßgröße geeigneten, aktiv angeregten Schwingungsmode - dem sogenannten Nutzmode - vibrieren gelassen.

Von den acht Meßrohren münden ein erstes Meßrohr 18₁ mit einem einlaßseitigen ersten Meßrohrende in eine erste Strömungsöffnung 20_{1A} des ersten Strömungsteilers 20₁ und mit einem auslaßseitigen zweiten Meßrohrende in eine erste Strömungsöffnung 20_{2A} des zweiten Strömungsteilers 20₂, ein zweites Meßrohr 18₂ mit einem einlaßseitigen ersten Meßrohrende in eine zweite Strömungsöffnung 20_{1B} des ersten Strömungsteilers 20₁ und mit einem auslaßseitigen zweiten Meßrohrende in eine zweite Strömungsöffnung 20_{2B} des zweiten Strömungsteilers 20₂, ein drittes Meßrohr 18₃ mit einem einlaßseitigen ersten Meßrohrende in eine dritte Strömungsöffnung 20_{1C} des ersten Strömungsteilers 20₁ und mit einem auslaßseitigen zweiten Meßrohrende in eine dritte Strömungsöffnung 20_{2C} des zweiten Strömungsteilers 20₂, ein viertes Meßrohr 18₄ mit einem einlaßseitigen ersten Meßrohrende in eine vierte Strömungsöffnung 20_{1D} des ersten Strömungsteilers 20₁ und mit einem auslaßseitigen zweiten Meßrohrende in eine vierte Strömungsöffnung 20_{2D} des zweiten Strömungsteilers 20₂, ein fünftes Meßrohr 18₅ mit einem einlaßseitigen ersten Meßrohrende in eine fünfte Strömungsöffnung 20_{1E} des ersten Strömungsteilers 20₁ und mit einem auslaßseitigen zweiten Meßrohrende in eine fünfte Strömungsöffnung 20_{2E} des zweiten Strömungsteilers 20₂, ein sechstes Meßrohr 18₆ mit einem einlaßseitigen ersten Meßrohrende in eine sechste Strömungsöffnung 20_{1F} des ersten Strömungsteilers 20₁ und mit einem auslaßseitigen zweiten Meßrohrende in eine sechste Strömungsöffnung 20_{2F} des zweiten Strömungsteilers 20₂, ein siebentes Meßrohr 18₇ mit einem einlaßseitigen ersten Meßrohrende in eine siebente Strömungsöffnung 20_{1G} des ersten Strömungsteilers 20₁ und mit einem auslaßseitigen zweiten Meßrohrende in eine siebente Strömungsöffnung 20_{2G} des zweiten Strömungsteilers 20₂, sowie ein achtes Meßrohr 18₈ mit einem einlaßseitigen ersten Meßrohrende in eine achte Strömungsöffnung 20_{1H} des ersten Strömungsteilers 20₁ und mit einem auslaßseitigen zweiten Meßrohrende in eine achte Strömungsöffnung 20_{2H} des zweiten Strömungsteilers 20₂.

Die acht Meßrohre 18₁, 18₂, 18₃, 18₄, 18₅, 18₆, 18₇, 18₈ sind somit unter Bildung strömungstechnisch parallel geschalteter Strömungspfade an die, insb. baugleichen, Strömungsteiler 20₁, 20₂ angeschlossen, und zwar in einer Vibrationen, insb. Biegeschwingungen, der Meßrohre relativ zum Aufnehmergehäuse bzw. auch zumindest jeweils paarweise relativ zueinander ermöglichenden Weise. Ferner ist vorgesehen, daß die Meßrohre 18₁, 18₂, 18₃, 18₄, 18₅, 18₆, 18₇, 18₈ jeweils lediglich mittels nämlicher Strömungsteiler 20₁, 20₂ im Aufnehmer-Gehäuse 7₁ schwingfähig gehaltert sind. Als Material für die Rohrwände der Meßrohre eignet sich beispielsweise rostfreier, ggf. auch hochfester, Edelstahl, Titan, Zirkonium oder Tantal bzw. damit gebildete Legierungen oder auch Superlegierungen, wie etwa Hastelloy, Inconel etc.. Darüber hinaus kann als Material für die Meßrohre 18₁, 18₂, 18₃, 18₄, 18₅, 18₆, 18₇, 18₈ aber auch praktisch jeder andere dafür üblicherweise verwendete oder zumindest geeignete Werkstoff dienen, insb. solche mit einem möglichst kleinen thermischen Ausdehnungskoeffizient und einer möglichst hohen Streckgrenze. In vorteilhafter Weise sind die acht Meßrohre 18₁, 18₂, 18₃, 18₄, 18₅, 18₆, 18₇, 18₈ hinsichtlich eines Materials, aus dem deren Rohrwände bestehen, und/oder hinsichtlich ihrer geometrischen Rohr-Abmessungen, insb. einer Meßrohrlänge, einer Rohrwandstärke, eines Rohr-Außendurchmessers, einer Form der jeweiligen Biegelinie und/oder eines Kalibers, baugleich realisiert, insb. derart, daß im Ergebnis zumindest eine minimale Biegeschwingungs-Resonanzfrequenz jedes der - leeren oder gleichmäßig von einem homogenen Medium durchströmten - Meßrohre 18₁, 18₂, 18₃, 18₄, 18₅, 18₆, 18₇, 18₈ im wesentlichen gleich den jeweiligen minimalen Biegeschwingungs-Resonanzfrequenzen der verbleibenden anderen Meßrohre ist.

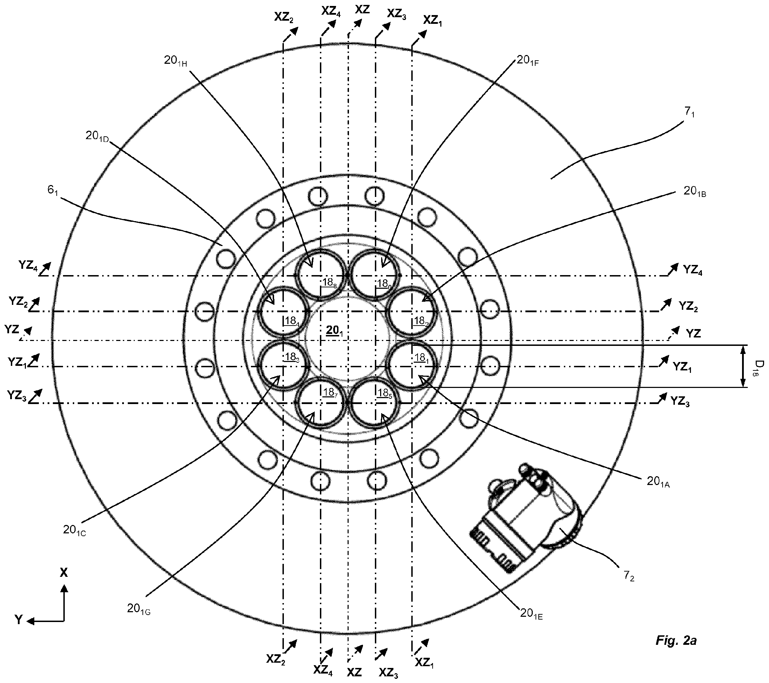

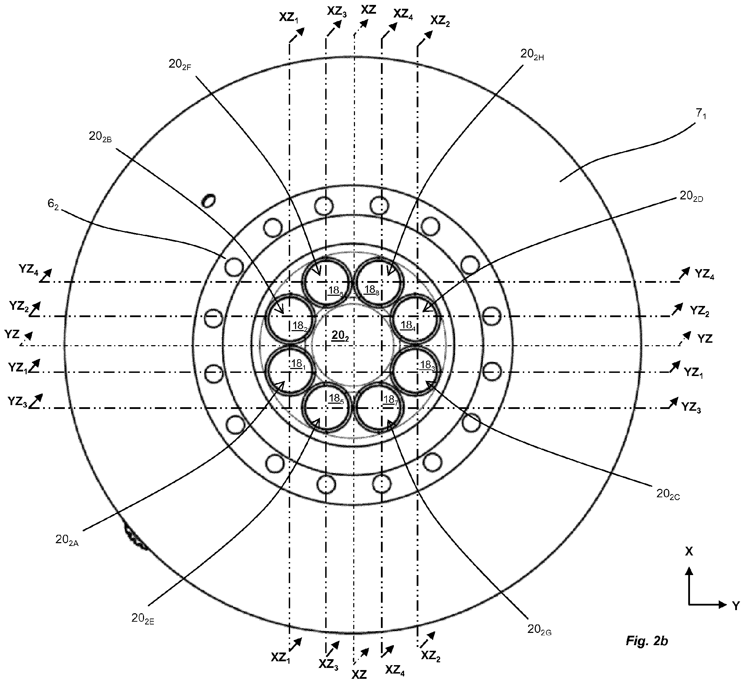

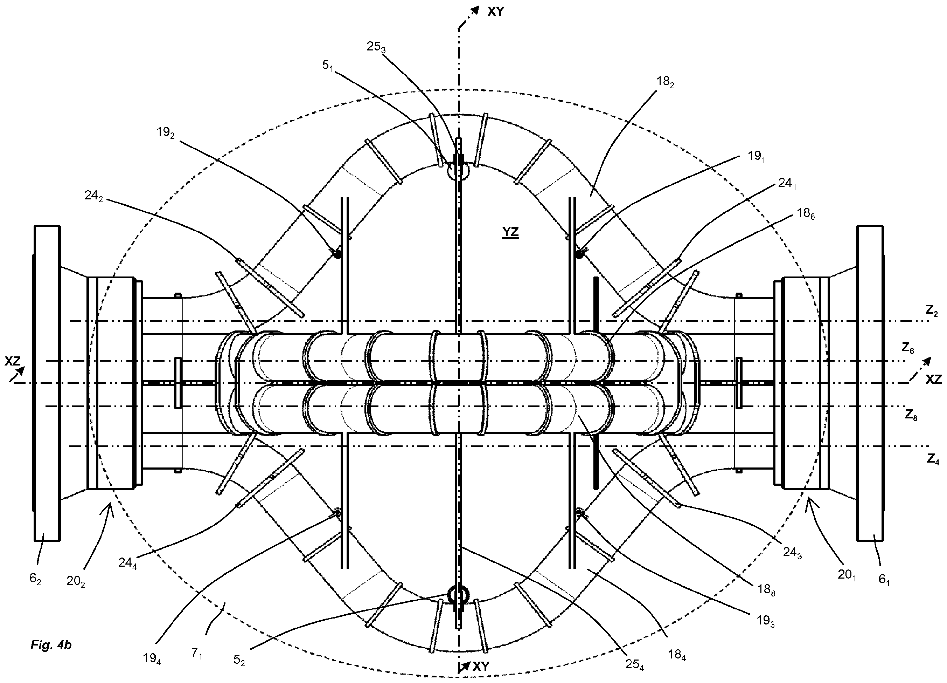

Gemäß einer weiteren Ausgestaltung der Erfindung sind die acht Meßrohre, wie auch aus der Zusammenschau der Fig. 2, 4a und 4b ohne weiteres ersichtlich, ferner so ausgebildet und im Meßaufnehmer angeordnet, daß die Rohranordnung eine sowohl zwischen dem ersten Meßrohr 18₁ und dem dritten Meßrohr 18₃ als auch zwischen dem zweiten Meßrohr 18₂ und dem vierten Meßrohr 18₄ liegende erste gedachte Längsschnittebene XZ aufweist, bezüglich der die Rohranordnung spiegelsymmetrisch ist, und daß die Rohranordnung weiters eine zu deren gedachter erster Längsschnittebene XZ senkrechte, sowohl zwischen dem fünften Meßrohr und sechsten Meßrohr als auch zwischen dem siebenten Meßrohr und achten Meßrohr liegende zweite gedachte Längsschnittebene YZ aufweist, bezüglich der die Rohranordnung gleichfalls spiegelsymmetrisch ist. Nämliche erste gedachte Längsschnittebene XZ liegt zudem sowohl zwischen dem fünften Meßrohr und siebenten Meßrohr als auch zwischen dem sechsten Meßrohr und dem achten Meßrohr, während nämliche zweite gedachte Längsschnittebene YZ zudem sowohl zwischen dem ersten Meßrohr 18₁ und zweiten Meßrohr 18₂ als auch zwischen dem dritten Meßrohr 18₃ und dem vierten Meßrohr 18₄ verläuft.

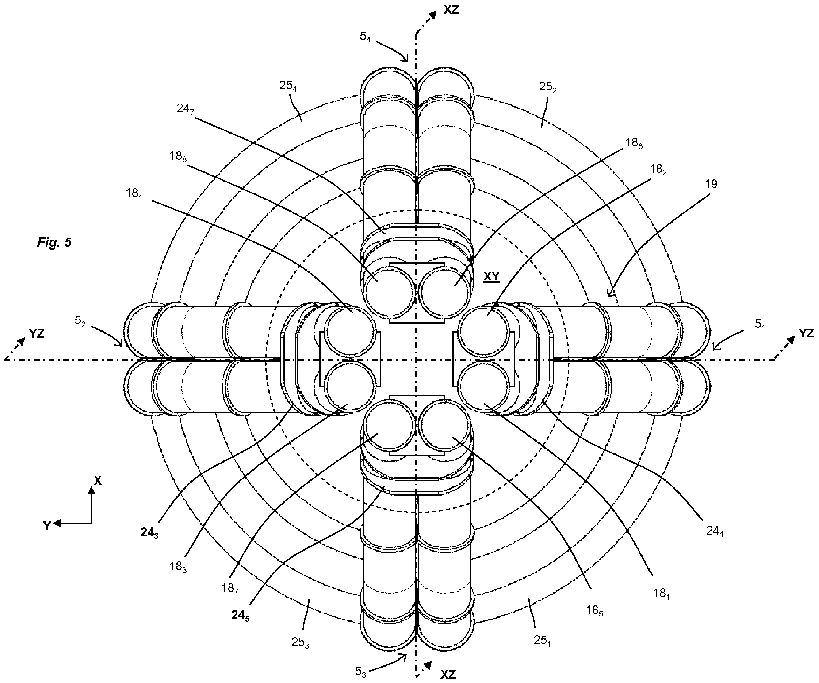

Im Ergebnis dessen sind nicht nur durch allfällige thermisch bedingte Ausdehnung der Meßrohre innerhalb der Rohranordnung generierte mechanische Spannungen minimiert, sondern können auch durch die Biegeschwingungen der gebogenen Meßrohre innerhalb der Rohranordnung allfällig induzierte, im wesentlichen senkrecht zur Schnittlinie der beiden vorgenannten gedachten Längsschnittebenen wirkende Querkräfte weitgehend neutralisiert werden, nicht zuletzt auch jene, u.a. auch in den eingangs erwähnten EP-A 1 248 084 und US-B 73 50 421 erwähnten, Querkräfte, die im wesentlichen senkrecht zur ersten gedachten Längsschnittebene XZ gerichtet sind. Wie nicht zuletzt auch aus den Fig. 4a, 4b, 5a, 5b ersichtlich, weist im hier gezeigten Ausführungsbeispiel jedes der Meßrohre jeweils einen Meßrohr-Scheitelpunkt, definiert als größter senkrechter Abstand des jeweiligen Meßrohres von der ersten gedachten Längsschnittebene XZ, auf. Im übrigen weist die die Rohranordnung, wie auch aus der Zusammenschau der Fig. 4a-6b ohne weiteres ersichtlich, eine sowohl zur ersten gedachten Längsschnittebene XZ als auch zur zweiten gedachten Längsschnittebene YZ jeweils senkrechte gedachte Querschnittebene XY auf. Gemäß einer vorteilhaften Ausgestaltung der Erfindung ist die Rohranordnung ferner so ausgebildet, daß ein Massenschwerpunkt der Rohranordnung in der gedachten Querschnittsebene XY liegt bzw. daß die Rohranordnung bezüglich der gedachten Querschnittsebene XY spiegelsymmetrisch ist, etwa derart, daß die gedachte Querschnittsebene XY jedes der Meßrohre in dessen jeweiligen Meßrohr-Scheitelpunkt schneidet.

Im hier gezeigten Ausführungsbeispiel sind die achte Meßrohre in vorteilhafter Weise, nicht zuletzt auch zwecks Erzielung einer möglichst hohen Schwingungsgüte für die Rohranordnung, ferner so ausgebildet und so angeordnet, daß die erste gedachte Längsschnittebene XZ zum fünften, sechsten, siebenten und achten Meßrohr jeweils parallel verläuft, und daß zweite gedachte Längsschnittebene YZ zum ersten, zweiten, dritten und vierten Meßrohr jeweils parallel verläuft. Im Ergebnis dessen weist die Rohranordnung, zumindest für den vorbeschriebenen Fall, daß sämtliche der acht Meßrohre einander baugleich und die beiden gedachten Längsschnittebenen XZ, YZ zueinander senkrecht sind, in Projektion auf die gedachte Querschnittsebene XY eine Silhouette auf, die, wie auch aus der Fig. 5 ohne weiteres erkennbar, im wesentlichen einem sogenannten gekürzten, nämlich aus vier gleich langen Kreuzarmen gebildeten Kreuz ("Griechisches Kreuz") entspricht.

Zur weiteren Symmetrisierung des Meßaufnehmers und insoweit auch zur weiteren Vereinfachung von dessen Aufbau sind die beiden Strömungsteiler 20₁, 20₂ gemäß einer weiteren Ausgestaltung der Erfindung ferner so ausgebildet und so im Meßaufnehmer angeordnet, daß, wie auch in den Fig. 4a und 4b schematisch dargestellt, eine die erste Strömungsöffnung 20_{1A} des ersten Strömungsteilers 20₁ mit der ersten Strömungsöffnung 20_{2A} des zweiten Strömungsteilers 20₂ imaginär verbindende gedachte erste Verbindungsachse Z₁ des Meßaufnehmers parallel zu einer die zweite Strömungsöffnung 20_{1B} des ersten Strömungsteilers 20₁ mit der zweiten Strömungsöffnung 20_{2B} des zweiten Strömungsteilers 20₂ imaginär verbindende gedachten zweiten Verbindungsachse Z₂ des Meßaufnehmers verläuft, und daß eine die dritte Strömungsöffnung 20_{1C} des ersten Strömungsteilers 20₁ mit der dritten Strömungsöffnung 20_{2C} des zweiten Strömungsteilers 20₂ imaginär verbindende gedachte dritten Verbindungsachse Z₃ des Meßaufnehmers parallel zu einer die vierte Strömungsöffnung 20_{1D} des ersten Strömungsteilers 20₁ mit der vierten Strömungsöffnung 20_{2B} des zweiten Strömungsteilers 20₂ imaginär verbindende gedachten vierten Verbindungsachse Z₄ des Meßaufnehmers verläuft. Ferner sind die die beiden Strömungsteiler 20₁, 20₂ in vorteilhafter Weise zudem auch so ausgebildet und im Meßaufnehmer angeordnet, daß eine die fünfte Strömungsöffnung 20_{1E} des ersten Strömungsteilers 20₁ mit der fünften Strömungsöffnung 20_{2E} des zweiten Strömungsteilers 20₂ imaginär verbindende gedachte fünfte Verbindungsachse Z₅ des Meßaufnehmers parallel zu einer die sechste Strömungsöffnung 20_{1F} des ersten Strömungsteilers 20₁ mit der sechsten Strömungsöffnung 20_{2F} des zweiten Strömungsteilers 20₂ imaginär verbindende gedachten sechsten Verbindungsachse Z₆ des Meßaufnehmers verläuft, und daß eine die siebente Strömungsöffnung 20_{1G} des ersten Strömungsteilers 20₁ mit der siebenten Strömungsöffnung 20_{2G} des zweiten Strömungsteilers 20₂ imaginär verbindende gedachte siebente Verbindungsachse Z₇ des Meßaufnehmers parallel zu einer die achte Strömungsöffnung 20_{1H} des ersten Strömungsteilers 20₁ mit der achten Strömungsöffnung 20_{2H} des zweiten Strömungsteilers 20₂ imaginär verbindende gedachten achten Verbindungsachse Z₈ des Meßaufnehmers verläuft.

Wie in der Fig. 4a und 4b gezeigte, sind die Strömungsteiler ferner so ausgebildet und im Meßaufnehmer so angeordnet, daß die Verbindungsachsen Z₁, Z₂, Z₃, Z₄, Z₅, Z₆, Z₇, Z₈ des Meßaufnehmers auch zu einer mit der Rohrleitung im wesentlichen fluchtenden und/oder mit vorgenannter Schnittlinie der beiden gedachten Längsschnittebenen XZ, YZ der Rohranordnung koinzidente Hauptströmungsachse L des Meßaufnehmers parallel sind. Desweiteren können die beiden Strömungsteiler 20₁, 20₂ in vorteilhafter Weise zudem auch so ausgebildet und so im Meßaufnehmer angeordnet sein, daß eine erste gedachte Längsschnittebene XZ₁ des Meßaufnehmers, innerhalb der dessen erste gedachte Verbindungsachse Z₁ und dessen zweite gedachte Verbindungsachse Z₂ verlaufen, parallel zu einer zweiten gedachten Längsschnittebene XZ₂ des Meßaufnehmers ist, innerhalb der dessen gedachte dritte Verbindungsachse Z₃ und dessen gedachte vierte Verbindungsachse Z₄ verlaufen. Ferner können die beiden Strömungsteiler 20₁, 20₂ hierbei in vorteilhafter Weise auch so ausgebildet und im Meßaufnehmer angeordnet sein, daß im Ergebnis auch eine fünfte gedachte Längsschnittebene XZ₃ des Meßaufnehmers, innerhalb der dessen - hier zur erwähnten Hauptströmungsachse des Meßaufnehmers jeweils parallelen - fünfte und sechste gedachte Verbindungsachsen Z₅ bzw. Z₆ verlaufen, parallel zu einer sechsten gedachten Längsschnittebene XZ₄ des Meßaufnehmers, innerhalb der dessen gedachte siebente und achte Verbindungsachsen Z₇ bzw. Z₈ verlaufen, ist, und/oder daß eine siebente gedachte Längsschnittebene YZ₃ des Meßaufnehmers, innerhalb der dessen fünfte und siebente gedachte Verbindungsachsen Z₅ bzw. Z₇ verlaufen, parallel zu einer achten gedachten Längsschnittebene YZ₄ des Meßaufnehmers, innerhalb der dessen sechste und achte gedachte Verbindungsachsen Z₆ bzw. Z₈ verlaufen, ist.

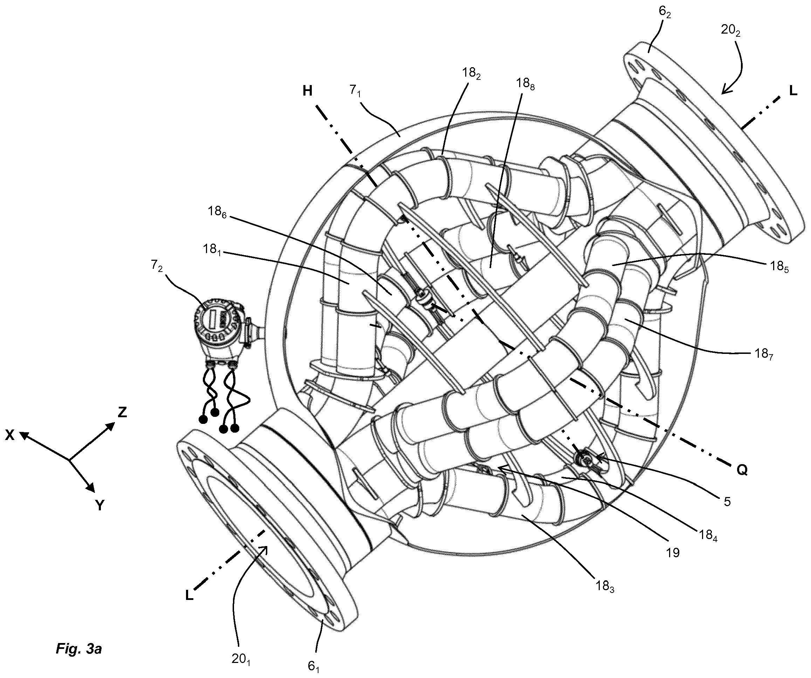

Darüberhinaus sind die Meßrohre gemäß einer weiteren Ausgestaltung der Erfindung ferner so ausgebildet und so im Meßaufnehmer angeordnet, daß die gedachte erste Längsschnittebene XZ der Rohranordnung, wie u.a. auch aus der Zusammenschau der Fig. 3a und 4a ersichtlich, zwischen der vorgenannten ersten gedachten Längsschnittebene XZ₁ des Meßaufnehmers und der vorgenannten zweiten gedachten Längsschnittebene XZ₂ des Meßaufnehmers liegt, beispielsweise auch so, daß die erste Längsschnittebene XZ der Rohranordnung parallel zur ersten und zweiten Längsschnittebene XZ₁,XZ₂ des Meßaufnehmers ist. Ferner sind die Meßrohre so ausgebildet und im Meßaufnehmer angeordnet, daß gleichermaßen auch die zweite gedachte Längsschnittebene YZ der Rohranordnung zwischen der dritten gedachten Längsschnittebene YZ₁ des Meßaufnehmers und der vierten gedachten Längsschnittebene YZ₂ des Meßaufnehmers verläuft, etwa derart, daß die zweite gedachte Längsschnittebene YZ der Rohranordnung parallel zur dritten gedachten Längsschnittebene YZ₁des Meßaufnehmers und parallel zur vierten gedachten Längsschnittebene YZ₂ des Meßaufnehmers ist.

Im hier gezeigten Meßaufnehmer, dessen Längsachse L innerhalb der beiden gedachten Längsschnittebenen XZ, YZ der Rohranordnung verläuft, liegen zudem die erste gedachte Längsschnittebene XZ der Rohranordnung zwischen der fünften und sechsten gedachten Längsschnittebene XZ₃, XZ₄ des Meßaufnehmers bzw. die zweite gedachte Längsschnittebene YZ der Rohranordnung zwischen der fünften und sechsten gedachten Längsschnittebene YZ₃, YZ₄ des Meßaufnehmers. Ferner ist hierbei auch die erste gedachte Längsschnittebene XZ der Rohranordnung parallel zur fünften und sechsten gedachten Längsschnittebene XZ₃, XZ₄ des Meßaufnehmers bzw. ist die zweite gedachte Längsschnittebene YZ der Rohranordnung parallel zur siebenten und achten gedachten Längsschnittebene YZ₃, YZ₄ des Meßaufnehmers. Zumindest für den erwähnten Fall, daß die erste gedachte Längsschnittebene XZ zum fünften, sechsten, siebenten und achten Meßrohr jeweils parallel verläuft, und daß zweite gedachte Längsschnittebene YZ zum ersten, zweiten, dritten und vierten Meßrohr jeweils parallel verläuft, schneiden im Ergebnis die dritte gedachte Längsschnittebene YZ₁ des Meßaufnehmers sowohl das erste Meßrohr als auch das dritte Meßrohr, die vierte gedachte Längsschnittebene YZ₂ des Meßaufnehmers sowohl das zweite Meßrohr als auch das vierte, die fünfte gedachte Längsschnittebene XZ₃ des Meßaufnehmers sowohl das fünfte Meßrohr als auch das sechste Meßrohr bzw. die sechste gedachte Längsschnittebene XZ₄ des Meßaufnehmers sowohl das siebente Meßrohr als auch das achte Meßrohr jeweils (imaginär) längs.

Im hier gezeigten Ausführungsbeispiel ist die Rohranordnung, wie aus der Zusammenschau der Fig. 4a, 4b, 5a, 5b und 6a ohne weiteres ersichtlich, ferner so ausgebildet und so im Aufnehmergehäuse plaziert, daß im Ergebnis nicht nur die gemeinsame Schnittlinie der ersten und zweiten gedachten Längsschnittebenen XZ, YZ der Rohranordnung parallel bzw. koinzident zur Längsachse L ist, sondern auch eine gemeinsame Schnittlinie der ersten Längsschnittebene XZ und der Querschnittsebene XY parallel bzw. koinzident zu einer zur Längsachse L senkrechten gedachten Querachse Q des Meßaufnehmers und eine gemeinsame Schnittlinie der zweiten Längsschnittebene YZ und der Querschnittsebene XY parallel bzw. koinzident zu einer zur Längsachse L senkrechten gedachten Hochachse H des Meßaufnehmers sind.

Gemäß einer weiteren vorteilhaften Ausgestaltung der Erfindung sind die Strömungsöffnungen des ersten Strömungsteilers 20₁ ferner so angeordnet, daß jene gedachten Flächenschwerpunkte, die zu den - hier kreisförmigen - Querschnittsflächen der Strömungsöffnungen des ersten Strömungsteilers gehören, die Eckpunkte eines gedachten regelmäßigen Achtecks, bilden, wobei nämliche Querschnittsflächen wiederum in einer gemeinsamen gedachten, senkrecht zu einerbeispielsweise innerhalb der ersten Längsschnittebene XZ der Rohranordnung verlaufenden bzw. zur erwähnten Hauptströmungsachse des Meßaufnehmers parallelen oder auch koinzidenten - Längsachse L des Meßaufnehmers verlaufenden bzw. auch zu den Längsschnittebenen des Meßaufnehmers senkrechten Querschnittebene des ersten Strömungsteilers liegen können. Ferner sind auch die Strömungsöffnungen des zweiten Strömungsteilers 20₂ so angeordnet, daß zu - hier ebenfalls kreisförmigen - Querschnittsflächen der Strömungsöffnungen des zweiten Strömungsteilers 20₂ zugehörige gedachte Flächenschwerpunkte die Eckpunkte eines gedachten regelmäßigen Achtecks bilden, wobei nämliche Querschnittsflächen wiederum in einer gemeinsamen gedachten, senkrecht zur erwähnten Hauptströmungs- oder auch Längsachse L des Meßaufnehmers verlaufenden bzw. zu den Längsschnittebenen des Meßaufnehmers senkrechten Querschnittebene des zweiten Strömungsteilers liegen können. Im Ergebnis dessen verlaufen dann somit auch die erste, zweite, vierte und fünfte Längsschnittebene des Meßaufnehmers jeweils parallel zueinander. Gleichermaßen parallel zueinander sind somit auch die dritte, vierte, siebente und achte Längsschnittebene des Meßaufnehmers.

Gemäß einer weiteren Ausgestaltung der Erfindung sind die Meßrohre so gebogen und so im Meßaufnehmer angeordnet, daß ein Kaliber-zu-Höhe-Verhältnis D₁₈/Q₁₈ der Rohranordnung, definiert durch ein Verhältnis eines Kalibers, D₁₈, des ersten Meßrohrs zu einer maximalen seitlichen Ausdehnung der Rohranordnung Q₁₈, gemessen von einem Scheitelpunkt des ersten Meßrohrs zu einem Scheitelpunkt des dritten Meßrohrs bzw. gemessen von einem Scheitelpunkt des zweiten Meßrohrs zu einem Scheitelpunkt des vierten Meßrohrs, mehr als 0.05, insb. mehr als 0.07 und/oder weniger als 0.5, insb. weniger als 0.4, beträgt.

Wie bereits eingangs erwähnt, werden beim Meßaufnehmer 11 die für die Messung erforderlichen Reaktionskräfte im jeweils zu messenden Medium durch das, beispielsweise simultane, Schwingenlassen der acht Meßrohre 18₁, 18₂, 18₃, 18₄, 18₅, 18₆, 18₇, 18₈ in einem aktiv angeregten Schwingungsmode, dem sogenannten Nutzmode, bewirkt. Zum Anregen von Schwingungen der Meßrohre, nicht zuletzt auch denen im Nutzmode, umfaßt der Meßaufnehmer ferner eine mittels wenigstens eines auf wenigstens zwei Meßrohre direkt, insb. differentiell, einwirkenden elektro-mechanischen, beispielsweise elektro-dynamischen, Schwingungserregers gebildete Erregeranordnung 5, die dazu dient jedes der Meßrohre betriebsgemäß zumindest zeitweise in für die konkrete Messung jeweils geeignete Schwingungen, insb. Biegeschwingungen, im Nutzmode mit jeweils für die Erzeugung und die Erfassung der oben genannten Reaktionskräfte im Medium ausreichend großen Schwingungsamplituden zu versetzen bzw. diese Nutzschwingungen aufrechtzuerhalten. Der wenigstens eine Schwingungserreger, mithin die damit gebildete Erregeranordnung dient hierbei im besonderen dazu, eine von der Umformer-Elektronik - etwa mittels wenigstens eines elektrischen Treibersignals - eingespeiste elektrische Erregerleistung P_{exc} in solche, z.B. pulsierenden oder harmonischen, Erregerkräfte F_{exc} zu konvertieren, die möglichst gleichzeitig, gleichmäßig jedoch gegensinnig auf wenigstens zwei die Meßrohre, etwa das erste und zweite Meßrohr, einwirken, ggf. auch von den beiden Meßrohre weiter auf die anderen zwei Meßrohre mechanisch gekoppelt werden, und so Schwingungen im Nutzmode bewirken. Die - durch Konvertierung von in die Erregeranordnung eingespeister elektrischer Erregerleistung P_{exc} generierten - Erregerkräfte F_{exc} können in dem Fachmann an und für sich bekannter Weise, z.B. mittels einer in der Umformer-Elektronik 12 vorgesehenen, letztlich das Treibersignal liefernden Betriebsschaltung eingestellt werden, etwa mittels in der Betriebsschaltung implementierten Strom- und/ oder Spannungs-Reglern hinsichtlich ihrer Amplitude und, z.B. mittels einer in Betriebsschaltung gleichfalls vorgesehenen Phasen-Regelschleife (PLL), hinsichtlich ihrer Frequenz, vgl. hierzu beispielsweise auch die US-A 48 01 897 oder die US-B 63 11 136. Gemäß einer weiteren Ausgestaltung der Erfindung ist daher ferner vorgesehen, daß die Umformer-Elektronik für die Generierung der Erregerkräfte benötigte elektrische Erregerleistung in die Erregeranordnung mittels wenigstens eines, dem Schwingungserreger, mithin der Erregeranordnung beispielsweise via Verbindungsleitungen zugeführten und/oder zumindest zeitweise periodischen, elektrischen Treibersignals einspeist, das mit wenigstens einer mit einer einer Resonanzfrequenz eines natürlichen Schwingungsmodes der Rohranordnung entsprechenden Signalfrequenz veränderlich ist. Beispielsweise kann das wenigstens eine Treibersignal auch eine Vielzahl von Signalkomponenten mit voneinander verschiedener Signalfrequenz aufweisen, von denen wenigstens eine - etwa eine hinsichtlich einer Signalleistung dominierende - Signalkomponente eine einer Resonanzfrequenz eines natürlichen Schwingungsmodes der Rohranordnung in dem jedes der Meßrohre Biegeschwingungen ausführt entsprechende Signalfrequenz aufweist. Darüberhinaus kann es ferner von Vorteil sein - etwa zwecks Anpassens der eingespeisten Erregerleistung an die momentan für eine ausreichende Schwingungsamplitude tatsächlich benötige -, das wenigstens eine Treibersignal hinsichtlich einer maximalen Spannungshöhe (Spannungsamplitude) und/oder einer maximalen Stromstärke (Stromamplitude) veränderlich auszuführen - etwa derart, daß beispielsweise Zylinderspule des wenigstens einen Schwingungserregers von einem von einer mittels nämlichen Treibersignals bereitgestellten veränderlichen Erregerspannung getriebenen Erregerstrom durchflossen ist.

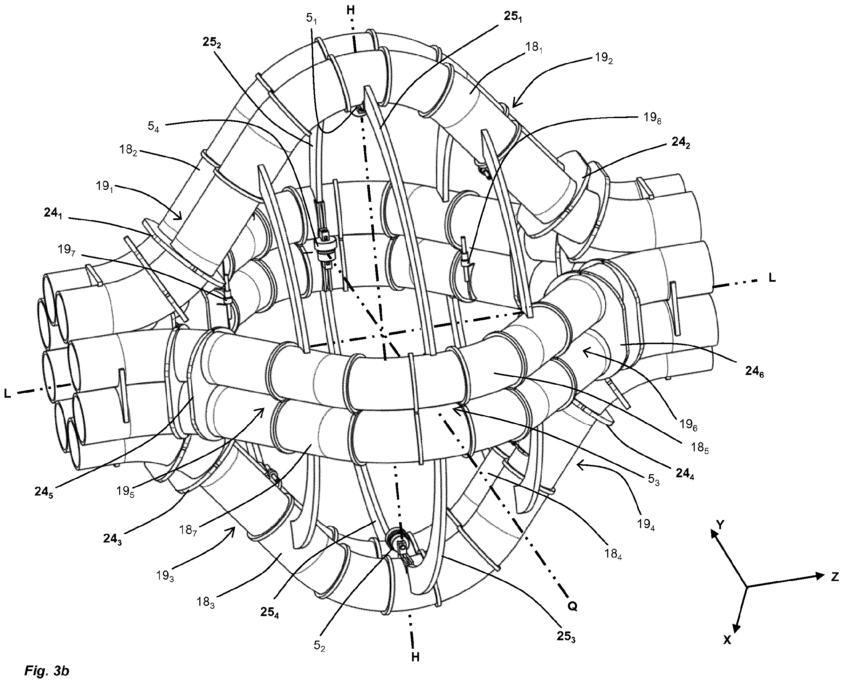

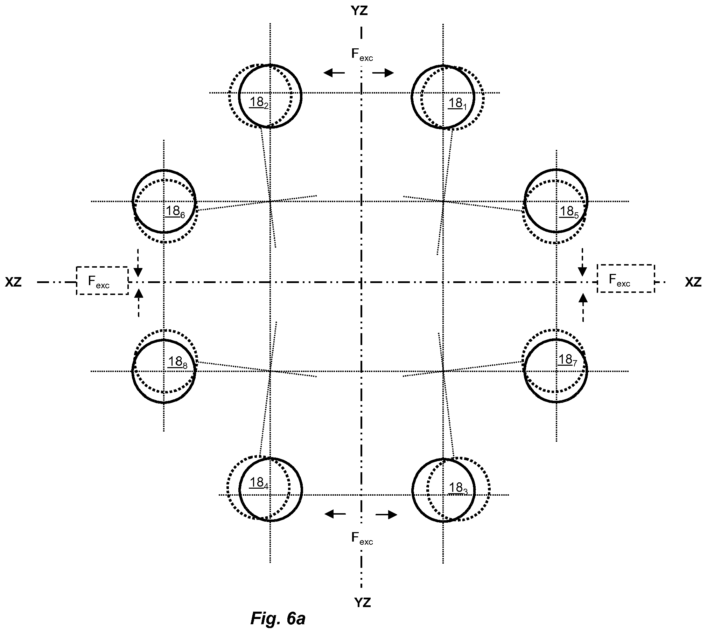

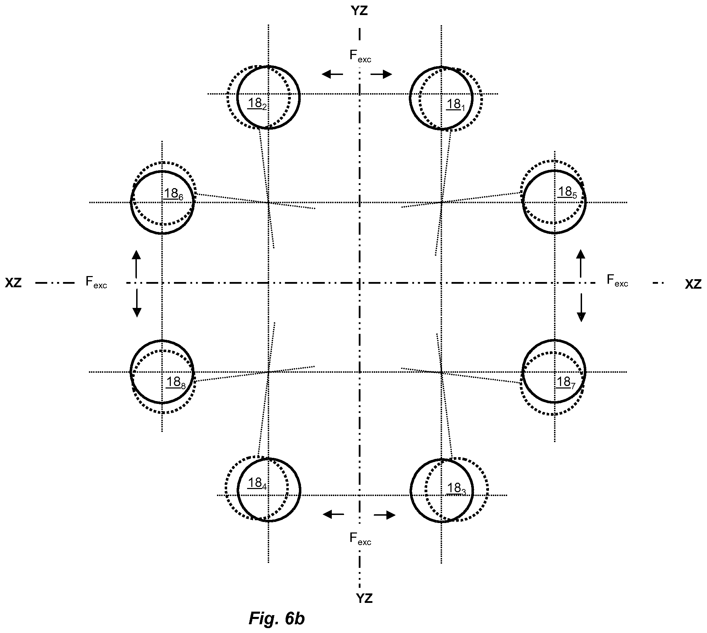

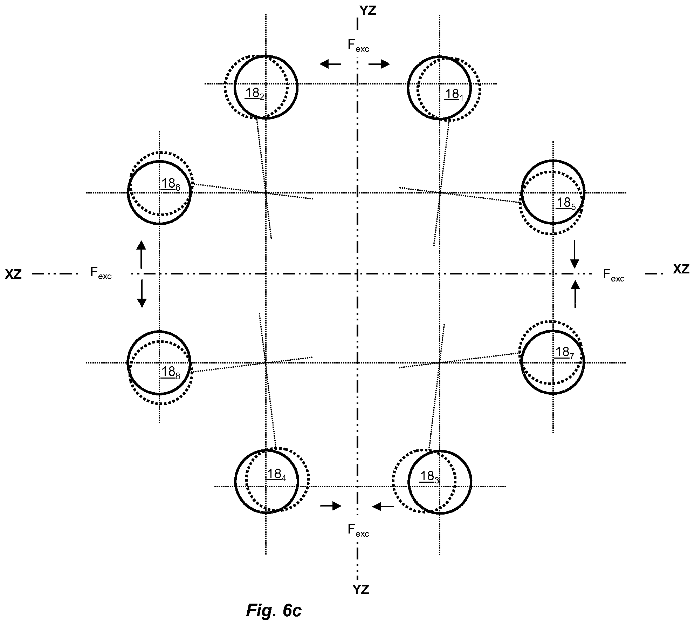

Ziel der aktiven Anregung der Meßrohre zu Schwingungen ist es im Besonderen, nicht zuletzt auch für den Fall, daß das mittels des Meßaufnehmers schlußendlich gebildete Meßsystem zur Messung des Massendurchflusses verwendet werden soll, mittels der im Nutzmode vibrierenden Meßrohre im hindurchströmendem Medium ausreichend starke Corioliskräfte zu induzieren, so daß im Ergebnis eine zusätzliche, mithin einem Schwingungsmode höherer Ordnung der Rohranordnung - dem sogenannten Coriolismode - entsprechende Verformungen jedes der Meßrohre mit für die Messung ausreichenden Schwingungsamplituden bewirkt werden kann. Beispielsweise können die Meßrohre 18₁, 18₂, 18₃, 18₄ mittels der daran gehalterten elektro-mechanischen Erregeranordnung zu, insb. simultanen, Biegeschwingungen, insb. auf einer momentanen mechanischen Resonanzfrequenz der mittels der acht Meßrohre 18₁, 18₂, 18₃, 18₄, 18₅, 18₆, 18₇, 18₈ gebildeten Rohranordnung, angeregt werden, bei denen sie - zumindest überwiegend - lateral ausgelenkt und, wie aus der Zusammenschau der Fign. 3a, 3b, 6a, 6b, 6c für den Fachmann ohne weiteres ersichtlich, paarweise zueinander im wesentlichen gegengleich schwingen gelassen werden. Dies im besonderen derart, daß von jedem der acht Meßrohre im Betrieb zeitgleich ausgeführten Vibrationen zumindest zeitweise und/oder zumindest anteilig jeweils als Biegeschwingungen um eine das erste und das jeweils zugehörige zweite Meßrohrende des jeweiligen Meßrohrs verbindende, zu den erwähnten Verbindungsachsen Z₁, Z₂, Z₃, Z₄, Z₅, Z₆, Z₇, Z₈ jeweils parallele gedachte Schwingungssachse ausgebildet sind, wobei die Schwingungssachsen im hier gezeigten Ausführungsbeispiel gleichermaßen zueinander wie auch zu der die beiden Strömungsteiler imaginär verbindenden und durch einen Massenschwerpunkt des Meßaufnehmers gedachten Längsachse L des gesamten Meßaufnehmers parallel sind. Anders gesagt, können die Meßrohre, wie bei Meßaufnehmern vom Vibrationstyp mit einem oder mehr gebogenen Meßrohren durchaus üblich, jeweils zumindest abschnittsweise nach Art eines endseitig eingespannten Auslegers schwingen gelassen werden, mithin also Ausleger-Biegeschwingungen um jeweils eine zu wenigstens zwei der gedachten Verbindungsachsen Z₁, Z₂, Z₃, Z₄, Z₅, Z₆, Z₇, Z₈ parallele gedachte Schwingungsachse ausführen.

Als - nicht zuletzt auch für die Generierung von Corioliskräften im durch die Meßrohre strömenden Medium nutzbarer - Nutzmode eigenen sich bei der Rohranordnung des erfindungsgemäßen Meßaufnehmers im besonderer solche der Rohranordnung innewohnenden natürlichen Schwingungsmoden, in welchen Schwingungsmoden, wie auch in den Fig. 6a, 6b, 6c schematisch für einen mit der gedachten Querschnittsebene XY parallelen Querschnitt dargestellt, sowohl das erste Meßrohr und das dritte Meßrohr bezüglich der ersten gedachten Längsschnittebene XZ gegengleiche Biegeschwingungen um jeweils eine dem jeweiligen Meßrohr zugehörige statische Ruhelage als auch das zweite Meßrohr und das vierte Meßrohr bezüglich der ersten gedachten Längsschnittebene gegengleiche Biegeschwingungen um jeweils eine dem jeweiligen Meßrohr zugehörige statische Ruhelage ausführen können bzw. ausführen, und/oder in welchen Schwingungsmoden sowohl das fünfte Meßrohr und das siebente Meßrohr bezüglich der ersten gedachten Längsschnittebene XZ gegengleiche Biegeschwingungen um jeweils eine dem jeweiligen Meßrohr zugehörige statische Ruhelage als auch das sechste Meßrohr und das achte Meßrohr bezüglich der ersten gedachten Längsschnittebene XZ gegengleiche Biegeschwingungen um jeweils eine dem jeweiligen Meßrohr zugehörige statische Ruhelage ausführen können bzw. ausführen, und/oder in welchen Schwingungsmoden das erste Meßrohr und das fünfte Meßrohr im Gleichtakt - nämlich zumindest in der gedachten Querschnittsebene XY phasengleich - Biegeschwingungen um jeweils eine dem jeweiligen Meßrohr zugehörige statische Ruhelage ausführen können bzw. ausführen, das zweite Meßrohr und das sechste Meßrohr im Gleichtakt Biegeschwingungen um jeweils eine dem jeweiligen Meßrohr zugehörige statische Ruhelage ausführen können bzw. ausführen, das dritte Meßrohr und das siebente Meßrohr im Gleichtakt Biegeschwingungen um jeweils eine dem jeweiligen Meßrohr zugehörige statische Ruhelage ausführen können bzw. ausführen, und das vierte Meßrohr und das achte Meßrohr im Gleichtakt Biegeschwingungen um jeweils eine dem jeweiligen Meßrohr zugehörige statische Ruhelage ausführen können bzw. ausführen.

Gemäß einer Ausgestaltung der Erfindung ist die Erregeranordnung ferner derart ausgebildet ist, daß damit das erste Meßrohr 18₁ und das zweite Meßrohr 18₂ zu bezüglich der zweiten gedachten Längsschnittebene YZ gegengleichen, insb. auch zu bezüglich der zweiten gedachten Längsschnittebene YZ symmetrischen, Biegeschwingungen und das dritte Meßrohr 18₃ und das vierte Meßrohr 18₄ zu bezüglich der zweiten gedachten Längsschnittebene YZ gegengleichen, insb. auch zu bezüglich der zweiten gedachten Längsschnittebene YZ symmetrischen, Biegeschwingungen anregbar sind. Alternativ oder in Ergänzung dazu ist die Erregeranordnung nach einer weiteren Ausgestaltung der Erfindung ferner derart ausgebildet, daß damit das erste Meßrohr 18₁ und das dritte Meßrohr 18₃ zu bezüglich der ersten gedachten Längsschnittebene XZ gegengleichen, beispielsweise auch zu bezüglich der ersten gedachten Längsschnittebene XZ symmetrischen, Biegeschwingungen und das zweite Meßrohr 18₂ und das vierte Meßrohr 18₄ zu bezüglich der ersten gedachten Längsschnittebene XZ gegengleichen, beispielsweise zu bezüglich der ersten gedachten Längsschnittebene XZ symmetrischen, Biegeschwingungen anregbar sind.

Ferner ist die Erregeranordnung nach einer Ausgestaltung der Erfindung auch dafür eingerichtet, das fünfte Meßrohr 18₅ und das siebente Meßrohr 18₇ zu bezüglich der ersten gedachten Längsschnittebene XZ gegengleichen, beispielsweise auch zu bezüglich der ersten gedachten Längsschnittebene XZ symmetrischen, Biegeschwingungen sowie das sechste Meßrohr 18₆ und das achte Meßrohr 18₈ zu bezüglich der ersten gedachten Längsschnittebene XZ gegengleichen, beispielsweise zu bezüglich der ersten gedachten Längsschnittebene XZ symmetrischen, Biegeschwingungen anzuregen. Zudem kann die Erregeranordnung 5 ferner auch so eingerichtet sein, das fünfte Meßrohr 18₅ und das sechste Meßrohr 18₆ zu bezüglich der zweiten gedachten Längsschnittebene YZ gegengleichen, beispielsweise auch zu bezüglich der zweiten gedachten Längsschnittebene YZ symmetrischen, Biegeschwingungen sowie das siebente Meßrohr 18₇ und das achte Meßrohr 18₈ zu bezüglich der zweiten gedachten Längsschnittebene YZ gegengleichen, beispielsweise zu bezüglich der zweiten gedachten Längsschnittebene YZ symmetrischen, Biegeschwingungen anzuregen.

Gemäß einer weiteren Ausgestaltung der Erfindung sind die achte Meßrohre im Betrieb mittels der Erregeranordnung 5 im Nutzmode ferner zumindest anteilig, insb. überwiegend, zu Biegeschwingungen angeregt, die eine Biegeschwingungsfrequenz aufweisen, die in etwa gleich einer momentanen mechanischen Resonanzfrequenz der die acht Meßrohre umfassenden Rohranordnung, mithin einer momentanen Resonanzfrequenz eines Schwingungsmode der Rohranordnung entspricht, ist oder die zumindest in der Nähe einer solchen Eigen- oder Resonanzfrequenz liegt. Die momentanen mechanischen Resonanzfrequenzen von Biegeschwingungen sind dabei bekanntlich in besonderem Maße von Größe, Form und Material der Meßrohre wie auch von einer momentanen Dichte des durch die Meßrohre hindurchströmenden Mediums abhängig und kann insoweit im Betrieb des Meßaufnehmers innerhalb eines durchaus einige Kilohertz breiten Nutz-Frequenzbandes veränderlich sein. Bei Anregung der Meßrohre auf einer momentanen Resonanzfrequenz kann somit einerseits anhand der momentan angeregten Schwingungsfrequenz eine mittlere Dichte des durch die Meßrohre momentane strömenden Mediums leicht ermittelt werden. Anderseits kann so auch die für die Aufrechterhaltung der im Nutzmode angeregten Schwingungen momentan erforderliche elektrische Leistung minimiert werden. Im besonderen werden die achte Meßrohre, angetrieben von der Erregeranordnung, ferner zumindest zeitweise mit im wesentlichen gleicher Schwingungsfrequenz, insb. auf jeweils ein und derselben, insoweit einer gemeinsamen, natürlichen mechanischen Resonanzfrequenz, schwingen gelassen. In vorteilhafter Weise sind das Schwingungsverhalten der mittels der acht Meßrohre 18₁, 18₂, 18₃, 18₄, 18₅, 18₆, 18₇, 18₈ gebildeten Rohranordnung wie auch die die Erregeranordnung steuernden Treibersignale ferner so aufeinander abgestimmt, daß zumindest die im Nutzmode angeregten Schwingungen der Meßrohre so ausgebildet sind, daß das erste und das zweite Meßrohr 18₁, 18₂ - etwa nach Art zweier Stimmgabelzinken - zueinander im wesentlichen gegengleich, nämlich zumindest in der gedachten Querschnittsebene XY mit einer gegenseitigen Phasenverschiebung von etwa 180°, mithin im Gegentakt schwingen und auch jeweils das dritte und das vierte Meßrohr 18₃, 18₄ wie auch das fünfte und das siebente Meßrohr 18₅, 18₇ bzw. das sechste und das achte Meßrohr 18₅, 18₈ gleichermaßen jeweils zueinander im wesentlichen gegengleich schwingen.

Weiterführende Untersuchungen an Meßsystemen mit einem Meßaufnehmer gemäß der in Rede stehenden Art haben ferner ergeben, daß sich als Nutzmode, nicht zuletzt auch für die Ermittlung der Massendurchflußrate sowie der Dichte des im Meßaufnehmer geführten Mediums, im besonderen jener der Rohranordnung innewohnende natürliche - im weiteren als Schwingungsmode erster Art bezeichnete - Schwingungsmode eignet, in dem - wie auch in Fig. 6a schematisch für zwei Schwingungsphasen dargestellt - das erste Meßrohr und das zweite Meßrohr bezüglich der zweiten gedachten Längsschnittebene YZ gegengleiche Biegeschwingungen um jeweils eine dem jeweiligen Meßrohr zugehörige statische Ruhelage ausführen, das dritte Meßrohr und das vierte Meßrohr bezüglich der zweiten gedachten Längsschnittebene YZ gegengleiche Biegeschwingungen um jeweils eine dem jeweiligen Meßrohr zugehörige statische Ruhelage ausführen, das fünfte Meßrohr und das siebente Meßrohr gegengleiche Biegeschwingungen um jeweils eine dem jeweiligen Meßrohr zugehörige statische Ruhelage ausführen, und das sechste Meßrohr und das achte Meßrohr gegengleiche Biegeschwingungen um jeweils eine dem jeweiligen Meßrohr zugehörige statische Ruhelage ausführen. Dies im besonderen in der Weise, daß zum einen, bezüglich der ersten gedachten Längsschnittebene XZ, sowohl nämliche Biegeschwingungen des ersten Meßrohrs gegengleich zu nämlichen Biegeschwingungen des dritten Meßrohrs als auch nämliche Biegeschwingungen des zweiten Meßrohrs gegengleich zu nämlichen Biegeschwingungen des vierten Meßrohrs sind, und daß, bezüglich der zweiten gedachten Längsschnittebene YZ, sowohl nämliche Biegeschwingungen des fünften Meßrohrs gegengleich zu nämlichen Biegeschwingungen des sechsten Meßrohrs als auch nämliche Biegeschwingungen des siebenten Meßrohrs gegengleich zu nämlichen Biegeschwingungen des achten Meßrohrs sind, und daß zum anderen, wie auch aus Fig. 6a ersichtlich, die Biegeschwingungen des ersten Meßrohrs im Gleichtakt, nämlich zumindest in der gedachten Querschnittsebene XY phasengleich, zu den Biegeschwingungen des fünften Meßrohrs, die Biegeschwingungen des zweiten Meßrohrs im Gleichtakt zu den Biegeschwingungen des sechsten Meßrohrs, die Biegeschwingungen des dritten Meßrohrs im Gleichtakt zu den Biegeschwingungen des siebenten Meßrohrs, und die Biegeschwingungen des vierten Meßrohrs im Gleichtakt zu den Biegeschwingungen des achten Meßrohr sind.

Die besondere Eignung des vorgenannten Schwingungsmodes erster Art als Nutzmode für Meßaufnehmer mit acht gebogenen Meßrohren konnte dabei nicht zuletzt auch auf die für das Schwingverhalten des Meßaufnehmers - sowohl räumlich als auch zeitlich gesehen - dabei insgesamt sehr günstig ausfallenden Spannungsverteilung im Meßaufnehmer, nicht zuletzt auch im Bereich der beiden Strömungsteiler, sowie auch auf die gleichermaßen günstig, mithin sehr gering ausfallenden schwingungsbedingten Deformierungen des Meßaufnehmers im allgemeinen, sowie der Strömungsteiler im besonderen, zurückgeführt werden. Darüberhinaus kann nämlicher Schwingungsmode hinsichtlich seiner Eigenfrequenz vergleichsweise einfach von allen anderen der Rohranordnung gleichermaßen innewohnenden Schwingungsmoden separiert werden.

Außer dem vorgenannten Schwingungsmode weist die Rohranordnung zudem auch einen natürlichen Schwingungsmode zweiter Art auf, in dem - wie in Fig. 6b schematisch für zwei Schwingungsphasen dargestellt - das erste Meßrohr und das zweite Meßrohr bezüglich der zweiten gedachten Längsschnittebene YZ wie auch das dritte Meßrohr und das vierte Meßrohr bezüglich der zweiten gedachten Längsschnittebene YZ bzw. das fünfte Meßrohr und das siebente Meßrohr bezüglich der ersten gedachten Längsschnittebene XZ wie auch das sechste Meßrohr und das achte Meßrohr bezüglich der ersten gedachten Längsschnittebene XZ wiederum jeweils gegengleiche Biegeschwingungen um jeweils zugehörige statische Ruhelage ausführen, mithin auch, bezüglich der ersten gedachten Längsschnittebene XZ, sowohl nämliche Biegeschwingungen des ersten Meßrohrs gegengleich zu nämlichen Biegeschwingungen des dritten Meßrohrs als auch nämliche Biegeschwingungen des zweiten Meßrohrs gegengleich zu nämlichen Biegeschwingungen des vierten Meßrohrs sind, und auch, bezüglich der zweiten gedachten Längsschnittebene YZ, sowohl nämliche Biegeschwingungen des fünften Meßrohrs gegengleich zu nämlichen Biegeschwingungen des sechsten Meßrohrs als auch nämliche Biegeschwingungen des siebenten Meßrohrs gegengleich zu nämlichen Biegeschwingungen des achten Meßrohrs sind. Dies im Unterschied zu den Biegeschwingungen im vorgenannten Schwingungsmode erster Art, jedoch in der Weise, daß - wie auch in Fig. 6b gezeigt - die Biegeschwingungen des ersten Meßrohrs gegengleich, mithin im Gegentakt, zu den Biegeschwingungen des fünften Meßrohrs, die Biegeschwingungen des zweiten Meßrohrs gegengleich zu den Biegeschwingungen des sechsten Meßrohrs, die Biegeschwingungen des dritten Meßrohrs gegengleich zu den Biegeschwingungen des siebenten Meßrohrs, und die Biegeschwingungen des vierten Meßrohrs gegengleich zu den Biegeschwingungen des achten Meßrohr sind.

Um eine separate, nicht zuletzt auch definierte Anregung des Schwingungsmodes erster Art und/oder des Schwingungsmodes zweiter Art über einen möglichst weiten - u.a. auch von im Betrieb schwankenden Dichten, Massendurchflußraten, Temperaturverteilungen im Meßaufnehmer etc. geprägten - Betriebsbereich des Meßaufnehmers zu gewährleisten, ist gemäß einer weiteren Ausgestaltung der Erfindung die mittels der acht Meßrohre gebildete Rohranordnung, mithin der damit gebildet Meßaufnehmer, so dimensioniert, daß eine - beispielsweise bei lediglich mit Luft gefüllter Rohranordnung meßbare - Eigenfrequenz f_{18-I} des Schwingungsmode erster Art, von einer, insb. bei lediglich mit Luft gefüllter Rohranordnung bzw. zeitgleich zur Eigenfrequenz f_{18-I} des Schwingungsmode erster Art meßbaren, Eigenfrequenz f_{18-II} des Schwingungsmode zweiter Art verschieden ist, beispielsweise so, daß die Eigenfrequenzen f_{18-I}; f_{18-II} der beiden nämlichen Schwingungsmoden um 10Hz oder mehr voneinander abweichen. Im besonderen ist, nicht zuletzt auch für den Fall großer nomineller Nennweiten von mehr als 150 mm, die Rohranordnung so ausgebildet, daß, nämliche Eigenfrequenz f_{18-I} des Schwingungsmode erster Art um mehr als 10Hz größer als nämliche Eigenfrequenz f_{18-II} des Schwingungsmode zweiter Art ist. In vorteilhafter Weise ist nämliche Eigenfrequenz, f_{18-II} des Schwingungsmode erster Art ferner so eingestellt, daß sie von jeder - etwa bei lediglich mit Luft gefüllter Rohranordnung bzw. zeitgleich zur Eigenfrequenz f_{18-I} des Schwingungsmode erster Art meßbaren - Eigenfrequenz jedes anderen der Rohranordnung immanenten, vom Schwingungsmode erster Art allerdings verschiedenen Schwingungsmodes verschieden ist, beispielsweise um mehr als 10Hz abweicht.

Die Erregeranordnung ist gemäß einer weiteren Ausgestaltung der Erfindung daher derart ausgebildet, daß damit das erste Meßrohr 18₁ und das zweite Meßrohr 18₂ im Betrieb zu gegengleichen Biegeschwingungen und das dritte Meßrohr 18₃ und das vierte Meßrohr 18₄ im Betrieb gegengleiche Biegeschwingungen anregbar sind, insb. auch dem Schwingungsmode erster Art entsprechenden Biegeschwingungen auf deren momentaner Resonanzfrequenz f_{18-I} bzw. dem Schwingungsmode zweiter Art entsprechenden Biegeschwingungen auf deren momentaner Resonanzfrequenz f_{18-I}, letztere Biegeschwingungen ggf. auch simultan mit den dem Schwingungsmode erster Art entsprechenden Biegeschwingungen.

Gemäß der Erfindung ist die Erregeranordnung 5, nicht zuletzt auch zwecks Anregung von gegengleichen Biegeschwingungen des ersten und zweiten Meßrohrs und/oder des dritten und vierten Meßrohrs, mittels eines differentiell auf das erste Meßrohr 18₁ und das zweite Meßrohr 18₂ wirkenden ersten Schwingungserregers 5₁ gebildet. Ferner ist nach einer weiteren Ausgestaltung vorgesehen, daß als erster Schwingungserreger 5₁ ein differentiell auf wenigstens - hier jeweils genau - zwei der Meßrohre wirkender Schwingungserreger vom elektrodynamischen Typ dient. Dementsprechend ist der erster Schwingungserreger 5₁ nach einer weiteren Ausgestaltung der Erfindung ferner mittels eines am ersten Meßrohr gehalterten Permanentmagneten und einer von dessen Magnetfeld durchfluteten, am zweiten Meßrohr gehalterten Zylinderspule gebildet, insb. nach Art einer Tauchspulenanordnung, bei der die Zylinderspule koaxial zum Permanentmagneten angeordnet und dieser als innerhalb der Spule bewegter Tauchanker ausgebildet ist. Zwecks Erhöhung des Wirkungsgrades der Erregeranordnung bzw. zwecks der Erhöhung der damit generierten Erregerkräfte bei gleichzeitig möglichst symmetrischem Aufbau umfaßt die Erregeranordnung gemäß der Erfindung ferner einen, insb. elektrodynamischen, differentiell auf das dritte Meßrohrs 18₃ und das vierte Meßrohr 18₄ wirkenden zweiten Schwingungserreger 5₂. Der zweite Schwingungserreger 5₂ ist in vorteilhafter Weise zumindest insoweit baugleich zum ersten Schwingungserreger 5₁ ausgebildet, als er analog zu dessen Wirkprinzip arbeitet, beispielsweise also ebenfalls vom elektrodynamischen Typ ist. Gemäß einer weiteren Ausgestaltung ist der zweite Schwingungserreger 5₂ daher mittels eines am dritten Meßrohr gehalterten Permanentmagneten und einer von dessen Magnetfeld durchfluteten, am vierten Meßrohr gehalterten Zylinderspule gebildet. Die beiden Schwingungserreger 5₁, 5₂ der

Erregeranordnung 5 können in vorteilhafter Weise elektrisch seriell verschaltet sind, insb. derart, daß ein gemeinsames Treibersignal gemeinsamem mithin simultane Schwingungen der Meßrohre 18₁, 18₃, 18₂, 18₄ anregt, etwa Biegeschwingungen im Schwingungsmode erster Art oder zweiter Art. Nicht zuletzt für den zuvor erwähnten Fall, daß sowohl Biegeschwingungen im Schwingungsmode erster Art als auch Biegeschwingungen im Schwingungsmode zweiter Art mittels der beiden Schwingungserreger 5₁, 5₂ aktiv angeregt werden sollen, kann es von Vorteil sein, die Schwingungserreger 5₁, 5₂ so zu dimensionieren und so an der Rohranordnung anzubringen, daß im Ergebnis ein Übertragungsfaktor des ersten Schwingungserregers 5₁, definiert durch ein Verhältnis von darin eingespeister elektrischer Erregerleistung zu einer damit erzeugten Schwingungen der Meßrohre bewirkende Erregerkraft, zumindest innerhalb eines den Schwingungsmode erster Art und den Schwingungsmode zweiter Art umfassenden Frequenzbandes von einem Übertragungsfaktor des zweiten Schwingungserregers 5₁, definiert durch ein Verhältnis von darin eingespeister elektrischer Erregerleistung zu einer damit erzeugten Schwingungen der Meßrohre bewirkende Erregerkraft, verschieden ist, etwa derart, daß nämliche Übertragungsfaktoren um 10% oder mehr voneinander abweichen. Dies ermöglicht beispielsweise auch eine getrennte Anregung des Schwingungsmodes erster bzw. zweiter Art, nicht zuletzt auch bei serieller Verschaltung der beiden Schwingungserreger 5₁, 5₂ und/oder Speisung der beiden Schwingungserreger 5₁, 5₂ mit einem einzigen gemeinsamen Treibersignal, und kann im Falle elektrodynamischer Schwingungserreger 5₁, 5₂ z.B. durch Verwendung von Zylinderspulen mit verschieden Impedanzen bzw. unterschiedlichen Windungszahlen und/oder von unterschiedlich dimensionierten bzw. aus unterschiedlichen magnetischen Materialien bestehenden Permanentmagneten auf sehr einfache Weise erreicht werden. Es sei an dieser Stelle zudem ferner noch erwähnt, daß, obgleich der bzw. die Schwingungserreger der im Ausführungsbeispiel gezeigten Erregeranordnung jeweils etwa mittig an den jeweiligen Meßrohren angreifen, alternativ oder in Ergänzung auch eher ein- und auslaßseitig an das jeweilige Meßrohr angreifende Schwingungserreger verwendet werden können, etwa nach Art der in der US-A 48 23 614, US-A 48 31 885, oder der US-A 2003/0070495 vorgeschlagenen Erregeranordnungen.

Zwecks einer weiteren Verbesserung der Wirkung der Erregeranordnung ist diese gemäß der Erfindung ferner auch mittels eines dem Konvertieren von mittels der Umformer-Elektronik in die Erregeranordnung eingespeister elektrischer Erregerleistung in Biegeschwingungen der Meßrohre bewirkende mechanische Erregerkräfte differentiell auf das fünfte und siebente Meßrohr wirkenden, beispielsweise elektro-dynamischen und zum ersten Schwingungserreger baugleichen, dritten Schwingungserreger 5₃ bzw. mittels eines differentiell auf das sechste und achte Meßrohr wirkenden, beispielsweise elektro-dynamischen und zum ersten Schwingungserreger baugleichen, vierten Schwingungserreger 5₄ gebildet. Auch der dritte und vierte Schwingungserreger können, wie der erste Schwingungserreger, mittels eines am an einem der Meßrohre gehalterten Permanentmagneten und einer von dessen Magnetfeld durchfluteten, am gegenüberliegenden anderen Meßrohr gehalterten Zylinderspule gebildet bzw. auch miteinander und/oder mit dem ersten Schwingungserreger elektrisch seriell verschaltet sein,

Wie aus den Fig. 3a, 3b, 4a, 4b, 4c, 4d, bzw. 5 jeweils ersichtlich und bei Meßaufnehmern der in Rede stehenden Art üblich, ist im Meßaufnehmer 11 ferner eine auf, insb. einlaß- bzw. auslaßseitige, Vibrationen, insb. mittels der Erregeranordnung 5 angeregte Biegeschwingungen, der Meßrohre reagierende, beispielsweise elektro-dynamische, Sensoranordnung 19 zum Erzeugen von Vibrationen, insb. Biegeschwingungen, der Meßrohre repräsentierenden Schwingungssignalen vorgesehen, die beispielsweise hinsichtlich einer Frequenz, einer Signalamplitude und/oder einer Phasenlage - relativ zueinander und/oder relativ zum Treibersignal - von der von der zu erfassenden Meßgröße, wie etwa der Massendurchflußrate und/oder der Dichte bzw. einer Viskosität des Mediums, mit beeinflußt sind.

Gemäß einer weiteren Ausgestaltung der Erfindung ist die Sensoranordnung mittels eines, insb. elektrodynamischen und/oder zumindest Schwingungen des ersten Meßrohrs 18₁ relativ zum zweiten Meßrohr 18₂ differentiell erfassenden, einlaßseitigen ersten Schwingungssensors 19₁ sowie eines, insb. elektrodynamischen und/oder zumindest Schwingungen des ersten Meßrohrs 18₁ relativ zum zweiten Meßrohr 18₂ differentiell erfassenden, auslaßseitigen zweiten Schwingungssensors 19₂ gebildet, welche beiden Schwingungssensoren jeweils auf Bewegungen der Meßrohre 18₁, 18₂, 18₃, 18₄, insb. deren laterale Auslenkungen und/oder Verformungen, reagierend, ein erstes bzw. zweites Schwingungssignal liefern. Dies im besonderen in der Weise, daß wenigstens zwei der von der Sensoranordnung 19 gelieferten Schwingungssignale eine gegenseitige Phasenverschiebung aufweisen, die mit der momentanen Massendurchflußrate des durch die Meßrohre hindurchströmenden Mediums korrespondiert bzw. davon abhängig ist, sowie jeweils eine Signalfrequenz aufweisen, die von einer momentanen Dichte des in den Meßrohren strömenden Mediums abhängig sind. Die beiden, beispielsweise einander baugleichen, Schwingungssensoren 19₁. 19₂ können dafür - wie bei Meßaufnehmern der in Rede stehenden Art durchaus üblich - im wesentlichen äquidistant zum ersten Schwingungserreger 5₁ im Meßaufnehmer 11 plaziert sein. Überdies können die Schwingungssensoren der Sensoranordnung 19 zumindest insoweit baugleich zu wenigstens einem der Schwingungserreger der Erregeranordnung 5 ausgebildet sein, als sie analog zu dessen Wirkprinzip arbeiten, beispielsweise also ebenfalls vom elektrodynamischen Typ sind. Gemäß einer Weiterbildung der Erfindung ist die Sensoranordnung 19 zudem auch mittels eines, insb. elektrodynamischen und/oder Schwingungen des dritten Meßrohrs 18₃ relativ zum vierten Meßrohr 18₄ differentiell erfassenden, einlaßseitigen dritten Schwingungssensors 19₃ sowie eines, insb. elektrodynamischen und/oder Schwingungen des dritten Meßrohrs 18₃ relativ zum vierten Meßrohr 18₄ differentiell erfassenden, auslaßseitigen vierten Schwingungssensors 19₄ gebildet. Zur weiteren Verbesserung der Signalqualität wie auch zur Vereinfachung der die Meßsignale empfangenden Umformer-Elektronik 12 können desweiteren der erste und dritte Schwingungssensor 19₁, 19₃ elektrisch seriell verschaltet sein, beispielsweise derart, daß ein gemeinsames Schwingungssignal gemeinsame einlaßseitige Schwingungen des ersten und dritten Meßrohrs 18₁, 18₃ relativ zum zweiten und vierten Meßrohr 18₂, 18₄ repräsentiert. Alternativ oder in Ergänzung können auch der zweite und vierte Schwingungssensor 19₂, 19₄ derart elektrisch seriell verschaltet sein, daß ein gemeinsames Schwingungssignal beider Schwingungssensoren 19₂, 19₄ gemeinsame auslaßseitige Schwingungen des ersten und dritten Meßrohrs 18₁, 18₃ relativ zum zweiten und vierten Meßrohr 18₂, 18₄ repräsentiert.
Nach einer weiteren Ausgestaltung der Erfindung ist die Sensoranordnung 19 zwecks weitere Verbesserung der Qualität der von Sensoranordnung 19 gelieferten Schwingungssignale ferner mittels eines - beispielsweise elektrodynamischen und/oder Schwingungen des fünften Meßrohrs 18₅ relativ zum sechsten Meßrohr 18₆ differentiell erfassenden und/oder mit dem ersten Schwingungssensor 19₁ elektrisch seriell verschalteten - einlaßseitigen fünften Schwingungssensors 19₅ sowie eines - beispielsweise elektrodynamischen und/oder Schwingungen des fünften Meßrohrs 18₅ relativ zum sechsten Meßrohr 18₆ differentiell erfassenden und/oder mit dem zweiten Schwingungssensor 19₂ elektrisch seriell verschalteten - auslaßseitigen sechsten Schwingungssensors 19₆ gebildet. In Ergänzung kann die Sensoranordnung 19 in vorteilhafter Weise desweiteren zusätzlich mittels eines - beispielsweise elektrodynamischen und/oder Schwingungen des siebenten Meßrohrs 18₇ relativ zum achten Meßrohr 18₈ differentiell erfassenden und/oder mit dem ersten Schwingungssensor 19₁ elektrisch seriell verschalteten - einlaßseitigen siebenten Schwingungssensors 19₇ sowie eines- beispielsweise elektrodynamischen und/oder Schwingungen des siebenten Meßrohrs 18₇ relativ zum achten Meßrohr 18₈ differentiell erfassenden und/oder mit dem zweiten Schwingungssensor 19₂ elektrisch seriell verschalteten - auslaßseitigen achten Schwingungssensors 19₈ gebildet sein.

Für den vorgenannten Fall, daß die, insb. einander baugleichen, Schwingungssensoren der Sensoranordnung 19 Schwingungen der Meßrohre differentiell und elektrodynamisch erfassen sollen, sind der erste Schwingungssensor 19₁ mittels eines - hier im Bereich einlaßseitig zu erfassender Schwingungen - am ersten Meßrohr gehalterten Permanentmagneten und einer von dessen Magnetfeld durchfluteten, am zweiten Meßrohr - hier entsprechend ebenfalls im Bereich einlaßseitig zu erfassender Schwingungen - gehalterten Zylinderspule, und der zweite Schwingungssensor 19₂ mittels eines - im Bereich auslaßseitig zu erfassender Schwingungen - am ersten Meßrohr gehalterten Permanentmagneten und einer von dessen Magnetfeld durchfluteten, am zweiten Meßrohr gehalterten - hier entsprechend ebenfalls im Bereich auslaßseitig zu erfassender Schwingungen - Zylinderspule gebildet. Gleichermaßen können zudem auch der ggf. vorgesehene dritte Schwingungssensor 19₃ entsprechend mittels eines am dritten Meßrohr gehalterten Permanentmagneten und einer von dessen Magnetfeld durchfluteten, am vierten Meßrohr gehalterten Zylinderspule, und der ggf. vorgesehene vierte Schwingungssensor 19₄ mittels eines am dritten Meßrohr gehalterten Permanentmagneten und einer von dessen Magnetfeld durchfluteten, am vierten Meßrohr gehalterten Zylinderspule gebildet sein bzw. der ggf. vorgesehene fünfte und sechste Schwingungssensor 19₅, 19₆ entsprechend jeweils mittels eines am fünften Meßrohr gehalterten Permanentmagneten und einer von dessen Magnetfeld durchfluteten, am siebenten Meßrohr gehalterten Zylinderspule, und der ggf. vorgesehene siebente und achte Schwingungssensor 19₇, 19₈ jeweils mittels eines am sechsten Meßrohr gehalterten Permanentmagneten und einer von dessen Magnetfeld durchfluteten, am achten Meßrohr gehalterten Zylinderspule gebildet sein.

Es sei an dieser Stelle zudem noch angemerkt, daß, obgleich es sich bei den Schwingungssensoren der im Ausführungsbeispiel gezeigten Sensoranordnung 19 jeweils um solche vom elektrodynamischen Typ, also jeweils mittels einer an einem der Meßrohre fixierten zylindrischen Magnetspule und einem darin eintauchenden, an einem gegenüberliegenden Meßrohr entsprechend fixierten Permanentmagneten realisierte Schwingungssensoren, handelt, ferner auch andere dem Fachmann bekannte, wie z.B. opto-elektronische, Schwingungssensoren zur Bildung der Sensoranordnung verwendet werden können. Desweiteren können, wie bei Meßaufnehmern der in Rede stehenden Art durchaus üblich, zusätzlich zu den Schwingungssensoren weitere, insb. Hilfs- bzw. Störgrößen erfassende, Sensoren im Meßaufnehmer vorgesehen sein, wie z.B. Beschleunigungssensoren zum Erfassen von durch äußere Kräfte und/oder Asymmetrien in der Rohranordnung verursachte Bewegungen des gesamten Meßsystems, Dehnungsmeßstreifen zum Erfassen von Dehnungen eines oder mehrerer der Meßrohre und/oder des Aufnehmergehäuses, Drucksensoren zum Erfassen eines im Aufnehmergehäuse herrschenden statischen Drucks und/oder Temperatursensoren zum Erfassen von Temperaturen eines oder mehrerer der Meßrohre und/oder des Aufnehmergehäuses, mittels denen beispielsweise die Funktionstüchtigkeit des Meßaufnehmers und/oder Änderungen der Empfindlichkeit des Meßsaufnehmers auf die primär zu erfassenden Meßgrößen, insb. die Massendurchflußrate und/oder die Dichte, infolge von Querempfindlichkeiten bzw. äußeren Störungen überwacht und ggf. entsprechend kompensiert werden können. Zur Gewährleistung einer möglichst hohen Empfindlichkeit des Meßaufnehmers auf den Massendurchfluß sind nach einer weiteren Ausgestaltung der Erfindung die Meßrohre und die Schwingungssensoren so im Meßaufnehmer angeordnet, daß eine einem entlang einer Biegelinie des ersten Meßrohrs gemessenen Abstand zwischen dem ersten Schwingungssensor 19₁ und dem zweite Schwingungssensor 19₂ entsprechende Meßlänge, L₁₉, des Meßaufnehmers mehr als 500 mm, insb. mehr als 600 mm, beträgt. Nicht zuletzt zur Schaffung eines möglichst kompakten, dennoch aber für den Massendurchfluß möglichst empfindlichen Meßaufnehmers sind nach einer weiteren Ausgestaltung der Erfindung die Schwingungssensoren 19₁, 19₂, abgestimmt auf die Einbaulänge L₁₁ des Meßaufnehmers, so im Meßaufnehmer angeordnet, daß ein Meßlänge-zu-Einbaulänge-Verhältnis L_{19/}L₁₁ des Meßaufnehmers, welches durch ein Verhältnis der Meßlänge zur Einbaulänge des Meßaufnehmers definiert ist, mehr als 0.3, insb. mehr als 0.4 und/oder weniger als 0.7, beträgt. Alternativ oder in Ergänzung sind die Schwingungssensoren nach einer weiteren Ausgestaltung der Erfindung, abgestimmt auf die Meßrohre, so im Meßaufnehmer plaziert, daß ein Kaliber-zu-Meßlänge-Verhältnis D₁₈/L₁₉, des Meßaufnehmers, welches durch ein Verhältnis des Kalibers D₁₈ des ersten Meßrohrs zur erwähnten Meßlänge L₁₉ des Meßaufnehmers definiert ist, mehr als 0.05, insb. mehr als 0.09, beträgt.

Die Sensoranordnung 19 ist ferner, wie bei derartigen Meßaufnehmern üblich, in geeigneter Weise mit einer in der Umformer-Elektronik entsprechend vorgesehenen, beispielsweise mittels wenigstens einem Mikroprozessors und/oder mittels wenigstens einem digitalen Signalprozessor gebildete, Meßschaltung gekoppelt, beispielsweise drahtgebunden via Verbindungsleitungen. Die Meßschaltung empfängt die Schwingungssignale der Sensoranordnung 19 und generiert daraus, ggf. auch unter Berücksichtung mittels des wenigstens einen Treibersignals in die Erregeranordnung eingespeister, mithin auch darin umgesetzter elektrischer Erregerleistung, die eingangs erwähnten Meßwerte, die beispielsweise eine Massedurchflußrate, einen totalisierten Massendurchfluß und/oder eine Dichte und/oder eine Viskosität des zu messenden Mediums repräsentieren können, und die ggf. vor Ort angezeigt und/oder auch an ein dem Meßsystem übergeordnetes Datenverarbeitungssystem inform digitaler Meßdaten gesendet und daselbst entsprechend weiterverarbeitet werden können. Im besonderen ist die Meßschaltung, mithin die damit gebildte Umformer-Elektronik ferner dafür vorgesehen und ausgelegt, anhand von in der Erregeranordnung umgesetzter elektrischer Erregerleistung, beispielsweise periodisch wiederkehrend und/oder auf Abruf, einen die Viskosität des strömenden Mediums repräsentierenden Viskosität-Meßwert zu generieren und/oder anhand von vom Meßaufnehmer gelieferten Schwingungssignalen, beispielsweise periodisch wiederkehrend und/oder auf Abruf, einen die Massendurchflußrate des strömenden Mediums repräsentierenden Massendurchfluß-Meßwert und/oder, beispielsweise periodisch wiederkehrend und/oder auf Abruf, einen die Dichte des strömenden Mediums repräsentierenden Dichte-Meßwert zu generieren.

Die oben erwähnte Verwendung differentiell wirkender Schwingungserreger bzw. Schwingungssensoren birgt dabei u.a. auch den Vorteil, daß zum Betreiben des erfindungsgemäßen Meßaufnehmers auch solche etablierten Meß- und Betriebsschaltungen verwendet werden können, wie sie beispielsweise bereits in herkömmlichen Coriolis-Massedurchfluß-/ Dichtemeßgeräten breite Anwendung gefunden haben.

Die Umformer-Elektronik 12, einschließlich der darin realisierten Meß- und Betriebsschaltung, kann desweiteren beispielsweise in einem separaten Elektronik-Gehäuse 7₂ untergebracht sein, das vom Meßaufnehmer entfernt angeordnet oder, wie in Fig. 1 gezeigt, unter Bildung eines einzigen Kompaktgeräts direkt am Meßaufnehmer 1, beispielsweise von außen am Aufnehmer-Gehäuse 7₁, fixiert ist. Bei dem hier gezeigten Ausführungsbeispiel ist daher am Aufnehmer-Gehäuse 7₁ ferner ein dem Haltern des Elektronik-Gehäuses 7₂ dienendes halsartiges Übergangsstücks angebracht. Innerhalb des Übergangsstücks kann ferner eine, beispielsweise mittels Glas- und/oder Kunststoffverguß hergestellte, hermetisch dichte und/oder druckfeste Durchführung für die elektrische Verbindungsleitungen zwischen Meßaufnehmer 11, insb. den darin plazierten Schwingungserregern und Sensoren, und der erwähnten Umformer-Elektronik 12 angeordnet sein.

Wie bereits mehrfach erwähnt ist das In-Line-Meßgerät und insoweit auch der Meßaufnehmer 11 im besonderen für Messungen auch hoher Massendurchflüsse von mehr als 1000 t/h in einer Rohrleitung von großem Kaliber von mehr als 250 mm vorgesehen. Dem Rechnung tragend ist nach einer weiteren Ausgestaltung der Erfindung die nominellen Nennweite des Meßaufnehmers 11, die wie bereits erwähnt einem Kaliber der Rohrleitung, in deren Verlauf der Meßaufnehmer 11 einzusetzen ist, entspricht, so gewählt, daß sie mehr als 50 mm beträgt, insb. aber größer als 100 mm ist. Ferner ist nach einer weiteren Ausgestaltung des Meßaufnehmers vorgesehen, daß jedes der Meßrohre 18₁, 18₂, 18₃, 18₄ jeweils ein einem jeweiligen Rohr-Innendurchmesser entsprechendes Kaliber D₁₈ aufweist, das mehr als 40 mm beträgt. Im besonderen sind die Meßrohre 18₁, 18₂, 18₃, 18₄ ferner so ausgebildet, das jedes ein Kaliber D₁₈ von mehr als 60 mm aufweist. Alternativ oder in Ergänzung dazu sind die Meßrohre 18₁, 18₂, 18₃, 18₄ nach einer anderen Ausgestaltung der Erfindung ferner so bemessen, daß sie jeweils eine Meßrohrlänge L₁₈ von wenigstens 1000 mm aufweisen. Die Meßrohrlänge L₁₈ entspricht im hier gezeigten Ausführungsbeispiel mit gleichlangen Meßrohren 18₁, 18₂, 18₃, 18₄ jeweils einer Länge eines zwischen der ersten Strömungsöffnung des ersten Strömungsteilers und der ersten Strömungsöffnung des zweiten Strömungsteilers verlaufenden Abschnitts der Biegelinie des ersten Meßrohrs. Im besonderen sind die Meßrohre 18₁, 18₂, 18₃, 18₄ dabei so ausgelegt, daß deren Meßrohrlänge L₁₈ jeweils größer als 1200 mm ist. Dementsprechend ergibt sich zumindest für den erwähnten Fall, daß die Meßrohre 18₁, 18₂, 18₃, 18₄ aus Stahl bestehen, bei den üblicherweise verwendeten Wandstärken von über 1 mm eine Masse von jeweils wenigstens 20 kg, insb. mehr als 30 kg, aufweist. Ferner ist aber angestrebt, die Leermasse jedes der Meßrohre 18₁, 18₂, 18₃, 18₄ kleiner als 50 kg zu halten.

In Anbetracht dessen, daß, wie bereits erwähnt, jedes der Meßrohre 18₁, 18₂, 18₃, 18₄ bei erfindungsgemäßen Meßaufnehmer durchaus weit über 20 kg wiegen und dabei, wie aus den obigen Maßangaben ohne weiteres ersichtlich, ein Fassungsvermögen von durchaus 10 I oder mehr haben kann, kann dann die die vier Meßrohre 18₁, 18₂, 18₃, 18₄ umfassende Rohranordnung zumindest bei hindurchströmendem Medium mit hoher Dichte eine Gesamt-Masse von weit über 80 kg erreichen. Besonders bei der Verwendung von Meßrohren mit vergleichsweise großem Kaliber D₁₈, großer Wandstärke und großer Meßrohrlänge L₁₈ kann die Masse der von den Meßrohren 18₁, 18₂, 18₃, 18₄ gebildeten Rohranordnung ohne weiteres aber auch größer als 100 kg oder zumindest mit hindurchströmendem Medium, z.B. Öl oder Wasser, mehr als 120 kg betragen. Infolgedessen beträgt eine Leermasse M₁₁ des Meßaufnehmers insgesamt auch weit mehr als 200 kg, bei nominellen Nennweiten D₁₁ von wesentlich größer als 250 mm sogar mehr als 300 kg. Im Ergebnis kann beim erfindungsgemäßen Meßaufnehmer ein Massenverhältnis M₁₁/M₁₈ einer Leermasse M₁₁ des gesamten Meßaufnehmers zu einer Leermasse M₁₈ des ersten Meßrohrs durchaus größer als 10, insb. größer als 15, sein. Um bei den erwähnten hohen Leermassen M₁₁ des Meßaufnehmers das dafür insgesamt verwendete Material möglichst optimal einzusetzen und insoweit das - zumeist auch sehr teure - Material insgesamt möglichst effizient zu nutzen, ist gemäß einer weiteren Ausgestaltung die nominelle Nennweite D₁₁ des Meßaufnehmers abgestimmt auf dessen Leermasse M₁₁ so bemessen, daß ein Masse-zu-Nennweite-Verhältnis M₁₁/ D₁₁ des Meßaufnehmers 11, definiert durch ein Verhältnis der Leermasse M₁₁ des Meßaufnehmers 11 zur nominellen Nennweite D₁₁ des Meßaufnehmers 11 kleiner als 2 kg/mm, insb. möglichst aber kleiner als 1 kg/mm ist. Um eine ausreichend hohe Stabilität des Meßaufnehmers 11 zu gewährleisten, ist das Masse-zu-Nennweite-Verhältnis M₁₁/ D₁₁ des Meßaufnehmers 11 zumindest im Falle des Verwendens der oben erwähnten herkömmlichen Materialien jedoch möglichst größer als 0.5 kg/mm zu wählen. Ferner ist gemäß einer weiteren Ausgestaltung der Erfindung zur weiteren Verbesserung der Effizienz des eingesetzten Materials vorgesehen, das erwähnte Massenverhältnis M₁₁/M₁₈ kleiner als 25 zu halten. Zur Schaffung eines dennoch möglichst kompakten Meßaufnehmers von ausreichend hoher Schwingungsgüte und möglichst geringem Druckabfall sind nach einer weiteren Ausgestaltung der Erfindung die Meßrohre, abgestimmt auf die oben erwähnte Einbaulänge L₁₁ des Meßaufnehmers 11, so bemessen, daß ein Kaliber-zu-Einbaulänge-Verhältnis D₁₈/L₁₁ des Meßaufnehmers, definiert durch ein Verhältnis des Kalibers D₁₈ zumindest des ersten Meßrohrs zur Einbaulänge L₁₁ des Meßaufnehmers 11, mehr als 0.02, insb. mehr als 0.05 und/oder weniger als 0.09, insb. weniger als 0.07, beträgt. Alternativ oder in Ergänzung sind die Meßrohre 18₁, 18₂, 18₃, 18₄, abgestimmt auf die oben erwähnte Einbaulänge L₁₁ des Meßaufnehmers, so bemessen, daß ein Meßrohrlänge-zu-Einbaulänge-Verhältnis L₁₈/L₁₁ des Meßaufnehmers, definiert durch ein Verhältnis der oben bezeichnten Meßrohrlänge L₁₈ zumindest des ersten Meßrohrs zur Einbaulänge L₁₁ des Meßaufnehmers, mehr als 0.7, insb. mehr als 0.8 und/oder weniger als 1.2, beträgt.

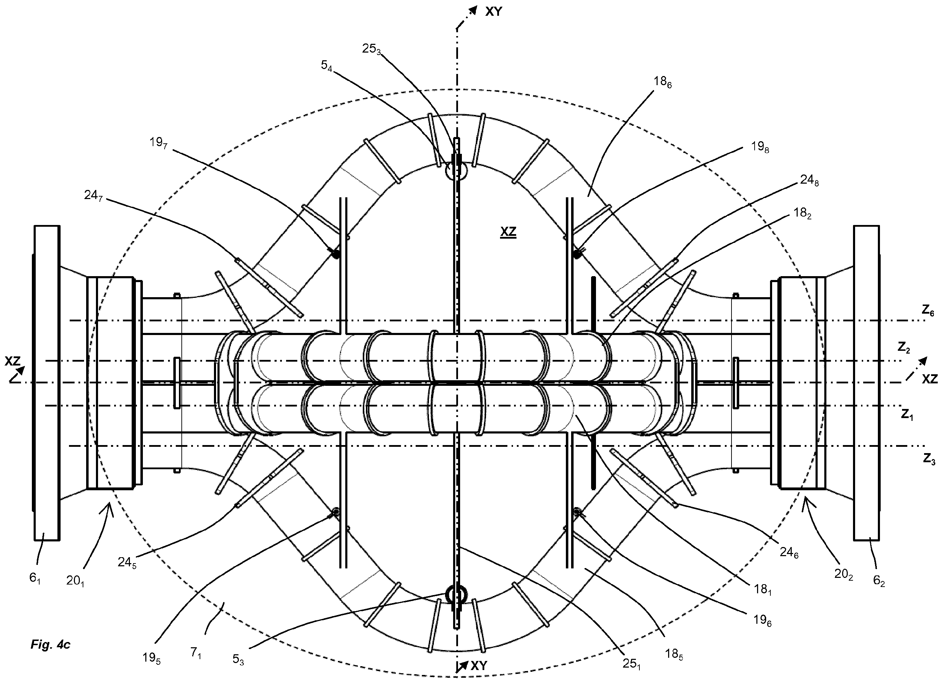

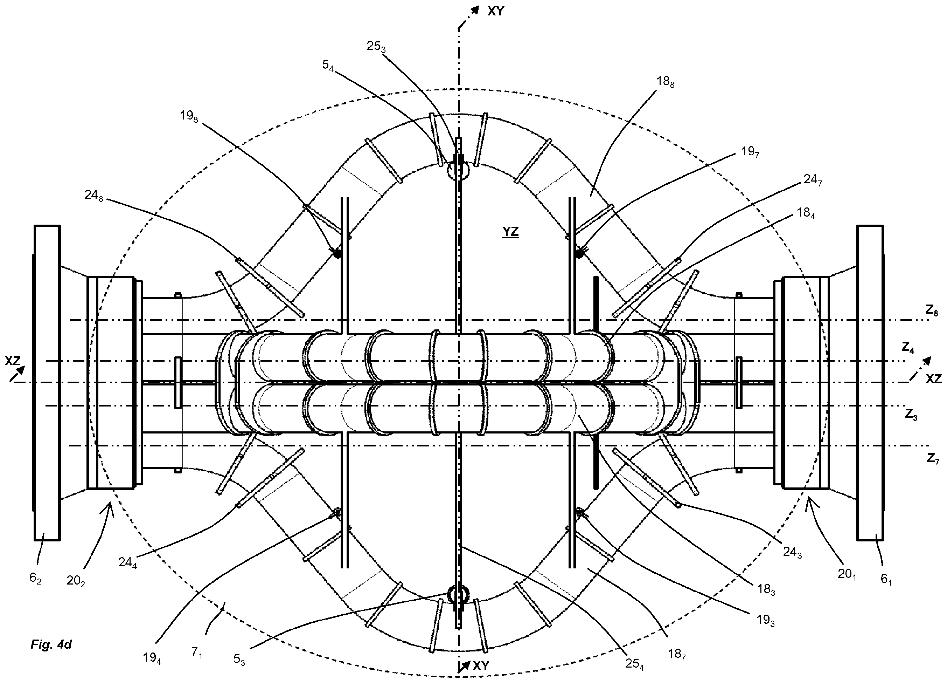

Gemäß einer weiteren Ausgestaltung der Erfindung umfaßt die Rohranordnung zum Einstellen von Eigenfrequenzen natürlicher, nicht zuletzt auch für die Generierung von Corioliskräften im durch die Meßrohre strömenden Medium und/oder für die Messung einer Massendurchflußrate des durch die Meßrohre strömenden Mediums nutzbarer, Schwingungsmoden der Rohranordnung und/oder zum Bilden von ein- bzw. auslaßseitigen Schwingungsknoten für Vibrationen der Meßrohre ein, beispielsweise plattenförmiges, erstes Kopplerelement 24₁ erster Art, das - wie aus den Fig. 3b, 4a, 4b, 5 ohne weiteres ersichtlich vom ersten Strömungsteiler beabstandet, einlaßseitig am ersten Meßrohr und am zweiten Meßrohr fixiert ist, sowie ein, etwa zum ersten Kopplerelement erster Art baugleiches, zweites Kopplerelement 24₂ erster Art vom zweiten Strömungsteiler 20₂ beabstandet, auslaßseitig am ersten Meßrohr 18₁ und am zweiten Meßrohr 18₂ fixiert ist. Gleichermaßen weist die Rohranordnung ein, etwa wiederum plattenförmiges bzw. zum ersten Kopplerelement 24₁ erster Art baugleiches, drittes Kopplerelement 24₃ erster Art, das, vom ersten Strömungsteiler beabstandet einlaßseitig, am dritten Meßrohr und am vierten Meßrohr fixiert ist, sowie ein, etwa zum ersten Kopplerelement 24₁ erster Art baugleiches, viertes Kopplerelement 24₄ erster Art, das vom zweiten Strömungsteiler beabstandet, auslaßseitig auch am dritten Meßrohr und am vierten Meßrohr fixiert ist, auf. Gleichermaßen wie die Meßrohre 18₁, 18₂, 18₃, 18₄ sind zudem auch die anderen vier Meßrohre 18₅, 18₆, 18₇, 18₈ - wie auch aus der Zusammenschau der Fig. 3a, 3b, 4a, 4b, 4c, 4d ersichtlich - mittels entsprechender Kopplerelemente erster Art miteinander gekoppelt, nämlich das fünfte Meßrohr und siebente Meßrohr einlaßseitig mittels eines einlaßseitig daran fixierten, vom ersten Strömungsteiler beabstandeten - etwa zum ersten Kopplerelement 24₁ erster Art baugleichen bzw. plattenförmigen - fünften Kopplerelement 24₅ erster Art und mittels eines auslaßseitig daran fixierten, vom zweiten Strömungsteiler beabstandeten - etwa zum ersten Kopplerelement 24₁ erster Art baugleichen bzw. plattenförmigen - sechsten Kopplerelement 24₆ erster Art sowie das sechste Meßrohr und achte Meßrohr einlaßseitig mittels eines einlaßseitig daran fixierten, vom ersten Strömungsteiler beabstandeten - etwa zum ersten Kopplerelement 24₁ erster Art baugleichen bzw. plattenförmigen - siebenten Kopplerelement 24₇ erster Art und mittels eines auslaßseitig daran fixierten, vom zweiten Strömungsteiler beabstandeten - etwa zum ersten Kopplerelement 24₁ erster Art baugleichen bzw. plattenförmigen - achten Kopplerelement 24₈ erster Art. Dies im besonderen in der Weise, daß - wie aus den Fig. 4a, 4b, 4c, bzw. 4d ersichtlich - zumindest das erste und vierte Kopplerelement erster Art zueinander, das zweite und dritte Kopplerelement erster Art zueinander, das fünfte und achte Kopplerelement erster Art zueinander sowie das sechste und siebente Kopplerelement erster Art zueinander jeweils parallel sind.

Wie aus der Zusammenschau der Fig. 3a, 3b, 4a, 4b, 4c, 4d ferner ersichtlich sind das erste Kopplerelement 24₁ erster Art sowohl an einem sich zwischen dem ersten Strömungsteiler 20₁ und dem ersten Schwingungssensor 19₁ erstreckenden - hier abschnittsweise gebogenen - einlaßseitigen Rohrsegment des ersten Meßrohrs 18₁ als auch an einem sich gleichermaßen zwischen dem ersten Strömungsteiler 20₁ und dem ersten Schwingungssensor 19₁ erstreckenden einlaßseitigen Rohrsegment des zweiten Meßrohrs 18₂ und das zweite Kopplerelement 25₂ erster Art sowohl an einem sich zwischen dem zweiten Strömungsteiler 20₂ und dem zweiten Schwingungssensor 19₂ erstreckenden - hier ebenfalls abschnittsweise gebogenen - auslaßseitigen Rohrsegment des ersten Meßrohrs 18₁ als auch an einem sich gleichermaßen zwischen dem zweiten Strömungsteiler 20₂ und dem zweiten Schwingungssensor 19₂ erstreckenden auslaßseitigen Rohrsegment des zweiten Meßrohrs 18₂ fixiert. In analoger Weise sind das dritte Kopplerelement 24₃ erster Art sowohl an einem sich zwischen dem ersten Strömungsteiler 20₁ und dem dritten Schwingungssensor 19₃ erstreckenden - hier ebenfalls abschnittsweise gebogenen - einlaßseitigen Rohrsegment des dritten Meßrohrs 18₃ als auch an einem sich gleichermaßen zwischen dem ersten Strömungsteiler 20₁ und dem dritten Schwingungssensor 19₃ erstreckenden einlaßseitigen Rohrsegment des vierten Meßrohrs 18₄ und das vierte Kopplerelement 25₄ erster Art sowohl an einem sich zwischen dem zweiten Strömungsteiler 20₂ und dem vierten Schwingungssensor 19₄ erstreckenden - hier wiederum abschnittsweise gebogenen - auslaßseitigen Rohrsegment des dritten Meßrohrs 18₃ als auch an einem sich gleichermaßen zwischen dem zweiten Strömungsteiler 20₂ und dem vierten Schwingungssensor 19₄ erstreckenden auslaßseitigen Rohrsegment des vierten Meßrohrs 18₄ fixiert.

Jedes der achte vorgenannten, insb. einander baugleichen, Kopplerelemente 25₁, 25₂ erster Art ist gemäß einer weiteren Ausgestaltung der Erfindung zudem plattenförmig ausgebildet, beispielsweise in derart, daß es jeweils eine rechteckförmige, oder aber daß es jeweils, wie auch aus den Fig. 3a, 3b ersichtlich, eine eher ovale Grundfläche aufweist. Die praktisch als Knotenplatten für Schwingungsknoten dienenden Kopplerelemente erster Art können demnach beispielsweise dünne, insb. aus demselben oder einem ähnlichen Material wie die Meßrohre gefertigte, Stanzteile sein, die jeweils mit der Anzahl und den Außenmaßen der miteinander zu koppelnden Meßrohre entsprechenden, ggf. zusätzlich noch zum Rand hin geschlitzten, Bohrungen versehen sind, so daß nämliche Stanzteile zunächst auf die jeweiligen Meßrohre 18₁, 18₂ bzw. 18₃ bzw. 18₄ aufgeklemmt und ggf. hernach noch mit dem jeweiligen Meßrohr, beispielsweise durch Hartverlöten oder Schweißen, stoffschlüssig verbunden werden können.

Wie aus der Zusammenschau der Fig. 3a, 3b, 4a, 4b, 4c, 4d ferner ersichtlich, können die Kopplerelemente erster Art ferner so ausgebildet und im Meßaufnehmer so plaziert sein, daß sie bezüglich der gedachten Längsschnittebene YZ symmetrisch sind und daß sie bezüglich der gedachten Längsschnittebene XZ und bezüglich der gedachten Querschnittsebene XY paarweise symmetrisch angeordnet sind, im Ergebnis also ein Massenschwerpunkt jedes der acht Kopplerelemente erster Art jeweils einen gleichen Abstand zu einem Massenschwerpunkt der Rohranordnung aufweist.

In Anbetracht dessen, daß mittels solcher Kopplerelemente erster Art, sei es durch deren Dimensionierung und/oder deren Positionierung auf den Meßrohren mechanische Eigenfrequenzen der Meßrohre und somit auch mechanische Eigenfrequenzen der mittels der acht Meßrohre gebildeten Rohranordnung, einschließlich daran angebrachter weiterer Komponenten des Meßaufnehmers, mithin auch die natürlichen Eigenfrequenzen von Schwingungsmode erster und zweiter Art, und insoweit auch das Schwingungsverhalten des Meßaufnehmers insgesamt gezielt beeinflußt werden können, kann es im Sinne einer noch einfacheren und noch genaueren Einstellung des Schwingungsverhaltens des Meßaufnehmers und/oder zwecks einer Minimierung potentiell von den vibrierenden, ggf. auch relativ groß dimensionierten, Meßrohren einlaßseitig oder auslaßseitig im Aufnehmer-Gehäuse verursachter mechanischer Spannungen und/oder Vibrationen ferner durchaus von Vorteil sein, wenn der Meßaufnehmer, wie beispielsweise in der US-A 2006/0150750 vorgeschlagen und wie in den Fig. 4a, 4b, 5a, 5b angedeutet, darüberhinaus noch weitere, solcher als Knotenplatten wirkenden Kopplerelemente der vorgenannten Art aufweist, beispielsweise also insgesamt 16, 24, oder 32 solcher Kopplerelemente erster Art.

Die vorgenannten Kopplerelemente 24₁, 24₂, 24₃, 24₄, 24₅, 24₆, 24₇, 24₈ erster Art sind gemäß einer weiteren Ausgestaltung der Erfindung und wie auch aus der Zusammenschau der Fig. 4a, 4b, 5a, 5b, 6a, 6b ohne weiteres ersichtlich jeweils lediglich an zwei, ansonsten aber an keinem weiteren der die Rohranordnung bildenden Meßrohre fixiert, so daß im Ergebnis das erste und zweite Kopplerelemente 24₁, 24₂ erster Art lediglich am ersten und zweiten Meßrohr und das dritte und vierte Kopplerelement 24₃, 24₄ erster Art lediglich am dritten und vierten Meßrohr fixiert sind. Infolge dessen kann die Rohranordnung, mithin auch der Meßaufnehmer z.B. in der Weise hergestellt, daß zunächst das erste und zweite Kopplerelement 24₁, 24₂ erster Art jeweils am (künftigen) ersten und zweiten Meßrohr 18₁, 18₂ unter Bildung eines ersten Meßrohrpakets, das dritte und vierte Kopplerelement 24₃, 24₄ erster Art jeweils am (künftigen) dritten und vierten Meßrohr 18₃, 18₄ unter Bildung eines zweiten Meßrohrpakets, das fünfte und sechste Kopplerelement 24₅, 24₆ erster Art jeweils am (künftigen) fünften und sechsten Meßrohr 18₅, 18₄ unter Bildung eines dritten Meßrohrpakets und das siebente und achte Kopplerelement 24₇, 24₈ erster Art jeweils am (künftigen) siebenten und achten Meßrohr 18₇, 18₈ unter Bildung eines vierten Meßrohrpakets fixiert werden. Somit ist es möglich, die vier Meßrohrpakte zu einem späteren Zeitpunkt, etwa unmittelbar vor oder auch erst nach dem Einsetzen sämtlicher der Meßrohrpakte in das z.T. bereits hergestellte und entsprechend vorbereitete (künftige) Aufnehmergehäuse, durch entsprechend späteres Fixieren der Kopplerelemente 25₁, 25₂, 25₃, bzw. 25₄ zweiter Art an den jeweils zugehörigen Meßrohrpakte zur Rohranordnung zusammenzufügen, nämlich in deren finalen Einbaulage innerhalb des Aufnehmergehäuse. Dies hat - nicht zuletzt auch für den erwähnten Fall, das der Meßaufnehmer für große nominelle Nennweiten von mehr als 100 mm trotz der relativ großen Abmessungen seiner Komponenten, mithin der Rohranordnung, des Aufnehmergehäuses, der Strömungsteiler etc. - den Vorteil, daß die im Ergebnis relativ ausladende Rohranordnung während des überwiegenden Dauer des gesamten Fertigungsprozesses, indem der Meßaufnehmer hergestellt wird, erst zu einem relativ späten Zeitpunkt in toto gehandhabt zu werden braucht. Darüberhinaus kann dadurch durchaus auch auf solche Rohranordnung zurückgegriffen werden, wie sie bislang in herkömmliche Meßaufnehmer mit Doppelrohranordnung verwendet worden sind, einhergehend mit einer beträchtlichen Reduzierung der Fertigungs- und Lagerhaltungskosten. Falls erforderlich können - alternativ oder in Ergänzung - aber beispielsweise auch an genau vier und/oder an sämtlichen Meßrohren entsprechend fixierte Kopplerelemente erster Art vorgesehen sein.

Nach einer weiteren Ausgestaltung der Erfindung weist jedes der acht - hier gleichgroßen - Kopplerelemente erster Art jeweils eine maximale Länge auf, die größer als ein Doppeltes eines Kalibers, D₁₈, des ersten Meßrohrs 18₁ ist. Nicht zuletzt für den vorgenannten Fall, daß jedes der Kopplerelemente erster Art an lediglich zwei der Meßrohre fixiert ist, ist jedes der Kopplerelemente erster Art ferner so ausgebildet, daß die maximale Länge kleiner als ein Dreifaches des Kalibers, D₁₈, des ersten Meßrohrs 18₁ ist.

Wie in der Fign. 4a schematisch dargestellt, definieren die Rohrform jedes der Meßrohre zusammen mit einem minimalen Abstand zwischen dem ersten und zweiten Kopplerelement 24₁, 24₂ erster Art - mithin also bei der Verwendung von 16 oder mehr als solcher Kopplerelemente erster Art die dem Massenschwerpunkt der Rohranordnung ein- und auslaßseitig jeweils am nahesten liegenden, insoweit also die ein- und auslaßseitig jeweils innersten Kopplerelemente erster Art - jeweils eine Nutz-Schwinglänge, L_{18-II}, des ersten Meßrohrs bzw. jedes der Meßrohre. Die Nutz-Schwinglänge, L_{18-II}, des jeweiligen Meßrohrs entspricht hierbei, wie auch in den Fig. 5a und 5b schematisch dargestellt, dabei einer Länge des zwischen den beiden Kopplerelementen 24₁, 24₂ erster Art verlaufenden Abschnitts der Biegelinie des nämlichen Meßrohrs, wobei nach einer weiteren Ausgestaltung der Erfindung die Kopplerelemente erster Art so im Meßaufnehmer plaziert sind, daß im Ergebnis die Nutz-Schwinglänge jedes der acht Meßrohre 18₁, 18₂, 18₃, 18₄, 18₅, 18₆, 18₇, 18₈ im Ergebnis weniger als 3000 mm, insb. weniger als 2500 mm und/oder mehr als 800 mm, beträgt. Alternativ oder in Ergänzung ist ferner vorgesehen, die Meßrohre so auszubilden und die Kopplerelemente erster Art so anzuordnen, daß die acht Meßrohre 18₁, 18₂, 18₃, 18₄, 18₅, 18₆, 18₇, 18₈ im Ergebnis die gleiche Nutz-Schwinglänge, L_{18-II}, aufweisen. Nach einer weiteren Ausgestaltung der Erfindung sind zu dem das erste Meßrohr und das zweite Meßrohr zumindest über den sich zwischen dem ersten Kopplerelement erster Art und dem zweiten Kopplerelement erster Art erstreckenden Bereich - mithin also deren jeweiligen Nutz-Schwinglänge - zueinander parallel, und sind auch das dritte Meßrohr und das vierte Meßrohr zumindest über den sich zwischen dem dritten Kopplerelement erster Art und dem vierten Kopplerelement erster Art erstreckenden Bereich - mithin also deren jeweiligen Nutz-Schwinglänge - zueinander parallel. Gleichermaßen zueinander parallel sind hierbei - wie auch aus der Zusammenschau der Fig. 3a-5 ersichtlich - ferner auch das fünfte und siebente Meßrohr bzw. auch das sechste und achte Meßrohr.

Zwecks Einstellen von Schwingungseigenschaften der Rohranordnung, mithin von Eigenfrequenzen natürlicher - etwa auch für die Generierung von Corioliskräften im durch die Meßrohre strömenden Medium und/oder für die Messung einer Massendurchflußrate des durch die Meßrohre strömenden Mediums nutzbarer - Schwingungsmoden der Rohranordnung, wie auch zwecks einer möglichst einfachen, gleichwohl effektiven Realisierung einer ausreichenden Separierung des erwähnten Schwingungsmodes erster Art von weiteren Schwingungsmoden der Rohranordnung, mithin auch vom Schwingungsmode zweiter Art, hinsichtlich ihrer jeweiligen Eigenfrequenzen umfaßt der Meßaufnehmer nach einer weiteren Ausgestaltung der Erfindung ferner wenigstens ein von den beiden Strömungsteilern jeweils beabstandet am ersten Meßrohr und am fünften Meßrohr, insb. lediglich an nämlichen beiden, ansonsten aber an keinem weiteren der acht Meßrohre, fixiertes - beispielsweise platten- oder stabförmiges - erstes Kopplerelement 25₁ zweiter Art, ein sowohl vom ersten Strömungsteiler als auch vom zweiten Strömungsteiler beabstandet am zweiten Meßrohr und am sechsten Meßrohr, insb. lediglich an nämlichen beiden, ansonsten aber an keinem weiteren der acht Meßrohre, fixiertes- beispielsweise platten- oder stabförmiges - zweites Kopplerelement 25₂ zweiter Art, ein sowohl vom ersten Strömungsteiler als auch vom zweiten Strömungsteiler beabstandet am dritten Meßrohr und am siebenten Meßrohr, insb. lediglich an nämlichen beiden, ansonsten aber an keinem weiteren der acht Meßrohre, fixiertes - beispielsweise plattenförmiges oder stabförmiges - drittes Kopplerelement 25₃ zweiter Art, sowie ein sowohl vom ersten Strömungsteiler als auch vom zweiten Strömungsteiler beabstandet, insb. lediglich an nämlichen beiden, ansonsten aber an keinem weiteren der acht Meßrohre, fixiertes - beispielsweise plattenförmiges oder stabförmiges - viertes Kopplerelement 25₄ zweiter Art. Durch die Verwendung von solchen Kopplerelementen zweiter Art lassen sich nicht nur die Eigenfrequenzen der Rohranordnung optimieren, sondern können zudem auch die bereits durch die Kopplerelemente herbeigeführte starke mechanische Kopplung der Meßrohre weiter erhöht und somit eine noch bessere Angleichung der von den acht Meßrohren simultan ausgeführten Schwingungen, zumindest den aktiv angeregten Biegeschwingungen im Nutzmode, herbeigeführt werden, dies im besonderen auch bei allfällig durch Bauteiletoleranzen bedingten Abweichungen der Meßrohre von der angestrebten Idealform bzw. damit einhergehenden Ungleichheiten der Meßrohre.

Die vier, insb. baugleichen, Kopplerelemente zweiter Art können beispielsweise jeweils mittels eines monolithischen Stanz-Biegeteils hergestellt sein und sind, wie auch aus der Zusammenschau der Fig. 3a, 3b, 4a, 4b, 4c, und 4d ohne weiteres ersichtlich, praktisch innerhalb ein und derselben gedachten Querschnittsebene der Rohranordnung plaziert, nämlich im hier gezeigten Ausführungsbeispiel innerhalb der erwähnten gedachten Querschnittsebene XY. Ferner weist jedes der vier - hier auch gleichgroßen - Kopplerelemente zweiter Art gemäß einer weiteren Ausgestaltung der Erfindung jeweils eine Länge, gemessen jeweils als kürzester Abstand zwischen einem mit einem der Meßrohre verbundenen ersten Elementende und einem mit einem anderen der Meßrohre verbundenen zweiten Elementende, auf, die größer als eine maximale Länge des ersten Kopplerelements erster Art und/oder die größer als ein Dreifaches des Kalibers, D₁₈, des ersten Meßrohrs 18₁, insb. auch größer als ein Vierfaches des Kalibers, D₁₈, des ersten Meßrohrs 18₁, ist.

Gemäß einer weiteren Ausgestaltung ist, ferner das erste Kopplerelement zweiter Art sowohl an einem sich zwischen dem ersten Kopplerelement erster Art und dem zweiten Kopplerelement erster Art erstreckenden Rohrsegment des ersten Meßrohrs 18₁ als auch an einem sich zwischen dem fünften Kopplerelement erster Art und dem sechsten Kopplerelement erster Art erstreckenden Rohrsegment des fünften Meßrohrs 18₅ fixiert - hier im besonderen in einem Bereich eines Schwingungsknoten von Schwingungen des ersten Meßrohrs wie auch in einem Bereich eines Schwingungsknoten von Schwingungen des fünften Meßrohrs -, und ist das zweite Kopplerelement zweiter Art sowohl an einem sich zwischen dem ersten Kopplerelement erster Art und dem zweiten Kopplerelement erster Art erstreckenden Rohrsegment des zweiten Meßrohrs 18₂ als auch an einem sich zwischen dem fünften Kopplerelement erster Art und dem sechsten Kopplerelement erster Art erstreckenden Rohrsegment des sechsten Meßrohrs 18₆ fixiert, - hier im besonderen in einem Bereich eines Schwingungsknoten von Schwingungen des zweiten Meßrohrs wie auch in einem Bereich eines Schwingungsknoten von Schwingungen des sechsten Meßrohrs. Darüberhinaus ist in analoger Weise auch das dritte Kopplerelement zweiter Art sowohl an einem sich zwischen dem dritten Kopplerelement erster Art und dem vierten Kopplerelement erster Art erstreckenden Rohrsegment des dritten Meßrohrs 18₃ als auch an einem sich zwischen dem siebenten Kopplerelement erster Art und dem achten Kopplerelement erster Art erstreckenden Rohrsegment des siebenten Meßrohrs 18₇ fixiert - hier im besonderen in einem Bereich eines Schwingungsknoten von Schwingungen des dritten Meßrohrs wie auch in einem Bereich eines Schwingungsknoten von Schwingungen des siebenten Meßrohrs, und ist das vierte Kopplerelement zweiter Art sowohl an einem sich zwischen dem dritten Kopplerelement erster Art und dem vierten Kopplerelement erster Art erstreckenden Rohrsegment des vierten Meßrohrs 18₄ als auch an einem sich zwischen dem siebenten Kopplerelement erster Art und dem achten Kopplerelement erster Art erstreckenden Rohrsegment des achten Meßrohrs 18₈ fixiert - hier im besonderen in einem Bereich eines Schwingungsknoten von Schwingungen des vierten Meßrohrs wie auch in einem Bereich eines Schwingungsknoten von Schwingungen des achten Meßrohrs.

Falls erforderlich - beispielsweise weil der Meßaufnehmer für die Messung extrem heißer Medien bzw. für die Messung in Anwendungen mit über einen weiten Bereich schwankender Betriebstemperatur, etwa infolge wiederkehrend in-situ durchgeführten Reinigungsvorgängen des Meßaufnehmers ("cleaning in process", "sterilizing in process" etc.), vorgesehen ist und insoweit nennenswerte thermische Ausdehnungen der Meßrohre zu erwarten sind - können die Kopplerelemente zweiter Art ferner so ausgebildet sein, daß sie sich im wesentlichen gleichermaßen ausdehnen, wie die darüber jeweils gekoppelten Meßrohre und/oder daß sie zumindest gegenüber von Kräften, die in Richtung einer durch die Scheitelpunkte der beiden durch das jeweilige Kopplerelemente zweiter Art miteinander verbundenen Meßrohre verlaufenden, etwa mit der erwähnten gedachten Hochachse H koinzidenten, oder dazu parallelen Wirkungslinie ausreichend nachgiebig sind. Letzteres kann beispielsweise durch entsprechend in das jeweilige Kopplerelement zweiter eingeformte - etwa im wesentlichen quer zu vorgenannter Wirkungslinie verlaufende - Schlitze realisiert werden. Alternativ oder in Ergänzung zu in die Kopplerelemente eingeformten Schlitzen ist gemäß einer anderen Ausgestaltung der Erfindung jedes der beiden Kopplerelement zweiter Art, nicht zuletzt zwecks Erzielung einer ausreichenden Nachgiebigkeit in Richtung der gedachten Hochachse H und wie auch aus der Zusammenschau der Fig. 4a, 4b, 5a, 5b ohne weiteres ersichtlich, gewölbt ausgeführt. Daher ist gemäß einer weiteren Ausgestaltung der Erfindung, nicht zuletzt auch zwecks Ermöglichung von elastischen Verformungen des jeweiligen Kopplerelements zweiter infolge von gegengleichen Relativbewegungen der mit diesem jeweils verbundenen zwei Meßrohre und/oder zwecks Minimierung oder Vermeidung von durch thermisch bedingte Längeänderungen des jeweiligen Kopplerelements und/oder der mit diesem jeweils verbundenen zwei Meßrohre verursachten mechanischen Spannungen, jedes der vier - hier im wesentlichen stab- bzw. plattenförmig ausgebildeten - Kopplerelemente zweiter Art jeweils zumindest abschnittsweise, beispielsweise im wesentlichen kreisbogenförmig, gekrümmt. Im Ergebnis ist somit auch eine geringfügige Änderung des relative Abstandes, etwa infolge thermisch bedingter Dehnung, zwischen Meßrohre ermöglicht, und zwar unter weitgehender Vermeidung von das Schwingungsverhalten der Rohranordnung signifikant beeinflussenden Erhöhungen von mechanischen Spannungen.

Falls erforderlich, etwa zwecks einer weiteren Verbesserung der Separierung von Eigenfrequenzen und/oder zwecks einer weiteren Verstärkung der mechanischen Kopplung der Meßrohre, können selbstverständlich auch mehr als 4 solcher Kopplerelemente zweiter Art verwendet werden, beispielsweise wie in den Fig. 3a, 3b, 4a, 4b, 4c, und 4d schematisch angedeutet, 12 solcher Kopplerelemente zweiter Art oder - nicht zuletzt für den erwähnten Fall, daß der Schwingungsmode zweiter Art angeregt werden soll - beispielsweise auch nur 8 solcher Kopplerelemente zweiter Art, wobei dann im Vergleich zu der zuvor genannten Variante mit 12 Kopplerelemente zweiter Art jeweils die in Fig. 3a, 3b, 4a, 4b, 4c, und 4d gezeigten mittleren Kopplerelemente 25₁, 25₂,25₃ und 25₄ weggelassen, mithin lediglich die vier einlaßseitigen sowie die vier auslaßseitigen Kopplerelemente zweiter Art verwendet sind.

Zur Schaffung eines möglichst kompakten Meßaufnehmers von ausreichend hoher Schwingungsgüte und hoher Empfindlichkeit bei möglichst geringem Druckabfall sind nach einer weiteren Ausgestaltung der Erfindung die Meßrohre 18₁, 18₂, 18₃, 18₄, 18₅, 18₆, 18₇, 18₈, abgestimmt auf die erwähnte Nutz-Schwinglänge, so bemessen, daß ein Kaliber-zu-Schwinglänge-Verhältnis D₁₈/L_{18-II} des Meßaufnehmers, definiert durch ein Verhältnis des Kalibers D₁₈ des ersten Meßrohrs zur Nutz-Schwinglänge L_{18-II} des ersten Meßrohrs, mehr als 0.03, insb. mehr als 0.05 und/oder weniger als 0.15, beträgt. Alternativ oder in Ergänzung hierzu sind nach einer weiteren Ausgestaltung der Erfindung die Meßrohre 18₁, 18₂, 18₃, 18₄, 18₅, 18₆, 18₇, 18₈, abgestimmt auf die oben erwähnte Einbaulänge L₁₁ des Meßaufnehmer, so bemessen, daß ein Schwinglänge-zu-Einbaulänge-Verhältnis L_{18-II}/L₁₁ des Meßaufnehmers, definiert durch ein Verhältnis der Nutz-Schwinglänge L_{18-II} des ersten Meßrohrs zur Einbaulänge L₁₁ des Meßaufnehmers, mehr als 0.55, insb. mehr als 0.6 und/oder weniger als 1.5, beträgt. Nach einer weiteren Ausgestaltung der Erfindung sind die Schwingungssensoren, abgestimmt auf die Nutz-Schwinglänge, so im Meßaufnehmer angeordnet, daß ein Meßlänge-zu-Schwinglänge-Verhältnis L₁₉/L_{18-II} des Meßaufnehmers, definiert durch ein Verhältnis der erwähnten Meßlänge L₁₉ des Meßaufnehmers zur Nutz-Schwinglänge L_{18-II} des ersten Meßrohrs, mehr als 0.3, insb. mehr als 0.4 und/oder weniger als 0.95, beträgt. Im übrigen können Meßlänge, L₁₉, und/oder Meßlänge-zu-Schwinglänge-Verhältnis L₁₉/L_{18-II} darüberhinaus durchaus auch gemäß den in den WO-A 2011/009683 bzw. WO-A 2011/009684 vorgeschlagenen Kriterien zur Bestimmung optimaler Meßlängen bzw. optimaler Meßlänge-zu-Schwinglänge-Verhältnisse für Meßaufnehmer vom Vibrationstyp genauer bestimmt werden.

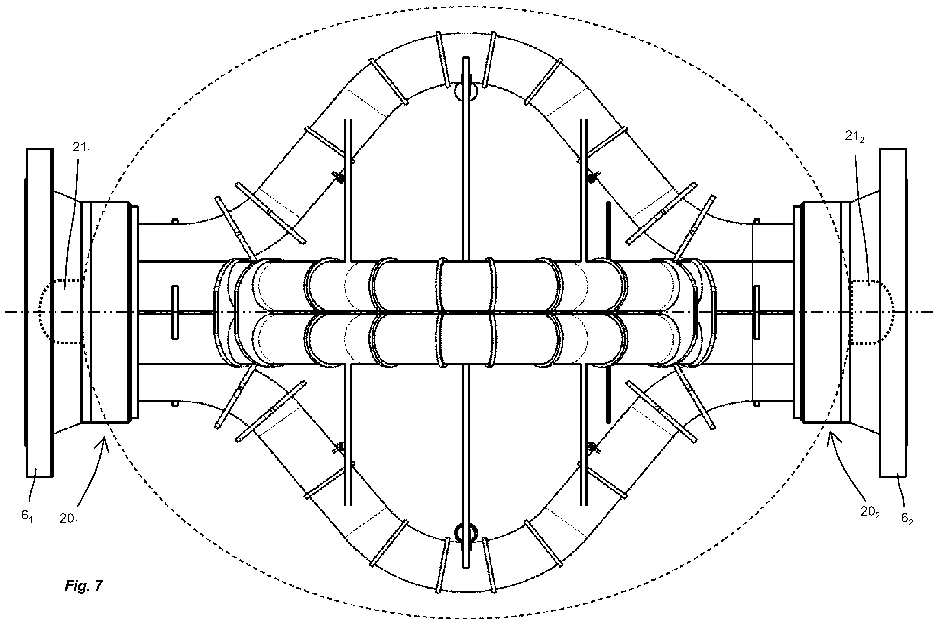

Zur weiteren Verringerung eines seitens des Meßaufnehmers dem strömenden Medium entegegenwirkenden Strömungswiderstandes bei dennoch kompakter Bauweise und hoher Empfindlichkeit ist gemäß einer weiteren Ausgestaltung der Erfindung ein Kaliber-zu-Nennweite-Verhältnis, D₁₈/D₁₁, des Meßaufnehmers, definiert durch ein Verhältnis des Kalibers, D₁₈, des ersten Meßrohrs zu der dem Kaliber der Rohrleitung, in deren Verlauf der Meßaufnehmer einzusetzen ist, entsprechenden nominellen Nennweite des Meßaufnehmers größer gewählt als 0.21, etwa durch Verwendung von - etwa trichterförmigen - Strömungsverteilern 20₂, 20₁ mit sich jeweils zum jeweiligen Ende des Meßaufnehmers hin, mithin sich jeweils zur angeschlossenen Rohrleitung hin verjüngenden Lumen, und/oder kleiner gewählt als 0.4, insb. kleiner als 0.35. Alternativ oder in Ergänzung dazu kann der Strömungswiderstand des Meßaufnehmers weiter dadurch reduziert werden, daß, wie in Fig. 7 schematisch dargestellt, im ersten Strömungsteiler 20₁ und/oder im zweiten Strömungsteiler 20₂ jeweils zwischen den jeweiligen Strömungsöffnungen jeweils ein, insb. konus- oder paraboloid-förmiger, Strömungskörper 21₁ bzw. 21₂ plaziert ist.

Zur Verringerung allfälliger Querempfindlichkeiten des Meßaufnehmers auf Druck, nicht zuletz auch bei einem möglichst hohen Nennweite-zu-Einbaulänge-Verhältnis D₁₁/L₁₁ von größer als 0.1 und einem möglichst niedrigen Schwinglänge-zu-Einbaulänge-Verhältnis L_{18-II}/L₁₁ von weniger als 1.5, können in vorteilhafter Weise ferner ringförmige Versteifungselementen an den Meßrohren verwendet werden, von denen jedes an genau einem der Meßrohre 18₁, 18₂, 18₃, 18₄, 18₅, 18₆, 18₇, 18₈ so angebracht ist, daß es dieses entlang einer von dessen, insb. zirkulär umlaufenden, gedachten Umfangslinien umgreift, vgl. hierzu auch die eingangs erwähnte US-B 69 20 798. Im besonderen kann es hierbei von Vorteil sein, wenn auf jedem der Meßrohre wenigstens vier solcher, insb. baugleicher, Versteifungselemente angebracht sind. Die Versteifungselementen können dabei beispielsweise so im Meßaufnehmer 11 plaziert sein, daß zwei auf demselben Meßrohr angebrachte, benachbarte Versteifungselementen zueinander einen Abstand aufweisen, der mindestens 70% eines Rohr-Außendurchmessers nämlichen Meßrohrs, höchstens aber 150% selbigen Rohr-Außendurchmessers beträgt. Als besonders geeignet hat sich hierbei ein gegenseitiger Abstand benachbarter Versteifungselementen erwiesen, der im Bereich von 80% bis 120% des Rohr-Außendurchmessers des jeweiligen Meßrohrs liegt.

Durch die Verwendung von acht statt wie bisher zwei parallel durchströmten gebogenen Meßrohren ist es somit auch möglich, Meßaufnehmer der beschriebenen Art auch für große Massendurchflußraten bzw. mit großen nominellen Nennweiten von weit über 250 mm einerseits mit einer Meßgenauigkeit von über 99,8% bei einem akzeptablem Druckabfall, insb. von weniger als 3 bar, kostengünstig herzustellen und andererseits die Einbaumaße wie auch die Leermasse solcher Meßaufnehmer soweit in Grenzen zu halten, daß trotz großer Nennweite die Herstellung, der Transport, der Einbau wie auch der Betrieb immer noch wirtschaftlich sinnvoll erfolgen kann. Besonders auch durch Realisierung voranstehend erläuterter, die Erfindung weiter ausgestaltender Maßnahmen - einzeln oder auch in Kombination - können Meßaufnehmer der in Rede stehenden Art auch bei großer nomineller Nennweite so ausgeführt und so dimensioniert werden, daß ein durch ein Verhältnis der erwähnten Leermasse des Meßaufnehmers zu einer Gesamtmasse der Rohranordnung definiertes Massenverhältnis des Meßaufnehmers ohne weiteres kleiner als 3, insb. kleiner als 2.5, gehalten werden kann. Im übrigen wird der Fachmann leicht erkennen können, daß die Rohranordnung, ggf. auch unter Wahrung von deren vierzähliger Rotationssymmetrie um die erwähnte gedachte Längsachse L bzw. um die Hauptströmungsachse, ohne weiteres in entsprechender Weise auch um weitere 2ⁿ Meßrohre, insb. auch um weitere 8 • n, (n ≥ 1, 2, 3, 4, ...) und in dementsprechend auch die Strömungsteiler jeweils um weitere 2ⁿ (bzw. um weitere 8 • n) Strömungsöffnungen ergänzt werden können, etwa zwecks weiterer Erhöhung der Empfindlichkeit und/oder zwecks Erfüllung zusätzlicher Meßaufgaben. Nämliche weiteren Meßrohre bzw. Strömungsöffnungen können dabei beispielsweise auch entlang einer die hier gezeigte Rohranordnung imaginär einhüllenden, konzentrischen gedachten Hüllfläche angeordnet sein.

## Patentansprüche

1. Meßaufnehmer vom Vibrationstyp zum Erfassen wenigstens einer physikalischen Meßgröße eines in einer Rohrleitung geführten strömungsfähigen Mediums, insb. eines Gases, einer Flüssigkeit, eines Pulvers oder eines anderen strömungsfähigen Stoffes, und/oder zum Erzeugen von dem Erfassen einer Massendurchflußrate eines in einer Rohrleitung geführten strömungsfähigen Mediums, insb. eines Gases, einer Flüssigkeit, eines Pulvers oder eines anderen strömungsfähigen Stoffes, dienenden Corioliskräften, welcher Meßaufnehmer umfaßt:
- ein, insb. teilweise im wesentlichen rohrförmiges und/oder teilweise außen kreiszylindrisches, Aufnehmer-Gehäuse (7₁), von dem ein einlaßseitiges erstes Gehäuseende mittels eines acht jeweils voneinander beabstandeten, insb. kreiszylindrische, kegelförmige oder konusförmige, Strömungsöffnungen (20_{1A}, 20_{1B}, 20_{1C}, 20_{1D}, 20_{1E}, 20_{1F}, 20_{1G}, 20_{1H}) aufweisenden einlaßseitigen ersten Strömungsteiler (20₁) und ein auslaßseitiges zweites Gehäuseende mittels eines acht jeweils voneinander beabstandeten, insb. kreiszylindrische, kegelförmige oder konusförmige, Strömungsöffnungen (20_{2A}, 20_{2B}, 20_{2C}, 20_{2D}, 20_{2E}, 20_{2F}, 20_{2G}, 20_{2H}) aufweisenden auslaßseitigen zweiten Strömungsteilers (20₂) gebildet sind;
- eine Rohranordnung (18) mit mindestens acht unter Bildung strömungstechnisch parallel geschalteter Strömungspfade an die, insb. baugleichen, Strömungsteiler (20₁, 20₂) angeschlossenen gebogenen, insb. lediglich mittels nämlicher Strömungsteiler (20₁, 20₂) im Aufnehmer-Gehäuse schwingfähig gehalterten und/oder baugleichen und/oder zueinander paarweise parallelen und/oder zumindest abschnittsweise V-förmigen, Meßrohren (18₁, 18₂, 18₃, 18₄, 18₅, 18₆, 18₇, 18₈) zum Führen von strömendem Medium, von denen
-- ein erstes Meßrohr (18₁) mit einem einlaßseitigen ersten Meßrohrende in eine erste Strömungsöffnung (20_{1A}) des ersten Strömungsteilers (20₁) und mit einem auslaßseitigen zweiten Meßrohrende in eine erste Strömungsöffnung (20_{2A}) des zweiten Strömungsteilers (20₂) mündet,
-- ein, insb. zum ersten Meßrohr zumindest abschnittsweise paralleles, zweites Meßrohr (18₂) mit einem einlaßseitigen ersten Meßrohrende in eine zweite Strömungsöffnung (20_{1B}) des ersten Strömungsteilers (20₁) und mit einem auslaßseitigen zweiten Meßrohrende in eine zweite Strömungsöffnung (20_{2B}) des zweiten Strömungsteilers (20₂) mündet,
-- ein drittes Meßrohr (18₃) mit einem einlaßseitigen ersten Meßrohrende in eine dritte Strömungsöffnung (20_{1C}) des ersten Strömungsteilers (20₁) und mit einem auslaßseitigen zweiten Meßrohrende in eine dritte Strömungsöffnung (20_{2C}) des zweiten Strömungsteilers (20₂) mündet,
-- ein, insb. zum dritten Meßrohr zumindest abschnittsweise paralleles, viertes Meßrohr (18₄) mit einem einlaßseitigen ersten Meßrohrende in eine vierte Strömungsöffnung (20_{1D}) des ersten Strömungsteilers (20₁) und mit einem auslaßseitigen zweiten Meßrohrende in eine vierte Strömungsöffnung (20_{2D}) des zweiten Strömungsteilers (20₂) mündet,
-- ein fünftes Meßrohr (18₅) mit einem einlaßseitigen ersten Meßrohrende in eine fünfte Strömungsöffnung (20_{1E}) des ersten Strömungsteilers (20₁) und mit einem auslaßseitigen zweiten Meßrohrende in eine fünfte Strömungsöffnung (20_{2E}) des zweiten Strömungsteilers (20₂) mündet,
-- ein, insb. zum fünften Meßrohr zumindest abschnittsweise paralleles, sechstes Meßrohr (18₆) mit einem einlaßseitigen ersten Meßrohrende in eine sechste Strömungsöffnung (20_{1F}) des ersten Strömungsteilers (20₁) und mit einem auslaßseitigen zweiten Meßrohrende in eine sechste Strömungsöffnung (20_{2F}) des zweiten Strömungsteilers (20₂) mündet,
-- ein siebentes Meßrohr (18₇) mit einem einlaßseitigen ersten Meßrohrende in eine siebente Strömungsöffnung (20_{1G}) des ersten Strömungsteilers (20₁) und mit einem auslaßseitigen zweiten Meßrohrende in eine siebente Strömungsöffnung (20_{2G}) des zweiten Strömungsteilers (20₂) mündet, und
-- ein, insb. zum siebente Meßrohr zumindest abschnittsweise paralleles, achtes Meßrohr (18₈) mit einem einlaßseitigen ersten Meßrohrende in eine achte Strömungsöffnung (20_{1H}) des ersten Strömungsteilers (20₁) und mit einem auslaßseitigen zweiten Meßrohrende in eine achte Strömungsöffnung (20_{2H}) des zweiten Strömungsteilers (20₂) mündet; sowie
- eine mittels
-- eines Schwingungen des ersten Meßrohrs (18₁) relativ zum zweiten Meßrohr (18₂) differentiell anregenden, insb. elektro-dynamischen, ersten Schwingungserregers (5₁),
-- eines Schwingungen des dritten Meßrohrs (18₃) relativ zum vierten Meßrohr (18₄) differentiell anregenden, insb. elektro-dynamischen und/oder zum ersten Schwingungserreger (5₁) baugleichen, zweiten Schwingungserregers (5₂),
-- eines Schwingungen des fünften Meßrohrs (18₅) relativ zum sechsten Meßrohr (18₆) differentiell anregenden, insb. elektro-dynamischen und/oder zum ersten Schwingungserreger (5₁) baugleichen, dritten Schwingungserregers (5₃),
-- und eines Schwingungen des siebente Meßrohrs (18₇) relativ zum achten Meßrohr (18₈) differentiell anregenden, insb. elektro-dynamischen und/oder zum ersten Schwingungserreger (5₁) baugleichen, vierten Schwingungserregers (5₄) gebildete elektro-mechanische Erregeranordnung (5) zum Erzeugen und/oder Aufrechterhalten von, insb. einem natürlichen Schwingungsmode der Rohranordnung entsprechenden, Biegeschwingungen jedes der acht Meßrohre (18₁, 18₂, 18₃, 18₄, 18₅, 18₆, 18₇, 18₈).

2. Meßaufnehmer nach einem der vorherigen Ansprüche,
- wobei die beiden Strömungsteiler (20₁, 20₂) so ausgebildet und im Meßaufnehmer angeordnet sind,
-- daß eine die erste Strömungsöffnung (20_{1A}) des ersten Strömungsteilers (20₁) mit der ersten Strömungsöffnung (20_{2A}) des zweiten Strömungsteilers (20₂) imaginär verbindende gedachte erste Verbindungsachse (Z₁) des Meßaufnehmers parallel zu einer die zweite Strömungsöffnung (20_{1B}) des ersten Strömungsteilers (20₁) mit der zweiten Strömungsöffnung (20_{2B}) des zweiten Strömungsteilers (20₂) imaginär verbindende gedachten zweiten Verbindungsachse (Z₂) des Meßaufnehmers verläuft, und
-- daß eine die dritte Strömungsöffnung (20_{1C}) des ersten Strömungsteilers (20₁) mit der dritten Strömungsöffnung (20_{2C}) des zweiten Strömungsteilers (20₂) imaginär verbindende gedachte dritte Verbindungsachse (Z₃) des Meßaufnehmers parallel zu einer die vierte Strömungsöffnung (20_{1D}) des ersten Strömungsteilers (20₁) mit der vierten Strömungsöffnung (20_{2B}) des zweiten Strömungsteilers (20₂) imaginär verbindende gedachten vierten Verbindungsachse (Z₄) des Meßaufnehmers verläuft.

3. Meßaufnehmer nach dem vorherigen Anspruch,
- wobei die beiden Strömungsteiler (20₁, 20₂) so ausgebildet und im Meßaufnehmer angeordnet sind,
-- daß eine die fünfte Strömungsöffnung (20_{1E}) des ersten Strömungsteilers (20₁) mit der fünften Strömungsöffnung (20_{2E}) des zweiten Strömungsteilers (20₂) imaginär verbindende gedachte fünfte Verbindungsachse (Z₅) des Meßaufnehmers parallel zu einer die sechste Strömungsöffnung (20_{1F}) des ersten Strömungsteilers (20₁) mit der sechsten Strömungsöffnung (20_{2F}) des zweiten Strömungsteilers (20₂) imaginär verbindende gedachten sechsten Verbindungsachse (Z₆) des Meßaufnehmers verläuft, und
-- daß eine die siebente Strömungsöffnung (20_{1G}) des ersten Strömungsteilers (20₁) mit der siebenten Strömungsöffnung (20_{2G}) des zweiten Strömungsteilers (20₂) imaginär verbindende gedachte siebente Verbindungsachse (Z₇) des Meßaufnehmers parallel zu einer die achte Strömungsöffnung (20_{1H}) des ersten Strömungsteilers (20₁) mit der achten Strömungsöffnung (20_{2H}) des zweiten Strömungsteilers (20₂) imaginär verbindende gedachten achten Verbindungsachse (Z₈) des Meßaufnehmers verläuft.

4. Meßaufnehmer nach einem der vorherigen Ansprüche, wobei die Meßrohre so ausgebildet und im Meßaufnehmer angeordnet sind, daß die Rohranordnung eine sowohl zwischen dem ersten Meßrohr und dem dritten Meßrohr als auch zwischen dem zweiten Meßrohr und dem vierten Meßrohr liegende, insb. zum ersten, zweiten, dritten und vierten Meßrohr jeweils parallele, erste gedachte Längsschnittebene (XZ) aufweist, bezüglich der die Rohranordnung spiegelsymmetrisch ist.

5. Meßaufnehmer nach Anspruch 4, wobei die Meßrohre so ausgebildet und im Meßaufnehmer angeordnet sind, daß die Rohranordnung eine sowohl zwischen dem fünften Meßrohr und dem sechsten Meßrohr als auch zwischen dem siebenten Meßrohr und dem achten Meßrohr liegende, insb. zum fünften, sechsten, siebenten und achten Meßrohr jeweils parallele und/oder zur gedachten ersten Längsschnittebene (XZ) senkrechte, zweite gedachte Längsschnittebene (YZ) aufweist, bezüglich der die Rohranordnung gleichfalls spiegelsymmetrisch ist.

6. Meßaufnehmer nach Anspruch 5,
- wobei die Erregeranordnung derart ausgebildet ist, daß damit das erste Meßrohr (18₁) und das zweite Meßrohr (18₂) zu bezüglich der zweiten gedachten Längsschnittebene (YZ) gegengleichen, insb. zu bezüglich der zweiten gedachten Längsschnittebene (YZ) symmetrischen, Biegeschwingungen und das dritte Meßrohr (18₃) und das vierte Meßrohr (18₄) zu bezüglich der zweiten gedachten Längsschnittebene (YZ) gegengleichen, insb. zu bezüglich der zweiten gedachten Längsschnittebene (YZ) symmetrischen, Biegeschwingungen anregbar sind; und/oder
- wobei die Erregeranordnung derart ausgebildet ist, daß damit das fünfte Meßrohr (18₅) und das sechste Meßrohr (18₆) zu bezüglich der ersten gedachten Längsschnittebene (XZ) gegengleichen, insb. zu bezüglich der ersten gedachten Längsschnittebene (XZ) symmetrischen, Biegeschwingungen und das siebente Meßrohr (18₇) und das achte Meßrohr (18₈) zu bezüglich der ersten gedachten Längsschnittebene (XZ) gegengleichen, insb. zu bezüglich der ersten gedachten Längsschnittebene (XZ) symmetrischen, Biegeschwingungen anregbar sind.

7. Meßaufnehmer nach einem der Ansprüche 5 bis 6, wobei der Rohranordnung wenigstens ein, insb. für die Generierung von Corioliskräften im durch die Meßrohre strömenden Medium nutzbarer, natürlicher Schwingungsmode innewohnt,
- in welchem Schwingungsmode sowohl das erste Meßrohr und das dritte Meßrohr bezüglich der ersten gedachten Längsschnittebene (XZ) gegengleiche, insb. bezüglich der ersten gedachten Längsschnittebene (XZ) symmetrische, Biegeschwingungen um jeweils eine dem jeweiligen Meßrohr zugehörige statische Ruhelage, insb. Ausleger-Biegeschwingungen um jeweils eine zu wenigstens zwei der gedachten Verbindungsachsen parallele gedachte Schwingungsachse, als auch das zweite Meßrohr und das vierte Meßrohr bezüglich der ersten gedachten Längsschnittebene (XZ) gegengleiche, insb. bezüglich der ersten gedachten Längsschnittebene (XZ) symmetrische, Biegeschwingungen um jeweils eine dem jeweiligen Meßrohr zugehörige statische Ruhelage, insb. Ausleger-Biegeschwingungen um jeweils eine zu wenigstens zwei der gedachten Verbindungsachsen parallele gedachte Schwingungsachse, ausführen können bzw. ausführen, insb. derart, daß, bezüglich der zweiten gedachten Längsschnittebene (YZ), sowohl nämliche Biegeschwingungen des ersten Meßrohrs gegengleich zu nämlichen Biegeschwingungen des zweiten Meßrohrs als auch nämliche Biegeschwingungen des dritten Meßrohrs gegengleich zu nämlichen Biegeschwingungen des vierten Meßrohrs sind; und/oder
- in welchem Schwingungsmode sowohl das fünfte Meßrohr und das siebente Meßrohr bezüglich der ersten gedachten Längsschnittebene (XZ) gegengleiche, insb. bezüglich der ersten gedachten Längsschnittebene (XZ) symmetrische, Biegeschwingungen um jeweils eine dem jeweiligen Meßrohr zugehörige statische Ruhelage, insb. Ausleger-Biegeschwingungen um jeweils eine zu wenigstens zwei der gedachten Verbindungsachsen parallele gedachte Schwingungsachse, als auch das sechste Meßrohr und das achte Meßrohr bezüglich der ersten gedachten Längsschnittebene (XZ) gegengleiche, insb. bezüglich der ersten gedachten Längsschnittebene (XZ) symmetrische, Biegeschwingungen um jeweils eine dem jeweiligen Meßrohr zugehörige statische Ruhelage, insb. Ausleger-Biegeschwingungen um jeweils eine zu wenigstens zwei der gedachten Verbindungsachsen parallele gedachte Schwingungsachse, ausführen können bzw. ausführen, insb. derart, daß, bezüglich der zweiten gedachten Längsschnittebene (YZ), sowohl nämliche Biegeschwingungen des fünften Meßrohrs gegengleich zu nämlichen Biegeschwingungen des sechsten Meßrohrs als auch nämliche Biegeschwingungen des siebenten Meßrohrs gegengleich zu nämlichen Biegeschwingungen des achten Meßrohrs sind; und/oder
- in welchem Schwingungsmode
-- das erste Meßrohr und das fünfte Meßrohr im Gleichtakt Biegeschwingungen um jeweils eine dem jeweiligen Meßrohr zugehörige statische Ruhelage, insb. Ausleger-Biegeschwingungen um jeweils eine zu wenigstens zwei der gedachten Verbindungsachsen parallele gedachte Schwingungsachse, ausführen können bzw. ausführen,
-- das zweite Meßrohr und das sechste Meßrohr im Gleichtakt Biegeschwingungen um jeweils eine dem jeweiligen Meßrohr zugehörige statische Ruhelage, insb. Ausleger-Biegeschwingungen um jeweils eine zu wenigstens zwei der gedachten Verbindungsachsen parallele gedachte Schwingungsachse, ausführen können bzw. ausführen,
-- das dritte Meßrohr und das siebente Meßrohr im Gleichtakt Biegeschwingungen um jeweils eine dem jeweiligen Meßrohr zugehörige statische Ruhelage, insb. Ausleger-Biegeschwingungen um jeweils eine zu wenigstens zwei der gedachten Verbindungsachsen parallele gedachte Schwingungsachse, ausführen können bzw. ausführen, und
-- das vierte Meßrohr und das achte Meßrohr im Gleichtakt Biegeschwingungen um jeweils eine dem jeweiligen Meßrohr zugehörige statische Ruhelage, insb. Ausleger-Biegeschwingungen um jeweils eine zu wenigstens zwei der gedachten Verbindungsachsen parallele gedachte Schwingungsachse, ausführen können bzw. ausführen.

8. Meßaufnehmer nach dem vorherigen Anspruch, wobei mittels der Erregeranordnung nämlicher Schwingungsmode anregbar ist.

9. Meßaufnehmer nach einem der Ansprüche 5 bis 8,
- wobei der Rohranordnung wenigstens ein, insb. für die Generierung von Corioliskräften im durch die Meßrohre strömenden Medium und/oder für die Messung einer Massendurchflußrate des durch die Meßrohre strömenden Mediums nutzbarer, natürlicher Schwingungsmode erster Art innewohnt,
-- in welchem Schwingungsmode erster Art sowohl das erste Meßrohr und das dritte Meßrohr bezüglich der ersten gedachten Längsschnittebene (XZ) gegengleiche, insb. bezüglich der ersten gedachten Längsschnittebene (XZ) symmetrische, Biegeschwingungen um jeweils eine dem jeweiligen Meßrohr zugehörige statische Ruhelage, insb. Ausleger-Biegeschwingungen um jeweils eine zu wenigstens zwei der gedachten Verbindungsachsen parallele gedachte Schwingungsachse, als auch das zweite Meßrohr und das vierte Meßrohr bezüglich der ersten gedachten Längsschnittebene (XZ) gegengleiche, insb. bezüglich der ersten gedachten Längsschnittebene (XZ) symmetrische, Biegeschwingungen um jeweils eine dem jeweiligen Meßrohr zugehörige statische Ruhelage, insb. Ausleger-Biegeschwingungen um jeweils eine zu wenigstens zwei der gedachten Verbindungsachsen parallele gedachte Schwingungsachse, ausführen können bzw. ausführen, und
-- in welchem Schwingungsmode erster Art sowohl das fünfte Meßrohr und das siebente Meßrohr bezüglich der ersten gedachten Längsschnittebene (XZ) gegengleiche, insb. bezüglich der ersten gedachten Längsschnittebene (XZ) symmetrische, Biegeschwingungen um jeweils eine dem jeweiligen Meßrohr zugehörige statische Ruhelage, insb. Ausleger-Biegeschwingungen um jeweils eine zu wenigstens zwei der gedachten Verbindungsachsen parallele gedachte Schwingungsachse, als auch das sechste Meßrohr und das achte Meßrohr bezüglich der ersten gedachten Längsschnittebene (XZ) gegengleiche, insb. bezüglich der ersten gedachten Längsschnittebene (XZ) symmetrische, Biegeschwingungen um jeweils eine dem jeweiligen Meßrohr zugehörige statische Ruhelage, insb. Ausleger-Biegeschwingungen um jeweils eine zu wenigstens zwei der gedachten Verbindungsachsen parallele gedachte Schwingungsachse, ausführen können bzw. ausführen, derart,
--- daß, bezüglich der zweiten gedachten Längsschnittebene (YZ), sowohl nämliche Biegeschwingungen des ersten Meßrohrs gegengleich zu nämlichen Biegeschwingungen des zweiten Meßrohrs als auch nämliche Biegeschwingungen des dritten Meßrohrs gegengleich zu nämlichen Biegeschwingungen des vierten Meßrohrs sind,
--- daß, bezüglich der zweiten gedachten Längsschnittebene (YZ), sowohl nämliche Biegeschwingungen des fünften Meßrohrs gegengleich zu nämlichen Biegeschwingungen des sechsten Meßrohrs als auch nämliche Biegeschwingungen des siebenten Meßrohrs gegengleich zu nämlichen Biegeschwingungen des achten Meßrohrs sind, und.
-- daß die Biegeschwingungen des ersten Meßrohrs im Gleichtakt zu den Biegeschwingungen des fünften Meßrohrs, die Biegeschwingungen des zweiten Meßrohrs im Gleichtakt zu den Biegeschwingungen des sechsten Meßrohrs, die Biegeschwingungen des dritten Meßrohrs im Gleichtakt zu den Biegeschwingungen des siebenten Meßrohrs, und die Biegeschwingungen des vierten Meßrohrs im Gleichtakt zu den Biegeschwingungen des achten Meßrohr sind,
- und wobei mittels der Erregeranordnung nämlicher Schwingungsmode erster Art anregbar ist.

10. Meßaufnehmer nach Anspruch 9, wobei der Rohranordnung wenigstens ein, insb. für die Generierung von Corioliskräften im durch die Meßrohre strömenden Medium und/oder für die Messung einer Massendurchflußrate des durch die Meßrohre strömenden Mediums nutzbarer, natürlicher Schwingungsmode zweiter Art innewohnt,
- in welchem Schwingungsmode zweiter Art sowohl das erste Meßrohr und das dritte Meßrohr bezüglich der ersten gedachten Längsschnittebene (XZ) gegengleiche, insb. bezüglich der ersten gedachten Längsschnittebene (XZ) symmetrische, Biegeschwingungen um jeweils eine dem jeweiligen Meßrohr zugehörige statische Ruhelage, insb. Ausleger-Biegeschwingungen um jeweils eine zu wenigstens zwei der gedachten Verbindungsachsen parallele gedachte Schwingungsachse, als auch das zweite Meßrohr und das vierte Meßrohr bezüglich der ersten gedachten Längsschnittebene (XZ) gegengleiche, insb. bezüglich der ersten gedachten Längsschnittebene (XZ) symmetrische, Biegeschwingungen um jeweils eine dem jeweiligen Meßrohr zugehörige statische Ruhelage, insb. Ausleger-Biegeschwingungen um jeweils eine zu wenigstens zwei der gedachten Verbindungsachsen parallele gedachte Schwingungsachse, ausführen können bzw. ausführen, und
- in welchem Schwingungsmode zweiter Art sowohl das fünfte Meßrohr und das siebente Meßrohr bezüglich der ersten gedachten Längsschnittebene (XZ) gegengleiche, insb. bezüglich der ersten gedachten Längsschnittebene (XZ) symmetrische, Biegeschwingungen um jeweils eine dem jeweiligen Meßrohr zugehörige statische Ruhelage, insb. Ausleger-Biegeschwingungen um jeweils eine zu wenigstens zwei der gedachten Verbindungsachsen parallele gedachte Schwingungsachse, als auch das sechste Meßrohr und das achte Meßrohr bezüglich der ersten gedachten Längsschnittebene (XZ) gegengleiche, insb. bezüglich der ersten gedachten Längsschnittebene (XZ) symmetrische, Biegeschwingungen um jeweils eine dem jeweiligen Meßrohr zugehörige statische Ruhelage, insb. Ausleger-Biegeschwingungen um jeweils eine zu wenigstens zwei der gedachten Verbindungsachsen parallele gedachte Schwingungsachse, ausführen können bzw. ausführen, derart,
-- daß, bezüglich der zweiten gedachten Längsschnittebene (YZ), sowohl nämliche Biegeschwingungen des ersten Meßrohrs gegengleich zu nämlichen Biegeschwingungen des zweiten Meßrohrs als auch nämliche Biegeschwingungen des dritten Meßrohrs gegengleich zu nämlichen Biegeschwingungen des vierten Meßrohrs sind,
-- daß, bezüglich der zweiten gedachten Längsschnittebene (YZ), sowohl nämliche Biegeschwingungen des fünften Meßrohrs gegengleich zu nämlichen Biegeschwingungen des sechsten Meßrohrs als auch nämliche Biegeschwingungen des siebenten Meßrohrs gegengleich zu nämlichen Biegeschwingungen des achten Meßrohrs sind, und
- daß die Biegeschwingungen des ersten Meßrohrs gegengleich zu den Biegeschwingungen des fünften Meßrohrs, die Biegeschwingungen des zweiten Meßrohrs gegengleich zu den Biegeschwingungen des sechsten Meßrohrs, die Biegeschwingungen des dritten Meßrohrs gegengleich zu den Biegeschwingungen des siebenten Meßrohrs, und die Biegeschwingungen des vierten Meßrohrs gegengleich zu den Biegeschwingungen des achten Meßrohr sind.

11. Meßaufnehmer nach einem der vorherigen Ansprüche, weiters umfassend:
- ein, insb. plattenförmiges, erstes Kopplerelement (24₁) erster Art, das zum Einstellen von Eigenfrequenzen natürlicher, insb. für die Generierung von Corioliskräften im durch die Meßrohre strömenden Medium und/oder für die Messung einer Massendurchflußrate des durch die Meßrohre strömenden Mediums nutzbarer, Schwingungsmoden der Rohranordnung und/oder zum Bilden von einlaßseitigen Schwingungsknoten sowohl für Vibrationen, insb. Biegeschwingungen, des ersten Meßrohrs als auch für dazu gegengleiche Vibrationen, insb. Biegeschwingungen, des zweiten Meßrohrs vom ersten Strömungsteiler beabstandet einlaßseitig, insb. lediglich, am ersten Meßrohr und am zweiten Meßrohr, insb. ansonsten an keinem weiteren der acht Meßrohre, fixiert ist;
- ein, insb. plattenförmiges und/oder zum ersten Kopplerelement (24₁) erster Art baugleiches, zweites Kopplerelement (24₂) erster Art, das das zum Einstellen von Eigenfrequenzen natürlicher, insb. für die Generierung von Corioliskräften im durch die Meßrohre strömenden Medium und/oder für die Messung einer Massendurchflußrate des durch die Meßrohre strömenden Mediums nutzbarer, Schwingungsmoden der Rohranordnung und/oder zum Bilden von auslaßseitigen Schwingungsknoten sowohl für Vibrationen, insb. Biegeschwingungen, des ersten Meßrohrs als auch für dazu gegengleiche Vibrationen, insb. Biegeschwingungen, des zweiten Meßrohrs vom zweiten Strömungsteiler beabstandet auslaßseitig, insb. lediglich, am ersten Meßrohr und am zweiten Meßrohr, insb. ansonsten an keinem weiteren der acht Meßrohre, fixiert ist;
- ein, insb. plattenförmiges und/oder zum ersten Kopplerelement (24₁) erster Art baugleiches und/oder zum zweiten Kopplerelement (24₂) erster Art paralleles, drittes Kopplerelement (24₃) erster Art, das das zum Einstellen von Eigenfrequenzen natürlicher, insb. für die Generierung von Corioliskräften im durch die Meßrohre strömenden Medium und/oder für die Messung einer Massendurchflußrate des durch die Meßrohre strömenden Mediums nutzbarer, Schwingungsmoden der Rohranordnung und/oder zum Bilden von einlaßseitigen Schwingungsknoten sowohl für Vibrationen, insb. Biegeschwingungen, des dritten Meßrohrs als auch für dazu gegengleiche Vibrationen, insb. Biegeschwingungen, des vierten Meßrohrs vom ersten Strömungsteiler beabstandet einlaßseitig, insb. lediglich, am dritten Meßrohr und am vierten Meßrohr, insb. ansonsten an keinem weiteren der acht Meßrohre, fixiert ist;
- ein, insb. plattenförmiges und/oder zum ersten Kopplerelement (24₁) erster Art baugleiches und/oder zum ersten Kopplerelement (24₁) erster Art paralleles, viertes Kopplerelement (24₄) erster Art, das das zum Einstellen von Eigenfrequenzen natürlicher, insb. für die Generierung von Corioliskräften im durch die Meßrohre strömenden Medium und/oder für die Messung einer Massendurchflußrate des durch die Meßrohre strömenden Mediums nutzbarer, Schwingungsmoden der Rohranordnung und/oder zum Bilden von auslaßseitigen Schwingungsknoten sowohl für Vibrationen, insb. Biegeschwingungen, des dritten Meßrohrs als auch für dazu gegengleiche Vibrationen, insb. Biegeschwingungen, des vierten Meßrohrs vom zweiten Strömungsteiler beabstandet auslaßseitig, insb. lediglich, am dritten Meßrohr und am vierten Meßrohr, insb. ansonsten an keinem weiteren der acht Meßrohre, fixiert ist;
- ein, insb. plattenförmiges und/oder zum ersten Kopplerelement (24₁) erster Art baugleiches, fünftes Kopplerelement (24₅) erster Art, das das zum Einstellen von Eigenfrequenzen natürlicher, insb. für die Generierung von Corioliskräften im durch die Meßrohre strömenden Medium und/oder für die Messung einer Massendurchflußrate des durch die Meßrohre strömenden Mediums nutzbarer, Schwingungsmoden der Rohranordnung und/oder zum Bilden von einlaßseitigen Schwingungsknoten sowohl für Vibrationen, insb. Biegeschwingungen, des fünften Meßrohrs als auch für dazu gegengleiche Vibrationen, insb. Biegeschwingungen, des sechsten Meßrohrs vom ersten Strömungsteiler beabstandet einlaßseitig, insb. lediglich, am fünften Meßrohr und am sechsten Meßrohr, insb. ansonsten an keinem weiteren der acht Meßrohre, fixiert ist;
- ein, insb. plattenförmiges und/oder zum fünften Kopplerelement (24₁) erster Art baugleiches, sechstes Kopplerelement (24₂) erster Art, das das zum Einstellen von Eigenfrequenzen natürlicher, insb. für die Generierung von Corioliskräften im durch die Meßrohre strömenden Medium und/oder für die Messung einer Massendurchflußrate des durch die Meßrohre strömenden Mediums nutzbarer, Schwingungsmoden der Rohranordnung und/oder zum Bilden von auslaßseitigen Schwingungsknoten sowohl für Vibrationen, insb. Biegeschwingungen, des fünften Meßrohrs als auch für dazu gegengleiche Vibrationen, insb. Biegeschwingungen, des sechsten Meßrohrs vom zweiten Strömungsteiler beabstandet auslaßseitig, insb. lediglich, am fünften Meßrohr und am sechsten Meßrohr, insb. ansonsten an keinem weiteren der acht Meßrohre, fixiert ist;
- ein, insb. plattenförmiges und/oder zum fünften Kopplerelement (24₁) erster Art baugleiches und/oder zum sechsten Kopplerelement (24₂) erster Art paralleles, siebentes Kopplerelement (24₃) erster Art, das zum Bilden von einlaßseitigen Schwingungsknoten sowohl für Vibrationen, insb. Biegeschwingungen, des siebenten Meßrohrs als auch für dazu gegengleiche Vibrationen, insb. Biegeschwingungen, des achten Meßrohrs vom ersten Strömungsteiler beabstandet einlaßseitig, insb. lediglich, am siebenten Meßrohr und am achten Meßrohr, insb. ansonsten an keinem weiteren der acht Meßrohre, fixiert ist; sowie
- ein, insb. plattenförmiges und/oder zum ersten Kopplerelement (24₁) erster Art baugleiches und/oder zum fünften Kopplerelement (24₁) erster Art paralleles, achtes Kopplerelement (24₄) erster Art, das das zum Einstellen von Eigenfrequenzen natürlicher, insb. für die Generierung von Corioliskräften im durch die Meßrohre strömenden Medium und/oder für die Messung einer Massendurchflußrate des durch die Meßrohre strömenden Mediums nutzbarer, Schwingungsmoden der Rohranordnung und/oder zum Bilden von auslaßseitigen Schwingungsknoten sowohl für Vibrationen, insb. Biegeschwingungen, des siebenten Meßrohrs als auch für dazu gegengleiche Vibrationen, insb. Biegeschwingungen, des achten Meßrohrs vom zweiten Strömungsteiler beabstandet auslaßseitig, insb. lediglich, am siebenten Meßrohr und am achten Meßrohr, insb. ansonsten an keinem weiteren der acht Meßrohre, fixiert ist.

12. Meßaufnehmer nach Anspruch 11, weiters umfassend:
- ein sowohl vom ersten Strömungsteiler als auch vom zweiten Strömungsteiler beabstandet, insb. lediglich, am ersten Meßrohr und am fünften Meßrohr, insb. ansonsten an keinem weiteren der acht Meßrohre, fixiertes, insb. plattenförmiges oder stabförmiges, erstes Kopplerelement (25₁) zweiter Art zum Einstellen von Eigenfrequenzen natürlicher, insb. für die Generierung von Corioliskräften im durch die Meßrohre strömenden Medium und/oder für die Messung einer Massendurchflußrate des durch die Meßrohre strömenden Mediums nutzbarer, Schwingungsmoden der Rohranordnung;
- ein sowohl vom ersten Strömungsteiler als auch vom zweiten Strömungsteiler beabstandet, insb. lediglich, am zweiten Meßrohr und am sechsten Meßrohr, insb. ansonsten an keinem weiteren der acht Meßrohre, fixiertes, insb. plattenförmiges oder stabförmiges, zweites Kopplerelement (25₂) zweiter Art zum Einstellen von Eigenfrequenzen natürlicher, insb. für die Generierung von Corioliskräften im durch die Meßrohre strömenden Medium und/oder für die Messung einer Massendurchflußrate des durch die Meßrohre strömenden Mediums nutzbarer, Schwingungsmoden der Rohranordnung;
- ein sowohl vom ersten Strömungsteiler als auch vom zweiten Strömungsteiler beabstandet, insb. lediglich, am dritten Meßrohr und am siebenten Meßrohr, insb. ansonsten an keinem weiteren der acht Meßrohre, fixiertes, insb. plattenförmiges oder stabförmiges, drittes Kopplerelement (25₃) zweiter Art zum Einstellen von Eigenfrequenzen natürlicher, insb. für die Generierung von Corioliskräften im durch die Meßrohre strömenden Medium und/oder für die Messung einer Massendurchflußrate des durch die Meßrohre strömenden Mediums nutzbarer, Schwingungsmoden der Rohranordnung; sowie
- ein sowohl vom ersten Strömungsteiler als auch vom zweiten Strömungsteiler beabstandet, insb. lediglich, am vierten Meßrohr und am achten Meßrohr, insb. ansonsten an keinem weiteren der acht Meßrohre, fixiertes, insb. plattenförmiges oder stabförmiges, viertes Kopplerelement (25₄) zweiter Art zum Einstellen von Eigenfrequenzen natürlicher, insb. für die Generierung von Corioliskräften im durch die Meßrohre strömenden Medium und/oder für die Messung einer Massendurchflußrate des durch die Meßrohre strömenden Mediums nutzbarer, Schwingungsmoden der Rohranordnung.

13. Meßaufnehmer nach dem vorherigen Anspruch,
- wobei das erste Kopplerelement zweiter Art sowohl an einem sich zwischen dem ersten Kopplerelement erster Art und dem zweiten Kopplerelement erster Art erstreckenden Rohrsegment des ersten Meßrohrs (18₁) als auch an einem sich zwischen dem fünften Kopplerelement erster Art und dem sechsten Kopplerelement erster Art erstreckenden Rohrsegment des fünften Meßrohrs (18₅) fixiert ist, insb. in einem Bereich eines Schwingungsknoten von Schwingungen des ersten Meßrohrs wie auch in einem Bereich eines Schwingungsknoten von Schwingungen des fünften Meßrohrs;
- wobei das zweite Kopplerelement zweiter Art sowohl an einem sich zwischen dem ersten Kopplerelement erster Art und dem zweiten Kopplerelement erster Art erstreckenden Rohrsegment des zweiten Meßrohrs (18₂) als auch an einem sich zwischen dem fünften Kopplerelement erster Art und dem sechsten Kopplerelement erster Art erstreckenden Rohrsegment des sechsten Meßrohrs (18₆) fixiert ist, insb. in einem Bereich eines Schwingungsknoten von Schwingungen des zweiten Meßrohrs wie auch in einem Bereich eines Schwingungsknoten von Schwingungen des sechsten Meßrohrs;
- wobei das dritte Kopplerelement zweiter Art sowohl an einem sich zwischen dem dritten Kopplerelement erster Art und dem vierten Kopplerelement erster Art erstreckenden Rohrsegment des dritten Meßrohrs (18₃) als auch an einem sich zwischen dem siebenten Kopplerelement erster Art und dem achten Kopplerelement erster Art erstreckenden Rohrsegment des siebenten Meßrohrs (18₇) fixiert ist, insb. in einem Bereich eines Schwingungsknoten von Schwingungen des dritten Meßrohrs wie auch in einem Bereich eines Schwingungsknoten von Schwingungen des siebenten Meßrohrs; und
- wobei das vierte Kopplerelement zweiter Art sowohl an einem sich zwischen dem dritten Kopplerelement erster Art und dem vierten Kopplerelement erster Art erstreckenden Rohrsegment des vierten Meßrohrs (18₄) als auch an einem sich zwischen dem siebenten Kopplerelement erster Art und dem achten Kopplerelement erster Art erstreckenden Rohrsegment des achten Meßrohrs (18₈) fixiert ist, insb. in einem Bereich eines Schwingungsknoten von Schwingungen des vierten Meßrohrs wie auch in einem Bereich eines Schwingungsknoten von Schwingungen des achten Meßrohrs.

14. Meßaufnehmer nach einem der Ansprüche 12 bis 13,
- wobei jedes der acht, insb. gleichgroßen, Kopplerelemente erster Art jeweils eine maximale Länge aufweist, die größer als ein Doppeltes eines Kalibers, D₁₈, des ersten Meßrohrs (18₁) ist, insb. kleiner als ein Dreifaches des Kalibers, D₁₈, des ersten Meßrohrs (18₁) ist; und/oder
- wobei jedes der vier, insb. baugleichen, Kopplerelemente zweiter Art jeweils zumindest abschnittsweise, insb. kreisbogenförmig, gekrümmt ist, insb. zwecks Ermöglichung von elastischen Verformungen des jeweiligen Kopplerelements infolge von gegengleichen Relativbewegungen der mit diesem jeweils verbundenen zwei Meßrohre und/oder zwecks Minimierung oder Vermeidung von durch thermisch bedingte Längeänderungen des jeweiligen Kopplerelements und/oder der mit diesem jeweils verbundenen zwei Meßrohre verursachten mechanischen Spannungen; und/oder
- wobei jedes der vier, insb. gleichgroßen, Kopplerelemente zweiter Art jeweils eine Länge, gemessen als kürzester Abstand zwischen einem mit einem der Meßrohre verbundenen ersten Elementende und einem mit einem anderen der Meßrohre verbundenen zweiten Elementende, aufweist, die größer als eine maximale Länge des ersten Kopplerelements erster Art und/oder die größer als ein Dreifaches eines Kalibers, D₁₈, des ersten Meßrohrs (18₁) ist, insb. größer als ein Vierfaches des Kalibers, D₁₈, des ersten Meßrohrs (18₁) ist.

15. Meßaufnehmer nach einem der Ansprüche 2 bis 14, wobei die beiden Strömungsteiler (20₁, 20₂) so ausgebildet und im Meßaufnehmer angeordnet sind,
- daß eine erste gedachte Längsschnittebene (XZ₁) des Meßaufnehmers, innerhalb der dessen, insb. zu einer mit der Rohrleitung fluchtenden Hauptströmungsachse des Meßaufnehmers parallele, erste gedachte Verbindungsachse (Z₁) und dessen zweite gedachte Verbindungsachse (Z₂) verlaufen, parallel zu einer zweiten gedachten Längsschnittebene (XZ₂) des Meßaufnehmers, innerhalb der dessen gedachte dritte Verbindungsachse (Z₃) und dessen gedachte vierte Verbindungsachse (Z₄) verlaufen, ist; insb. derart, daß die erste gedachte Längsschnittebene (XZ) der Rohranordnung zwischen der ersten und zweiten gedachten Längsschnittebene (XZ₁, XZ₂) des Meßaufnehmers liegt und/oder parallel zur ersten und zweiten gedachten Längsschnittebene (XZ₁, XZ₂) des Meßaufnehmers ist,
- daß eine dritte gedachte Längsschnittebene (YZ₁) des Meßaufnehmers, innerhalb der dessen gedachte erste Verbindungsachse (Z₁) und die dessen gedachte dritte Verbindungsachse (Z₃) verlaufen, parallel zu einer vierten gedachten Längsschnittebene (YZ₂) des Meßaufnehmers, innerhalb der dessen gedachte zweite Verbindungsachse (Z₂) und dessen gedachte vierte Verbindungsachse (Z₄) verlaufen, ist; insb. derart, daß die zweite gedachte Längsschnittebene (YZ) der Rohranordnung zwischen der dritten gedachten Längsschnittebene (YZ₁) des Meßaufnehmers und der vierten gedachten Längsschnittebene (YZ₂) des Meßaufnehmers liegt und/oder parallel zur dritten und vierten gedachten Längsschnittebene (YZ₁, YZ₂) des Meßaufnehmers ist,
- daß eine fünfte gedachte Längsschnittebene (XZ₃) des Meßaufnehmers, innerhalb der dessen, insb. zu einer mit der Rohrleitung fluchtenden Hauptströmungsachse des Meßaufnehmers parallele, fünfte gedachte Verbindungsachse (Z₅) und dessen sechste gedachte Verbindungsachse (Z₆) verlaufen, parallel zu einer sechsten gedachten Längsschnittebene (XZ₄) des Meßaufnehmers, innerhalb der dessen siebente gedachte Verbindungsachse (Z₇) und dessen gedachte achte Verbindungsachse (Z₈) verlaufen, ist; insb. derart, daß die erste gedachte Längsschnittebene (XZ) der Rohranordnung zwischen der fünften und sechsten gedachten Längsschnittebene (XZ₃, XZ₄) des Meßaufnehmers liegt und/oder parallel zur fünften und sechsten gedachten Längsschnittebene (XZ₃, XZ₄) des Meßaufnehmers ist, und
- daß eine siebente gedachte Längsschnittebene (YZ₃) des Meßaufnehmers, innerhalb der dessen fünfte gedachte Verbindungsachse (Z₅) und dessen siebente gedachte Verbindungsachse (Z₇) verlaufen, parallel zu einer achten gedachten Längsschnittebene (YZ₄) des Meßaufnehmers, innerhalb der dessen sechste gedachte Verbindungsachse (Z₆) und dessen achte gedachte Verbindungsachse (Z₈) verlaufen, ist; insb. derart, daß die zweite gedachte Längsschnittebene (YZ) der Rohranordnung zwischen der siebenten gedachten Längsschnittebene (YZ₃) des Meßaufnehmers und der achten gedachten Längsschnittebene (YZ₄) des Meßaufnehmers liegt und/oder parallel zur siebenten und achten gedachten Längsschnittebene (YZ₃,YZ₄) des Meßaufnehmers ist.

16. Meßaufnehmer nach Anspruch 15,
- wobei die Meßrohre so ausgebildet und angeordnet sind,
-- daß die dritte gedachte Längsschnittebene (YZ₁) des Meßaufnehmers sowohl das erste Meßrohr als auch das dritte Meßrohr jeweils imaginär längs schneidet,
-- daß die vierte gedachte Längsschnittebene (YZ₂) des Meßaufnehmers sowohl das zweite Meßrohr als auch das vierte Meßrohr jeweils imaginär längs schneidet,
-- daß die fünfte gedachte Längsschnittebene (XZ₃) des Meßaufnehmers sowohl das fünfte Meßrohr als auch das sechste Meßrohr jeweils imaginär längs schneidet, und
-- daß die sechste gedachte Längsschnittebene (XZ₄) des Meßaufnehmers sowohl das siebente Meßrohr als auch das achte Meßrohr jeweils imaginär längs schneidet; und/oder
wobei das erste Meßrohr, das zweite Meßrohr, das dritte Meßrohr sowie das vierte Meßrohr jeweils einen Meßrohr-Scheitelpunkt, definiert als größter senkrechter Abstand des jeweiligen Meßrohres von der ersten gedachten Längsschnittebene (XZ), aufweist, und das fünfte Meßrohr, das sechste Meßrohr, das siebente Meßrohr sowie das achte Meßrohr jeweils einen Meßrohr-Scheitelpunkt, definiert als größter senkrechter Abstand des jeweiligen Meßrohres von der zweiten gedachten Längsschnittebene (YZ), aufweist; und/oder
- wobei die Rohranordnung eine sowohl zur ersten gedachten Längsschnittebene (XZ) als auch zur zweiten gedachten Längsschnittebene (YZ) jeweils senkrechte gedachte Querschnittebene (XY) aufweist, insb. derart, daß ein Massenschwerpunkt der Rohranordnung in der gedachten Querschnittsebene (XY) liegt und/oder daß die Rohranordnung bezüglich der gedachten Querschnittsebene (XY) spiegelsymmetrisch ist und/oder daß das erste Meßrohr, das zweite Meßrohr, das dritte Meßrohr sowie das vierte Meßrohr jeweils einen Meßrohr-Scheitelpunkt, definiert als größter senkrechter Abstand des jeweiligen Meßrohres von der ersten gedachten Längsschnittebene (XZ), bzw. das fünfte Meßrohr, das sechste Meßrohr, das siebente Meßrohr sowie das achte Meßrohr jeweils einen Meßrohr-Scheitelpunkt, definiert als größter senkrechter Abstand des jeweiligen Meßrohres von der zweiten gedachten Längsschnittebene (YZ), aufweisen, und daß die gedachte Querschnittsebene (XY) jedes der acht Meßrohre in dessen jeweiligen Meßrohr-Scheitelpunkt schneidet.

17. Meßaufnehmer nach einem der vorherigen Ansprüche,
- wobei das erste Meßrohr ein Kaliber aufweist, das gleich einem Kaliber des zweiten Meßrohrs, insb. auch gleich einem Kaliber des dritten Meßrohrs sowie gleich einem Kaliber des vierten Meßrohrs ist; und/oder
- wobei die acht Meßrohre hinsichtlich eines Materials, aus dem deren Rohrwände bestehen, und/oder hinsichtlich ihrer geometrischen Rohr-Abmessungen, insb. einer Meßrohrlänge, einer Rohrwandstärke, eines Rohr-Außendurchmessers und/oder eines Kalibers, baugleich sind; und/oder
- wobei ein Material, aus dem die Rohrwände der acht Meßrohre zumindest anteilig bestehen, Titan und/oder Zirconium und/oder Edelstahl und/oder Duplexstahl und/oder Superduplexstahl ist; und/oder
- wobei das Aufnehmer-Gehäuse (7₁), die Strömungsteiler (20₁, 20₂) und Rohrwände der acht Meßrohre jeweils aus, insb. rostfreiem und/oder hochfestem, Stahl bestehen; und/oder
- wobei jedes der wenigstens acht, insb. gleichgroßen, Meßrohre (18₁, 18₂, 18₃, 18₄) ein Kaliber, D₁₈, aufweist, das mehr als 10 mm, insb. mehr als 30 mm, beträgt; und/oder
- wobei die Meßrohre (18₁, 18₂, 18₃, 18₄) so gebogen und so angeordnet sind, daß ein Kaliber-zu-Höhe-Verhältnis, D₁₈/Q₁₈, der Rohranordnung, definiert durch ein Verhältnis eines Kalibers, D₁₈, des ersten Meßrohrs zu einer maximalen seitlichen Ausdehnung, Q₁₈, der Rohranordnung, gemessen von einem Meßrohr-Scheitelpunkt des ersten Meßrohrs (18₁) zu einem Meßrohr-Scheitelpunkt des dritten Meßrohrs (18₃), mehr als 0.05, insb. mehr als 0.07 und/oder weniger als 0.5, insb. weniger als 0.4, beträgt; und/oder
- wobei ein Kaliber-zu-Nennweite-Verhältnis, D₁₈/D₁₁, des Meßaufnehmers, definiert durch ein Verhältnis eines Kalibers, D₁₈, des ersten Meßrohrs zu einer einem Kaliber der Rohrleitung, in deren Verlauf der Meßaufnehmer einzusetzen ist, entsprechenden nominellen Nennweite, D₁₁, des Meßaufnehmers kleiner als 0.4, insb. kleiner als 0.35 und/oder größer als 0.21, ist; und/oder
- wobei eine einem Kaliber der Rohrleitung, in deren Verlauf der Meßaufnehmer einzusetzen ist, entsprechende nominelle Nennweite des Meßaufnehmers mehr als 50 mm beträgt, insb. größer als 100 mm ist; und/oder
- wobei der erste Strömungsteiler (20₁) einen Flansch (6₁) zum Anschließen des Meßaufnehmers an ein dem Zuführen von Medium zum Meßaufnehmer dienendes Rohrsegment der Rohrleitung und der zweite Strömungsteiler (20₂) einen Flansch (6₂) zum Anschließen des Meßaufnehmers an ein dem Abführen von Medium vom Meßaufnehmer dienendes Rohrsegment der Rohrleitung aufweisen; und/oder
- wobei eine einer Länge eines zwischen der ersten Strömungsöffnung (20_{1A}) des ersten Strömungsteilers (20₁) und der ersten Strömungsöffnung (20_{2A}) des zweiten Strömungsteilers (20₂) verlaufenden Abschnitts einer Biegelinie des ersten Meßrohrs entsprechende Meßrohrlänge, L₁₈, des ersten Meßrohrs (18₁) mehr als 1000 mm, insb. mehr als 1200 mm und/oder weniger als 3000 mm, insb. weniger als 2500 mm beträgt; und/oder
- wobei der erste Strömungsteiler (20₁) einen zwischen dessen Strömungsöffnungen plazierten, insb. konus- oder paraboloid-förmigen, Strömungskörper zum Reduzieren eines Strömungswiderstandes des ersten Strömungsteilers (20₁) und der zweite Strömungsteiler (20₂) einen zwischen dessen Strömungsöffnungen plazierten, insb. konus- oder paraboloid-förmigen, Strömungskörper zum Reduzieren eines Strömungswiderstandes des zweiten Strömungsteilers (20₁) aufweisen; und/oder
- wobei mittels der Erregeranordnung jedes der acht Meßrohre (18₁, 18₂, 18₃, 18₄, 18₅, 18₆, 18₇, 18₈), insb. simultan, zu Biegeschwingungen anregbar ist.

18. Meßaufnehmer nach einem der vorherigen Ansprüche, weiters umfassend eine auf Vibrationen, insb. mittels der Erregeranordnung angeregten Biegeschwingungen, der Meßrohre reagierende, insb. elektro-dynamische und/oder mittels einander baugleicher Schwingungssensoren (19₁, 19₂, 19₃, 19₄, 19₅, 19₆, 19₇, 19₈) gebildete, Sensoranordnung (19) zum Erzeugen von Vibrationen, insb. Biegeschwingungen, der Meßrohre repräsentierenden Schwingungssignalen.

19. Meßaufnehmer nach dem vorherigen Anspruch, wobei die Sensoranordnung (19):
- mittels eines, insb. elektrodynamischen und/oder Schwingungen des ersten Meßrohrs (18₁) relativ zum zweiten Meßrohr (18₂) differentiell erfassenden, einlaßseitigen ersten Schwingungssensors (19₁) sowie eines, insb. elektrodynamischen und/oder Schwingungen des ersten Meßrohrs (18₁) relativ zum zweiten Meßrohr (18₂) differentiell erfassenden, auslaßseitigen zweiten Schwingungssensors (19₂),
- mittels eines, insb. elektrodynamischen und/oder Schwingungen des dritten Meßrohrs (18₃) relativ zum vierten Meßrohr (18₄) differentiell erfassenden und/oder mit dem ersten Schwingungssensor (19₁) elektrisch seriell verschalteten, einlaßseitigen dritten Schwingungssensors (19₃) sowie eines, insb. elektrodynamischen und/oder Schwingungen des dritten Meßrohrs (18₃) relativ zum vierten Meßrohr (18₄) differentiell erfassenden und/oder mit dem zweiten Schwingungssensor (19₂) elektrisch seriell verschalteten, auslaßseitigen vierten Schwingungssensors (19₄),
- mittels eines, insb. elektrodynamischen und/oder Schwingungen des fünften Meßrohrs (18₅) relativ zum sechsten Meßrohr (18₆) differentiell erfassenden und/oder mit dem ersten Schwingungssensor (19₁) elektrisch seriell verschalteten, einlaßseitigen fünften Schwingungssensors (19₅) sowie eines, insb. elektrodynamischen und/oder Schwingungen des fünften Meßrohrs (18₅) relativ zum sechsten Meßrohr (18₆) differentiell erfassenden und/oder mit dem zweiten Schwingungssensor (19₂) elektrisch seriell verschalteten, auslaßseitigen sechsten Schwingungssensors (19₆), sowie
- mittels eines, insb. elektrodynamischen und/oder Schwingungen des siebenten Meßrohrs (18₇) relativ zum achten Meßrohr (18₈) differentiell erfassenden und/oder mit dem ersten Schwingungssensor (19₁) elektrisch seriell verschalteten, einlaßseitigen siebenten Schwingungssensors (19₇) sowie eines, insb. elektrodynamischen und/oder Schwingungen des siebenten Meßrohrs (18₇) relativ zum achten Meßrohr (18₈) differentiell erfassenden und/oder mit dem zweiten Schwingungssensor (19₂) elektrisch seriell verschalteten, auslaßseitigen achten Schwingungssensors (19₈) gebildet ist.

20. Meßsystem zum Messen einer Dichte und/oder einer Massendurchflußrate, insb. auch eines über ein Zeitintervall totalisierten Gesamt-Massendurchflusses, eines in einer Rohrleitung zumindest zeitweise, insb. mit einer Massendurchflußrate von mehr als 1000 t/h, strömenden Mediums, insb. eines Gases, einer Flüssigkeit, eines Pulvers oder eines anderen strömungsfähigen Stoffes, welches, insb. als In-Line-Meßgerät und/oder Meßgerät in Kompaktbauweise ausgebildetes, Meßsystem einen Meßaufnehmer gemäß einem der Ansprüche 1 bis 19 sowie eine mit dem Meßaufnehmer elektrisch gekoppelte, insb. in einem mechanisch mit dem Aufnehmer-Gehäuse verbundenen Elektronik-Gehäuse angeordneten, Umformer-Elektronik zum Ansteuern des Meßaufnehmers, insb. von dessen Erregeranordnung, und zum Auswerten von vom Meßaufnehmer gelieferten Schwingungssignalen umfaßt.

21. Meßsystem nach Anspruch 20,
- wobei die acht Meßrohre im Betrieb, angeregt von der Erregeranordnung, simultan Biegeschwingungen, ausführen, insb. Biegeschwingungen in einem der Rohranordnung immanenten natürlichen Schwingungsmode; und/oder
- wobei die Erregeranordnung Schwingungen der Meßrohre dadurch bewirkt, daß eine mittels des ersten Schwingungserregers generierte, auf das erste Meßrohr wirkende Erregerkraft zu einer mittels des ersten Schwingungserregers zeitgleich generierten, auf das zweite Meßrohr wirkenden Erregerkraft entgegengerichtet, insb. gegengleich, ist; und/oder
- wobei die Umformer-Elektronik anhand von in der Erregeranordnung umgesetzter elektrischer Erregerleistung einen die Viskosität des strömenden Mediums repräsentierenden Viskosität-Meßwert generiert; und/oder
- wobei die Umformer-Elektronik anhand von vom Meßaufnehmer gelieferten Schwingungssignalen einen die Massendurchflußrate des strömenden Mediums repräsentierenden Massendurchfluß-Meßwert generiert; und/oder
- wobei die Umformer-Elektronik anhand von vom Meßaufnehmer gelieferten Schwingungssignalen einen die Dichte des strömenden Mediums repräsentierenden Dichte-Meßwert generiert; und/oder
- wobei die Umformer-Elektronik (12) mittels wenigstens eines, insb. mit wenigstens einer mit einer einer Resonanzfrequenz eines natürlichen Schwingungsmodes der Rohranordnung entsprechenden Signalfrequenz veränderlichen und/oder zumindest zeitweise periodischen, der Erregeranordnung zugeführten elektrischen Treibersignals, insb. mit einer veränderlichen maximalen Spannungshöhe und/oder einer veränderlichen maximalen Stromstärke, elektrische Erregerleistung in die Erregeranordnung einspeist und die Erregeranordnung (5) die, insb. von einer Spannungshöhe und einer Stromstärke des wenigstens einen Treibersignals abhängige, elektrische Erregerleistung zumindest anteilig sowohl in Biegeschwingungen des ersten Meßrohrs (18₁) und zu den Biegeschwingungen des ersten Meßrohrs (18₁) bezüglich der zweiten gedachten Längsschnittebene (YZ) der Rohranordnung gegengleiche Biegeschwingungen des zweiten Meßrohrs (18₂) als auch in Biegeschwingungen des dritten Meßrohrs (18₁) und zu den Biegeschwingungen des dritten Meßrohrs (18₃) bezüglich der zweiten gedachten Längsschnittebene (YZ) der Rohranordnung gegengleiche Biegeschwingungen des vierten Meßrohrs (18₄) wandelt.

22. Verwenden eines Meßaufnehmers gemäß einem der Ansprüche 1 bis 19 oder eines Meßsystems gemäß einem der Ansprüche 20 bis 21 zum Messen einer Dichte und/oder einer Massendurchflußrate, insb. auch eines über ein Zeitintervall totalisierten Gesamt-Massendurchflusses, und/oder einer Viskosität und/oder einer Reynoldszahl eines in einer Prozeßleitung, insb. einer Rohrleitung, zumindest zeitweise mit einer Massendurchflußrate von mehr als 1000 t/h, insb. mehr als 1500 t/h, strömenden Mediums, insb. eines Gases, einer Flüssigkeit, eines Pulvers oder eines anderen strömungsfähigen Stoffes.

## Claims

1. Vibronic-type sensor for measuring at least one physical measured variable of a flowable medium conducted in a pipe, particularly a gas, a liquid, a powder or another substance that can flow, and/or for generating Coriolis forces, which are used to measure a mass flow rate of a flowable medium flowing through a pipe, particularly a gas, a liquid, a powder or another substance that can flow, said sensor comprising:
- a sensor housing (7₁), particularly essentially tubular in part and/or partially circular cylindrical on the exterior, of which a first housing end on the inlet side is formed using a first flow divider (20₁) situated on the inlet side and having eight flow openings (20_{1A}, 20_{1B}, 20_{1C}, 20_{1D}, 20_{1E}, 20_{1F}, 20_{1G}, 20_{1H}) which are spaced apart from one another and are particularly circular cylindrical, conical or cone-shaped, and of which a second housing end on the outlet side is formed using a second flow divider (20₂) situated on the outlet side and having eight flow openings (20_{2A}, 20_{2B}, 20_{2C} 20_{2D}, 20_{2E}, 20_{2F}, 20_{2G}, 20_{2H}) which are spaced apart from one another and are particularly circular cylindrical, conical or cone-shaped;
- a tube arrangement (18) with at least eight measuring tubes (18₁, 18₂, 18₃, 18₄, 18₅, 18₆, 18₇, 18₈) forming flow paths that are coupled in parallel from a flow perspective, said measuring tubes being connected to the, particularly structurally identical, flow dividers (20₁, 20₂) and being curved, particularly being held in the sensor housing in a manner capable of vibration solely by means of said flow dividers (20₁, 20₂), and/or being structurally identical and/or parallel to one another in pairs and/or being at least partially V-shaped, and being designed to conduct flowing medium, of said measuring tubes
-- a first measuring tube (18₁) enters with an inlet-side first measuring tube end into a first flow opening (20_{1A}) of the first flow divider (20₁) and with an outlet-side second measuring tube end into a first flow opening (20_{2A}) of the second flow divider (20₂),
-- a second measuring tube (18₂), particularly at least partially parallel to the first measuring tube, with an inlet-side first measuring tube end entering into a second flow opening (20_{1B}) of the first flow divider (20₁) and with an outlet-side second measuring tube end entering into a second flow opening (20_{2B}) of the second flow divider (20₂),
-- a third measuring tube (18₃) with an inlet-side first measuring tube end entering into a third flow opening (20_{1C}) of the first flow divider (20₁) and with an outlet-side second measuring tube end entering into a third flow opening (20_{2C}) of the second flow divider (20₂),
-- a fourth measuring tube (18₄), particularly at least partially parallel to the third measuring tube, with an inlet-side first measuring tube end entering into a fourth flow opening (20_{1D}) of the first flow divider (20₁) and with an outlet-side second measuring tube end entering into a fourth flow opening (20_{2D}) of the second flow divider (20₂),
-- a fifth measuring tube (18₅) with an inlet-side first measuring tube end entering into a fifth flow opening (20_{1E}) of the first flow divider (20₁) and with an outlet-side second measuring tube end entering into a fifth flow opening (20_{2E}) of the second flow divider (20₂),
-- a sixth measuring tube (18₆), particularly at least partially parallel to the fifth measuring tube, with an inlet-side first measuring tube end entering into a sixth flow opening (20_{1F}) of the first flow divider (20₁) and with an outlet-side second measuring tube end entering into a sixth flow opening (20_{2F}) of the second flow divider (20₂),
-- a seventh measuring tube (18₇) with an inlet-side first measuring tube end entering into a seventh flow opening (20_{1G}) of the first flow divider (20₁) and with an outlet-side second measuring tube end entering into a seventh flow opening (20_{2G}) of the second flow divider (20₂), and
-- an eighth measuring tube (18₈), particularly at least partially parallel to the seventh measuring tube, with an inlet-side first measuring tube end entering into an eighth flow opening (20_{1H}) of the first flow divider (20₁) and with an outlet-side second measuring tube end entering into an eighth flow opening (20_{2H}) of the second flow divider (20₂); as well as
- an electromechanical exciter arrangement (5) comprising
-- a first vibration generator (5₁), particularly electrodynamic, generating in a differential manner vibrations of the first measuring tube (18₁) in relation to the second measuring tube (18₂),
-- a second vibration generator (5₂), particularly electrodynamic and/or structurally identical to the first vibration generator (5₁), generating in a differential manner vibrations of the third measuring tube (18₃) in relation to the fourth measuring tube (18₄),
-- a third vibration generator (5₃), particularly electrodynamic and/or structurally identical to the first vibration generator (5₁), generating in a differential manner vibrations of the fifth measuring tube (18₅) in relation to the sixth measuring tube (18₆),
-- and a fourth vibration generator (5₄), particularly electrodynamic and/or structurally identical to the first vibration generator (5₁), generating in a differential manner vibrations of the seventh measuring tube (18₇) in relation to the eighth measuring tube (18₈), said arrangement being designed to generate and/or maintain flexural vibrations of each of the eight measuring tubes (18₁, 18₂, 18₃, 18₄, 18₅, 18₆, 18₇, 18₈) notably flexural vibrations corresponding to a natural vibration mode of the tube arrangement.

2. Sensor as claimed in one of the previous claims,
- wherein the two flow dividers (20₁, 20₂) are designed and arranged in the sensor in such a way that
-- a first imaginary connecting axis (Z₁) of the sensor, connecting in an imaginary manner the first flow opening (20_{1A}) of the first flow divider (20₁) with the first flow opening (20_{2A}) of the second flow divider (20₂), is parallel to a second imaginary connecting axis (Z₂) of the sensor, connecting in an imaginary manner the second flow opening (20_{1B}) of the first flow divider (20₁) with the second flow opening (20_{2B}) of the second flow divider (20₂), and
-- a third imaginary connecting axis (Z₃) of the sensor, connecting in an imaginary manner the third flow opening (20_{1C}) of the first flow divider (20₁) with the third flow opening (20_{2C}) of the second flow divider (20₂), is parallel to a fourth imaginary connecting axis (Z₄) of the sensor, connecting in an imaginary manner the fourth flow opening (20_{1D}) of the first flow divider (20₁) with the fourth flow opening (20_{2B}) of second flow divider (20₂).

3. Sensor as claimed in the previous claim,
- wherein the two flow dividers (20₁, 20₂) are designed and arranged in the sensor in such a way that
-- a fifth imaginary connecting axis (Z₅) of the sensor, connecting in an imaginary manner the fifth flow opening (20_{1E}) of the first flow divider (20₁) with the fifth flow opening (20_{2E}) of the second flow divider (20₂), is parallel to a sixth imaginary connecting axis (Z₆) of the sensor, connecting in an imaginary manner the sixth flow opening (20_{1F}) of the first flow divider (20₁) with the sixth flow opening (20_{2F}) of the second flow divider (20₂), and
-- a seventh imaginary connecting axis (Z₇) of the sensor, connecting in an imaginary manner the seventh flow opening (20_{1G}) of the first flow divider (20₁) with the seventh flow opening (20_{2G}) of the second flow divider (20₂), is parallel to an eighth imaginary connecting axis (Z₈) of the sensor, connecting in an imaginary manner the eighth flow opening (20_{1H}) of the first flow divider (20₁) with the eighth flow opening (20_{2H}) of the second flow divider (20₂).

4. Sensor as claimed in one of the previous claims, wherein the measuring tubes are designed in such a way and arranged in the sensor in such a way that the tube arrangement has a first imaginary longitudinal section plane (XZ), situated both between the first measuring tube and the third measuring tube, and between the second measuring tube and the fourth measuring tube, particularly parallel to the first, second, third and fourth measuring tube, wherein the tube arrangement is mirror symmetrical in relation to said plane.

5. Sensor as claimed in Claim 4, wherein the measuring tubes are designed in such a way and arranged in the sensor in such a way that the tube arrangement has a second imaginary longitudinal section plane (YZ), situated both between the fifth measuring tube and the sixth measuring tube, and between the seventh measuring tube and the eighth measuring tube, particularly parallel to the fifth, sixth, seventh and eighth measuring tube and/or perpendicular to the first imaginary longitudinal section plane (XZ), wherein the tube arrangement is mirror symmetrical in relation to said second plane.

6. Sensor as claimed in Claim 5,
- wherein the exciter arrangement is designed in such a way that the first measuring tube (18₁) and the second measuring tube (18₂) can be excited to perform flexural vibrations diametrically opposed in relation to the second imaginary longitudinal section plane (YZ), particularly symmetrical flexural vibrations in relation to the second imaginary longitudinal section plane (YZ), and the third measuring tube (18₃) and the fourth measuring tube (18₄) can be excited to flexural vibrations which are diametrically opposed in relation to the second imaginary longitudinal section plane (YZ), and particularly symmetrical flexural vibrations in relation to the second imaginary longitudinal section plane (YZ); and/or
- wherein the exciter arrangement is designed in such a way that the fifth measuring tube (18₅) and the sixth measuring tube (18₆) can be excited to perform flexural vibrations diametrically opposed in relation to the first imaginary longitudinal section plane (XZ), particularly symmetrical flexural vibrations in relation to the first imaginary longitudinal section plane (XZ), and the seventh measuring tube (18₇) and the eighth measuring tube (18₈) can be excited to flexural vibrations which are diametrically opposed in relation to the first imaginary longitudinal section plane (XZ), and particularly symmetrical flexural vibrations in relation to the first imaginary longitudinal section plane (XZ).

7. Sensor as claimed in one of the Claims 5 to 6, wherein the tube arrangement has at least one natural mode of vibration, which can be used in particular for the generation of Coriolis forces in the medium flowing through the measuring tubes,
- in said mode of vibration both the first measuring tube and the third measuring tube can perform or perform flexural vibrations diametrically opposed in relation to the first imaginary longitudinal section plane (XZ), particularly symmetrical flexural vibrations in relation to the first imaginary longitudinal section plane (XZ), around a static rest position in relation to the respective measuring tube, particularly cantilever flexural vibrations around an imaginary axis of vibration parallel to at least two of the imaginary connection axes, and the second measuring tube and the fourth measuring tube can perform or perform flexural vibrations diametrically opposed in relation to the first imaginary longitudinal section plane (XZ), particularly symmetrical flexural vibrations in relation to the first imaginary longitudinal section plane (XZ), around a static rest position in relation to the respective measuring tube, particularly cantilever flexural vibrations around an imaginary axis of vibration parallel to at least two of the imaginary connection axes, particularly in such a way that, in relation to the second imaginary longitudinal section plane (YZ), both said flexural vibrations of the first measuring tube are diametrically opposed to said flexural vibrations of the second measuring tube, and said flexural vibrations of the third measuring tube are diametrically opposed to said flexural vibrations of the fourth measuring tube; and/or
- in said mode of vibration both the fifth measuring tube and the seventh measuring tube can perform or perform flexural vibrations diametrically opposed in relation to the first imaginary longitudinal section plane (XZ), particularly symmetrical flexural vibrations in relation to the first imaginary longitudinal section plane (XZ), around a static rest position in relation to the respective measuring tube, particularly cantilever flexural vibrations around an imaginary axis of vibration parallel to at least two of the imaginary connection axes, and the sixth measuring tube and the eighth measuring tube can perform or perform flexural vibrations diametrically opposed in relation to the first imaginary longitudinal section plane (XZ), particularly symmetrical flexural vibrations in relation to the first imaginary longitudinal section plane (XZ), around a static rest position in relation to the respective measuring tube, particularly cantilever flexural vibrations around an imaginary axis of vibration parallel to at least two of the imaginary connection axes, particularly in such a way that, in relation to the second imaginary longitudinal section plane (YZ), both said flexural vibrations of the first measuring tube are diametrically opposed to said flexural vibrations of the sixth measuring tube, and said flexural vibrations of the seventh measuring tube are diametrically opposed to said flexural vibrations of the eighth measuring tube; and/or
- in said mode of vibration
-- the first measuring tube and the fifth measuring tube can perform or perform flexural vibrations in phase around a static rest position pertaining to the respective measuring tube, particularly cantilever flexural vibrations around an imaginary vibration axis, which is parallel to at least two of the imaginary connection axes,
-- the second measuring tube and the sixth measuring tube can perform or perform flexural vibrations in phase around a static rest position pertaining to the respective measuring tube, particularly cantilever flexural vibrations around an imaginary vibration axis, which is parallel to at least two of the imaginary connection axes,
-- the third measuring tube and the seventh measuring tube can perform or perform flexural vibrations in phase around a static rest position pertaining to the respective measuring tube, particularly cantilever flexural vibrations around an imaginary vibration axis, which is parallel to at least two of the imaginary connection axes, and
-- the fourth measuring tube and the eighth measuring tube can perform or perform flexural vibrations in phase around a static rest position pertaining to the respective measuring tube, particularly cantilever flexural vibrations around an imaginary vibration axis, which is parallel to at least two of the imaginary connection axes.

8. Sensor as claimed in the previous claim, wherein said mode of vibration can be excited with the exciter arrangement.

9. Sensor as claimed in one of the Claims 5 to 8,
- wherein the tube arrangement has at least a first-order natural vibration mode, utilizable particularly for the generation of Coriolis forces in the medium flowing through the measuring tubes and/or for the measurement of a mass flow rate of the medium flowing through the measuring tubes,
-- in said first-order vibration mode both the first measuring tube and the third measuring tube can perform or perform flexural vibrations diametrically opposed in relation to the first imaginary longitudinal section plane (XZ), particularly symmetrical flexural vibrations in relation to the first imaginary longitudinal section plane (XZ), around a static rest position pertaining to the respective measuring tube, particularly cantilever flexural vibrations around an imaginary axis of vibration parallel to at least two of the imaginary connection axes, and the second measuring tube and the fourth measuring tube can perform or perform flexural vibrations diametrically opposed in relation to the first imaginary longitudinal section plane (XZ), particularly symmetrical flexural vibrations in relation to the first imaginary longitudinal section plane (XZ), around a static rest position pertaining to the respective measuring tube, particularly cantilever flexural vibrations around an imaginary axis of vibration parallel to at least two of the imaginary connection axes, and
-- in said first-order vibration mode both the fifth measuring tube and the seventh measuring tube can perform or perform flexural vibrations diametrically opposed in relation to the first imaginary longitudinal section plane (XZ), particularly symmetrical flexural vibrations in relation to the first imaginary longitudinal section plane (XZ), around a static rest position pertaining to the respective measuring tube, particularly cantilever flexural vibrations around an imaginary axis of vibration parallel to at least two of the imaginary connection axes, and the sixth measuring tube and the eighth measuring tube can perform or perform flexural vibrations diametrically opposed in relation to the first imaginary longitudinal section plane (XZ), particularly symmetrical flexural vibrations in relation to the first imaginary longitudinal section plane (XZ), around a static rest position pertaining to the respective measuring tube, particularly cantilever flexural vibrations around an imaginary axis of vibration parallel to at least two of the imaginary connection axes, in such a way,
--- that in relation to the second imaginary longitudinal section plane (YZ), both said flexural vibrations of the first measuring tube are diametrically opposed to said flexural vibrations of the second measuring tube, and said flexural vibrations of the third measuring tube are diametrically opposed to said flexural vibrations of the fourth measuring tube,
--- that in relation to the second imaginary longitudinal section plane (YZ), both said flexural vibrations of the fifth measuring tube are diametrically opposed to said flexural vibrations of the sixth measuring tube, and said flexural vibrations of the seventh measuring tube are diametrically opposed to said flexural vibrations of the eighth measuring tube, and
-- that the flexural vibrations of the first measuring tube are in phase with the flexural vibrations of the fifth measuring tube, the flexural vibrations of the second measuring tube are in phase with the flexural vibrations of the sixth measuring tube, the flexural vibrations of the third measuring tube are in phase with the flexural vibrations of the seventh measuring tube, and the flexural vibrations of the fourth measuring tube are in phase with the flexural vibrations of the eighth measuring tube,
- and wherein said first-type vibration mode can be excited with the exciter arrangement.

10. Sensor as claimed in Claim 9, wherein the tube arrangement has at least a second-order type natural vibration mode, utilizable particularly for the generation of Coriolis forces in the medium flowing through the measuring tubes and/or for the measurement of a mass flow rate of the medium flowing through the measuring tubes,
- in said second-order vibration mode both the first measuring tube and the third measuring tube can perform or perform flexural vibrations diametrically opposed in relation to the first imaginary longitudinal section plane (XZ), particularly symmetrical flexural vibrations in relation to the first imaginary longitudinal section plane (XZ), around a static rest position pertaining to the respective measuring tube, particularly cantilever flexural vibrations around an imaginary axis of vibration parallel to at least two of the imaginary connection axes, and the second measuring tube and the fourth measuring tube can perform or perform flexural vibrations diametrically opposed in relation to the first imaginary longitudinal section plane (XZ), particularly symmetrical flexural vibrations in relation to the first imaginary longitudinal section plane (XZ), around a static rest position pertaining to the respective measuring tube, particularly cantilever flexural vibrations around an imaginary axis of vibration parallel to at least two of the imaginary connection axes, and
- in said second-order vibration mode both the fifth measuring tube and the seventh measuring tube can perform or perform flexural vibrations diametrically opposed in relation to the first imaginary longitudinal section plane (XZ), particularly symmetrical flexural vibrations in relation to the first imaginary longitudinal section plane (XZ), around a static rest position pertaining to the respective measuring tube, particularly cantilever flexural vibrations around an imaginary axis of vibration parallel to at least two of the imaginary connection axes, and the sixth measuring tube and the eighth measuring tube can perform or perform flexural vibrations diametrically opposed in relation to the first imaginary longitudinal section plane (XZ), particularly symmetrical flexural vibrations in relation to the first imaginary longitudinal section plane (XZ), around a static rest position pertaining to the respective measuring tube, particularly cantilever flexural vibrations around an imaginary axis of vibration parallel to at least two of the imaginary connection axes, in such a way,
-- that in relation to the second imaginary longitudinal section plane (YZ), both said flexural vibrations of the first measuring tube are diametrically opposed to said flexural vibrations of the second measuring tube, and said flexural vibrations of the third measuring tube are diametrically opposed to said flexural vibrations of the fourth measuring tube,
--- that in relation to the second imaginary longitudinal section plane (YZ), both said flexural vibrations of the fifth measuring tube are diametrically opposed to said flexural vibrations of the sixth measuring tube, and said flexural vibrations of the seventh measuring tube are diametrically opposed to said flexural vibrations of the eighth measuring tube, and
-- that the flexural vibrations of the first measuring tube are diametrically opposed to the flexural vibrations of the fifth measuring tube, the flexural vibrations of the second measuring tube are diametrically opposed to the flexural vibrations of the sixth measuring tube, the flexural vibrations of the third measuring tube are diametrically opposed to the flexural vibrations of the seventh measuring tube, and the flexural vibrations of the fourth measuring tube are diametrically opposed to the flexural vibrations of the eighth measuring tube.

11. Sensor as claimed in one of the previous claims, further comprising:
- a first first-type coupling element (24₁), particularly plate-shaped, which is fixed, particularly solely, on the first measuring tube and on the second measuring tube on the inlet side, and particularly is not fixed on any other of the eight measuring tubes, for the purpose of regulating eigen frequencies of natural vibration modes of the tube arrangement, particularly utilizable for the generation of Coriolis forces in the medium flowing through the measuring tubes and/or for the measurement of a mass flow rate of the medium flowing through the measuring tubes and/or for the formation of vibration nodes on the inlet side both for vibrations, particularly flexural vibrations, of the first measuring tube and for vibrations diametrically opposed thereto, particularly flexural vibrations, of the second measuring tube at a distance from the first flow divider;
- a second first-type coupling element (24₂), particularly plate-shaped and/or structurally identical to the first first-type coupling element (24₁), said second coupling element being fixed, particularly solely, on the first measuring tube and on the second measuring tube on the outlet side, and particularly not being fixed on any other of the eight measuring tubes, for the purpose of regulating eigen frequencies of natural vibration modes of the tube arrangement, particularly utilizable for the generation of Coriolis forces in the medium flowing through the measuring tubes and/or for the measurement of a mass flow rate of the medium flowing through the measuring tubes and/or for the formation of vibration nodes on the outlet side both for vibrations, particularly flexural vibrations, of the first measuring tube and for vibrations diametrically opposed thereto, particularly flexural vibrations, of the second measuring tube at a distance from the second flow divider;
- a third first-type coupling element (24₃), particularly plate-shaped and/or structurally identical to the first first-type coupling element (24₁) and/or parallel to the second first-type coupling element (24₂), said third coupling element being fixed, particularly solely, on the third measuring tube and on the fourth measuring tube on the inlet side, and particularly not being fixed on any other of the eight measuring tubes, for the purpose of regulating eigen frequencies of natural vibration modes of the tube arrangement, particularly utilizable for the generation of Coriolis forces in the medium flowing through the measuring tubes and/or for the measurement of a mass flow rate of the medium flowing through the measuring tubes and/or for the formation of vibration nodes on the inlet side both for vibrations, particularly flexural vibrations, of the third measuring tube and for vibrations diametrically opposed thereto, particularly flexural vibrations, of the fourth measuring tube at a distance from the first flow divider;
- a fourth first-type coupling element (24₄), particularly plate-shaped and/or structurally identical to the first first-type coupling element (24₁) and/or parallel to the first first-type coupling element (24₁), said fourth coupling element being fixed, particularly solely, on the third measuring tube and on the fourth measuring tube on the outlet side, and particularly not being fixed on any other of the eight measuring tubes, for the purpose of regulating eigen frequencies of natural vibration modes of the tube arrangement, particularly utilizable for the generation of Coriolis forces in the medium flowing through the measuring tubes and/or for the measurement of a mass flow rate of the medium flowing through the measuring tubes and/or for the formation of vibration nodes on the outlet side both for vibrations, particularly flexural vibrations, of the third measuring tube and for vibrations diametrically opposed thereto, particularly flexural vibrations, of the fourth measuring tube at a distance from the second flow divider;
- a fifth first-type coupling element (24₅), particularly plate-shaped and/or structurally identical to the first first-type coupling element (24₁), said fifth coupling element being fixed, particularly solely, on the fifth measuring tube and on the sixth measuring tube on the inlet side, and particularly not being fixed on any other of the eight measuring tubes, for the purpose of regulating eigen frequencies of natural vibration modes of the tube arrangement, particularly utilizable for the generation of Coriolis forces in the medium flowing through the measuring tubes and/or for the measurement of a mass flow rate of the medium flowing through the measuring tubes and/or for the formation of vibration nodes on the inlet side both for vibrations, particularly flexural vibrations, of the fifth measuring tube and for vibrations diametrically opposed thereto, particularly flexural vibrations, of the sixth measuring tube at a distance from the first flow divider;
- a sixth first-type coupling element (24₂), particularly plate-shaped and/or structurally identical to the fifth first-type coupling element (24₁), said sixth coupling element being fixed, particularly solely, on the fifth measuring tube and on the sixth measuring tube on the outlet side, and particularly not being fixed on any other of the eight measuring tubes, for the purpose of regulating eigen frequencies of natural vibration modes of the tube arrangement, particularly utilizable for the generation of Coriolis forces in the medium flowing through the measuring tubes and/or for the measurement of a mass flow rate of the medium flowing through the measuring tubes and/or for the formation of vibration nodes on the outlet side both for vibrations, particularly flexural vibrations, of the fifth measuring tube and for vibrations diametrically opposed thereto, particularly flexural vibrations, of the sixth measuring tube at a distance from the second flow divider;
- a seventh first-type coupling element (24₃), particularly plate-shaped and/or structurally identical to the fifth first-type coupling element (24₁) and/or parallel to the sixth first-type coupling element (24₂), said seventh coupling element being fixed, particularly solely, on the seventh measuring tube and on the eighth measuring tube on the inlet side, and particularly not being fixed on any other of the eight measuring tubes, for the purpose of the formation of vibration nodes on the inlet side both for vibrations, particularly flexural vibrations, of the seventh measuring tube and for vibrations diametrically opposed thereto, particularly flexural vibrations, of the eighth measuring tube at a distance from the first flow divider; as well as
- an eighth first-type coupling element (24₄), particularly plate-shaped and/or structurally identical to the first first-type coupling element (24₁) and/or parallel to the fifth first-type coupling element (24₁), said eighth coupling element (24₄) being fixed, particularly solely, on the seventh measuring tube and on the eighth measuring tube on the outlet side, and particularly not being fixed on any other of the eight measuring tubes, for the purpose of regulating eigen frequencies of natural vibration modes of the tube arrangement, particularly utilizable for the generation of Coriolis forces in the medium flowing through the measuring tubes and/or for the measurement of a mass flow rate of the medium flowing through the measuring tubes and/or for the formation of vibration nodes on the outlet side both for vibrations, particularly flexural vibrations, of the seventh measuring tube and for vibrations diametrically opposed thereto, particularly flexural vibrations, of the eighth measuring tube at a distance from the second flow divider;

12. Sensor as claimed in Claim 11, further comprising:
- a first second-type coupling element (25₁), particularly plate-shaped or rod-shaped, fixed, particularly solely, on the first measuring tube and on the fifth measuring tube, and particularly not being fixed on any other of the eight measuring tubes, at a distance from both the first flow divider and the second flow divider, for the purpose of regulating eigen frequencies of natural vibration modes of the tube arrangement, particularly utilizable for the generation of Coriolis forces in the medium flowing through the measuring tubes and/or for the measurement of a mass flow rate of the medium flowing through the measuring tubes;
- a second second-type coupling element (25₂), particularly plate-shaped or rod-shaped, fixed, particularly solely, on the second measuring tube and on the sixth measuring tube, and particularly not being fixed on any other of the eight measuring tubes, at a distance from both the first flow divider and the second flow divider, for the purpose of regulating eigen frequencies of natural vibration modes of the tube arrangement, particularly utilizable for the generation of Coriolis forces in the medium flowing through the measuring tubes and/or for the measurement of a mass flow rate of the medium flowing through the measuring tubes;
- a third second-type coupling element (25₃), particularly plate-shaped or rod-shaped, fixed, particularly solely, on the third measuring tube and on the seventh measuring tube, and particularly not being fixed on any other of the eight measuring tubes, at a distance from both the first flow divider and the second flow divider, for the purpose of regulating eigen frequencies of natural vibration modes of the tube arrangement, particularly utilizable for the generation of Coriolis forces in the medium flowing through the measuring tubes and/or for the measurement of a mass flow rate of the medium flowing through the measuring tubes; as well as
- a fourth second-type coupling element (25₄), particularly plate-shaped or rod-shaped, fixed, particularly solely, on the fourth measuring tube and on the eighth measuring tube, and particularly not being fixed on any other of the eight measuring tubes, at a distance from both the first flow divider and the second flow divider, for the purpose of regulating eigen frequencies of natural vibration modes of the tube arrangement, particularly utilizable for the generation of Coriolis forces in the medium flowing through the measuring tubes and/or for the measurement of a mass flow rate of the medium flowing through the measuring tubes.

13. Sensor as claimed in the previous claim,
- wherein the first second-type coupling element is fixed simultaneously on both a tube segment of the first measuring tube (18₁), said segment extending between the first first-type coupling element and the second first-type coupling element, and on a tube segment of the fifth measuring tube (18₅), said segment extending between the fifth first-type coupling element and the sixth first-type coupling element, particularly in a zone of a vibration node of vibrations of the first measuring tube and in a zone of a vibration node of vibrations of the fifth measuring tube;
- wherein the second second-type coupling element is fixed simultaneously on both a tube segment of the second measuring tube (18₂), said segment extending between the first first-type coupling element and the second first-type coupling element, and on a tube segment of the sixth measuring tube (18₆), said segment extending between the fifth first-type coupling element and the sixth first-type coupling element, particularly in a zone of a vibration node of vibrations of the second measuring tube and in a zone of a vibration node of vibrations of the sixth measuring tube;
- wherein the third second-type coupling element is fixed simultaneously on both a tube segment of the third measuring tube (18₃), said segment extending between the third first-type coupling element and the fourth first-type coupling element, and on a tube segment of the seventh measuring tube (18₇), said segment extending between the seventh first-type coupling element and the eighth first-type coupling element, particularly in a zone of a vibration node of vibrations of the third measuring tube and in a zone of a vibration node of vibrations of the seventh measuring tube; and
- wherein the fourth second-type coupling element is fixed simultaneously on both a tube segment of the fourth measuring tube (18₄), said segment extending between the third first-type coupling element and the fourth first-type coupling element, and on a tube segment of the eighth measuring tube (18₈), said segment extending between the seventh first-type coupling element and the eighth first-type coupling element, particularly in a zone of a vibration node of vibrations of the fourth measuring tube and in a zone of a vibration node of vibrations of the eighth measuring tube.

14. Sensor as claimed in one of the Claims 12 to 13,
- wherein each of the eight first-type coupling elements, particularly which are identical in size, has a maximum length which is greater than twice a caliber, D₁₈, of the first measuring tube (18₁), particularly less than thrice the caliber, D₁₈, of the first measuring tube (18₁); and/or
- wherein each of the four, particularly structurally identical, second-type coupling elements is curved at least in part, particularly in the form of a circular arc, particularly for the purpose of enabling elastic deformations of the relevant coupling element as a result of diametrically opposite relative movements of the two measuring tubes connected to this element and/or for the purpose of minimizing or preventing mechanical tensions caused by heat-induced longitudinal changes of the respective coupling element and/or of the two measuring tubes connected to said element; and/or
- wherein each of the four second-type coupling elements, particularly which are identical in size, has a length - measured as the shortest distance between a first end of an element, which is connected to one of the measuring tubes, and a second end of an element, which is connected to another one of the measuring tubes - which is greater than a maximum length of the first first-type coupling element and/or which is greater than three times a caliber, D₁₈, of the first measuring tube (18₁), particularly greater than four times the caliber, D₁₈, of the first measuring tube (18₁).

15. Sensor as claimed in one of the previous Claims 2 to 14, wherein the two flow dividers (20₁, 20₂) are designed and arranged in the sensor in such a way that
- a first imaginary longitudinal section plane (XZ₁) of the sensor, within which the sensor's first imaginary connecting axis (Z₁) - which is in particular parallel to a main flow axis of the sensor that is aligned with the pipe - and the sensor's second imaginary connecting axis (Z₂) extend, is parallel to a second imaginary longitudinal section plane (XZ₂) of the sensor, within which the sensor's third imaginary connecting axis (Z₃) and the sensor's fourth imaginary connecting axis (Z₄) extend; particularly in such a way that the first imaginary longitudinal section plane (XZ) of the tube arrangement is situated between the first and the second imaginary longitudinal section plane (XZ₁, XZ₂) of the sensor and/or is parallel to the first and second imaginary longitudinal section plane (XZ₁, XZ₂) of the sensor,
- a third imaginary longitudinal section plane (YZ₁) of the sensor, within which the sensor's first imaginary connecting axis (Z₁) and third imaginary connecting axis (Z₃) extend, is parallel to a fourth imaginary longitudinal section plane (YZ₂) of the sensor, within which the sensor's second imaginary connecting axis (Z₂) and fourth imaginary connecting axis (Z₄) extend; particularly in such a way that the second imaginary longitudinal section plane (YZ) of the tube arrangement is situated between the third imaginary longitudinal section plane (YZ₁) of the sensor and the fourth imaginary longitudinal section plane (YZ₂) of the sensor and/or is parallel to the third and fourth imaginary longitudinal section plane (YZ₁, YZ₂) of the sensor,
- a fifth imaginary longitudinal section plane (XZ₃) of the sensor, within which the sensor's fifth imaginary connecting axis (Z₅) - which is in particular parallel to a main flow axis of the sensor that is aligned with the pipe - and sixth imaginary connecting axis (Z₆) extend, is parallel to a sixth imaginary longitudinal section plane (XZ₄) of the sensor, within which the sensor's seventh imaginary connecting axis (Z₇) and eighth imaginary connecting axis (Z₈) extend; particularly in such a way that the first imaginary longitudinal section plane (XZ) of the tube arrangement is situated between the fifth and the sixth imaginary longitudinal section plane (XZ₃, XZ₄) of the sensor and/or is parallel to the fifth and sixth imaginary longitudinal section plane (XZ₃, XZ₄) of the sensor, and
- a seventh imaginary longitudinal section plane (YZ₃) of the sensor, within which the sensor's fifth imaginary connecting axis (Z₅) and seventh imaginary connecting axis (Z₇) extend, is parallel to an eighth imaginary longitudinal section plane (YZ₄) of the sensor, within which the sensor's sixth imaginary connecting axis (Z₆) and eighth imaginary connecting axis (Z₈) extend; particularly in such a way that the second imaginary longitudinal section plane (YZ) of the tube arrangement is situated between the seventh imaginary longitudinal section plane (YZ₃) of the sensor and the eighth imaginary longitudinal section plane (YZ₄) of the sensor and/or is parallel to the seventh and the eighth imaginary longitudinal section plane (YZ₃,YZ₄) of the sensor.

16. Sensor as claimed in Claim 15,
- wherein the measuring tubes are designed and arranged in such a way that
-- the third imaginary longitudinal section plane (YZ₁) of the sensor longitudinally intersects in an imaginary manner both the first measuring tube and the third measuring tube,
-- the fourth imaginary longitudinal section plane (YZ₂) of the sensor longitudinally intersects in an imaginary manner both the second measuring tube and the fourth measuring tube,
-- the fifth imaginary longitudinal section plane (XZ₃) of the sensor longitudinally intersects in an imaginary manner both the fifth measuring tube and the sixth measuring tube, and
-- the sixth imaginary longitudinal section plane (XZ₄) of the sensor longitudinally intersects in an imaginary manner both the seventh measuring tube and the eighth measuring tube; and/or
- wherein the first measuring tube, the second measuring tube, the third measuring tube and the fourth measuring tube each has a measuring tube apex, defined as the largest vertical distance of the relevant measuring tube from the first imaginary longitudinal section plane (XZ), and wherein the fifth measuring tube, the sixth measuring tube, the seventh measuring tube and the eighth measuring tube each has a measuring tube apex, defined as the largest vertical distance of the relevant measuring tube from the second imaginary longitudinal section plane (YZ); and/or
- wherein the tube arrangement has an imaginary cross-sectional plane (XY) perpendicular in relation to both the first imaginary longitudinal section plane (XZ) and to the second imaginary longitudinal section plane (YZ), particularly such that a center of gravity of the tube arrangement is situated in the imaginary cross-sectional plane (XY) and/or that the tube arrangement is in mirror symmetry in relation to the imaginary cross-sectional plane (XY) and/or that the first measuring tube, the second measuring tube, the third measuring tube and the fourth measuring tube each has a measuring tube apex, defined as the largest vertical distance of the relevant measuring tube from the first imaginary longitudinal section plane (XZ), or the fifth measuring tube, the sixth measuring tube, the seventh measuring tube and the eighth measuring tube each has a measuring tube apex, defined as the largest vertical distance of the relevant measuring tube from the second imaginary longitudinal section plane (YZ), and that the imaginary cross-sectional plane (XY) intersects each of the eight measuring tubes at its particular measuring tube apex.

17. Sensor as claimed in one of the previous claims,
- wherein the first measuring tube has a caliber which is equal to a caliber of the second measuring tube, particularly also equal to a caliber of the third measuring tube, and also equal to a caliber of the fourth measuring tube; and/or
- wherein the eight measuring tubes are structurally identical with regard to a material from which their tube walls are made and/or with regard to their geometric tube dimensions, particularly a measuring tube length, a tube wall thickness, a tube outer diameter and/or a caliber; and/or
- wherein a material of which the tube walls of the eight measuring tubes consist, at least in part, is titanium and/or zirconium and/or stainless steel and/or duplex steel and/or superduplex steel; and/or
- wherein the sensor housing (7₁), the flow dividers (20₁, 20₂) and the tube walls of the eight measuring tubes each consists of steel, particularly stainless steel and/or high-strength steel; and/or
- wherein each of the at least eight measuring tubes (18₁, 18₂, 18₃, 18₄,), notably of the same size, has a caliber, D₁₈, which is greater than 10 mm, particularly greater than 30 mm; and/or
- wherein the measuring tubes (18₁, 18₂, 18₃, 18₄) are curved and arranged in such a way that a caliber-to-height ratio, D₁₈/Q₁₈, of the tube arrangement, defined by a ratio of a caliber, D₁₈, of the first measuring tube to a maximum lateral extension, Q₁₈, of the tube arrangement, measured between a measuring tube apex of the first measuring tube (18₁) and a measuring tube apex of the third measuring tube (18₃), is greater than 0.05, particularly greater than 0.07 and/or less than 0.5, particularly less than 0.4; and/or
- wherein a caliber-to-nominal diameter ratio, D₁₈/D₁₁, of the sensor, defined by a ratio of a caliber D₁₈ of the first measuring tube to a nominal diameter, D₁₁, of the sensor, which corresponds to a caliber of the pipe in which the sensor is to be inserted, is less than 0.4, particularly less than 0.35 and/or less than 0.21; and/or
- wherein a nominal diameter of the sensor, corresponding to a caliber of the pipe in which the sensor is to be inserted, is greater than 50 mm, particularly greater than 100 mm; and/or
- wherein the first flow divider (20₁) has a flange (6₁) for connecting the sensor to a segment of the pipe that serves to supply medium to the sensor, and the second flow divider (20₂) has a flange (6₂) for connecting the sensor to a segment of the pipe designed to transport medium away from the sensor; and/or
- wherein a measuring tube length, L₁₈, of the first measuring tube (18₁) corresponding to a length of a section of a bend line of the first measuring tube which extends between the first flow opening (20_{1A}) of the first flow divider (20₁) and the first flow opening (20_{2A}) of the second flow divider (20₂), is greater than 1000 mm, particularly greater than 1200 mm and/or less than 3000 mm, particularly less than 2500 mm; and/or
- wherein the first flow divider (20₁) has a flow body, particularly conical or paraboloidal, situated between the divider's flow openings designed to reduce a flow resistance of the first flow divider (20₁) and wherein the second flow divider (20₂) has a flow body, particularly conical or paraboloidal, situated between the divider's flow openings designed to reduce a flow resistance of the second flow divider (20₁); and/or
- wherein, with the exciter arrangement, each of the eight measuring tubes (18₁, 18₂, 18₃, 18₄, 18₅, 18₆, 18₇, 18₈) can be excited, particularly simultaneously, to perform flexural vibrations.

18. Sensor as claimed in one of the previous claims, further comprising a sensor arrangement (19) reacting to vibrations of the measuring tube, particularly flexural vibrations, particularly generated by the exciter arrangement, particularly an electrodynamic sensor arrangement and/or a sensor arrangement consisting of structurally identical vibration sensors (19₁, 19₂, 19₃, 19₄, 19₅, 19₆, 19₇, 19₈), said arrangement being designed to generate vibration signals representing vibrations, particularly flexural vibrations, of the measuring tubes.

19. Sensor as claimed in the previous claims, wherein the sensor arrangement (19) consists of:
- a first vibration sensor (19₁) on the inlet side, particularly electrodynamic and/or measuring in a differential manner the vibrations of the first measuring tube (18₁) in relation to the second measuring tube (18₂), as well as a second vibration sensor (19₂) on the outlet side, particularly electrodynamic and/or measuring in a differential manner the vibrations of the first measuring tube (18₁) in relation to the second measuring tube (18₂),
- a third vibration sensor (19₃) on the inlet side, particularly electrodynamic and/or measuring in a differential manner the vibrations of the third measuring tube (18₃) in relation to the fourth measuring tube (18₄) and/or electrically coupled in series with the first vibration sensor (19₁), as well as a fourth vibration sensor (19₄) on the outlet side, particularly electrodynamic and/or measuring in a differential manner the vibrations of the third measuring tube (18₃) in relation to the fourth measuring tube (18₄) and/or electrically coupled in series with the second vibration sensor (19₂),
- a fifth vibration sensor (19₅) on the inlet side, particularly electrodynamic and/or measuring in a differential manner the vibrations of the fifth measuring tube (18₅) in relation to the sixth measuring tube (18₆) and/or electrically coupled in series with the first vibration sensor (19₁), as well as a sixth vibration sensor (19₆) on the outlet side, particularly electrodynamic and/or measuring in a differential manner the vibrations of the fifth measuring tube (18₅) in relation to the sixth measuring tube (18₆) and/or electrically coupled in series with the second vibration sensor (19₂), as well as
- a seventh vibration sensor (19₇) on the inlet side, particularly electrodynamic and/or measuring in a differential manner the vibrations of the seventh measuring tube (18₇) in relation to the eighth measuring tube (18₈) and/or electrically coupled in series with the first vibration sensor (19₁), as well as an eighth vibration sensor (19₈) on the outlet side, particularly electrodynamic and/or measuring in a differential manner the vibrations of the seventh measuring tube (18₇) in relation to the eighth measuring tube (18₈) and/or electrically coupled in series with the second vibration sensor (19₂).

20. Measuring system for measuring a density and/or a mass flow rate, notably also a total mass flow totalized over a time interval, of a medium flowing at least temporarily through a pipe, particularly with a mass flow rate greater than 1000 t/h, particularly of a gas, a liquid, a powder or of another substance which is capable of flowing, wherein said measuring system is particularly designed as an in-line measuring device and/or a compact measuring device and comprises a sensor as claimed in one of the Claims 1 to 19, as well as a transducer electronics system electrically coupled to the sensor, and arranged in particular in an electronics housing mechanically connected to the sensor housing, said electronics system being designed to control the sensor, particularly the sensor's exciter arrangement, and to evaluate vibration signals supplied by the sensor.

21. Measuring system as claimed in Claim 20,
- wherein, during operation and excited by the exciter arrangement, the eight measuring tubes simultaneously perform flexural vibrations, particularly flexural vibrations in a natural vibration mode intrinsic to the tube arrangement; and/or
- wherein the exciter arrangement stimulates measuring tube vibrations in that an excitation force generated using the first vibration exciter and acting on the first measuring tube is opposed, particularly in a diametrically opposed manner, to an excitation force generated simultaneously using the first vibration exciter and acting on the second measuring tube; and/or
- wherein the transducer electronics system generates a viscosity measured value that represents the viscosity of the flowing medium using electrical exciter power converted in the exciter arrangement; and/or
- wherein the transducer electronics system generates a mass flow measured value that represents the mass flow rate of the flowing medium using vibration signals supplied by the sensor; and/or
- wherein the transducer electronics system generates a density measured value that represents the density of the flowing medium using vibration signals supplied by the sensor; and/or
- wherein the transducer electronics system (12) injects electrical excitation power into the exciter arrangement using at least an electrical driver signal supplied to the exciter arrangement, which is variable and/or at least temporarily periodic, particularly with at least a signal frequency corresponding to a resonance frequency of a natural mode of vibration of the tube arrangement, particularly with a variable maximum voltage level and/or a variable maximum current strength, and wherein the exciter arrangement (5) converts the electrical excitation power, which depends in particular on a voltage level and a current strength of the at least one driver signal, at least partially into both flexural vibrations of the first measuring tube (18₁) and flexural vibrations of the second measuring tube (18₂) diametrically opposed to the flexural vibrations of the first measuring tube (18₁) in relation to the second imaginary longitudinal section plane (YZ) of the tube arrangement, and also into flexural vibrations of the third measuring tube (18₃) and flexural vibrations of the fourth measuring tube (18₄) diametrically opposed to the flexural vibrations of the third measuring tube (18₃) in relation to the second imaginary longitudinal section plane (YZ) of the tube arrangement.

22. Use of a sensor as claimed in one of the Claims 1 to 19 or of a measuring system as claimed in one of the Claims 20 to 21 to measure a density and/or a mass flow rate, particularly also a total mass flow totalized over a time interval, and/or a viscosity and/or a Reynolds number of a medium flowing through a process pipe, particularly a pipeline, at least temporarily at a mass flow rate of over 1000 t/h, particularly of over 1500 t/h, particularly a gas, a liquid, a powder or another substance that can flow.

## Revendications

1. Capteur du type à vibrations destiné à la mesure d'au moins une grandeur de mesure physique d'un produit apte à s'écouler dans une conduite, notamment un gaz, un liquide, une poudre ou une autre substance apte à s'écouler, et/ou destiné à la génération de forces de Coriolis servant à la mesure d'un débit massique d'un produit apte à s'écouler dans une conduite, notamment un gaz, un liquide, une poudre ou une autre substance apte à s'écouler, lequel capteur comprend :
- un boîtier de capteur (7₁), notamment partiellement pour l'essentiel tubulaire et/ou partiellement cylindrique circulaire à l'extérieur, à partir duquel sont formés une première extrémité de boîtier côté entrée au moyen d'un premier diviseur de débit (20₁) situé côté entrée et comportant huit ouvertures d'écoulement (20_{1A}, 20_{1B}, 20_{1C}, 20_{1D}, 20_{1E}, 20_{1F}, 20_{1G}, 20_{1H}) espacées les unes par rapport aux autres, notamment cylindriques circulaires ou coniques, et une deuxième extrémité de boîtier côté sortie au moyen d'un deuxième diviseur de débit (20₂) situé côté sortie et comportant huit ouvertures d'écoulement (20_{2A}, 20_{2B}, 20_{2C} 20_{2D}, 20_{2E}, 20_{2F}, 20_{2G}, 20_{2H}) espacées les unes par rapport aux autres, notamment cylindriques circulaires ou coniques ;
- un agencement de tubes (18) avec au moins huit tubes de mesure (18₁, 18₂, 18₃, 18₄, 18₅, 18₆, 18₇, 18₈) formant des chemins d'écoulement couplés en parallèle, notamment de conception identique, raccordés aux diviseurs de débit (20₁, 20₂), incurvés, notamment seulement maintenus de façon apte à vibrer au moyen des mêmes diviseurs de débit (20₁, 20₂) dans le boîtier de capteur et/ou de conception identique et/ou disposés parallèlement par paires et/ou au moins partiellement en forme de V, lesquels tubes de mesure sont destinés à guider un produit en écoulement, tubes parmi lesquels
-- un premier tube de mesure (18₁) débouche avec une première extrémité de tube de mesure côté entrée dans une première ouverture d'écoulement (20_{1A}) du premier diviseur de débit (20₁) et avec une deuxième extrémité de tube de mesure côté sortie dans une première ouverture d'écoulement (20_{2A}) du deuxième diviseur de débit (20₂),
-- un deuxième tube de mesure (18₂), notamment au moins partiellement parallèle au premier tube de mesure, débouche avec une première extrémité de tube de mesure côté entrée dans une deuxième ouverture d'écoulement (20_{1B}) du premier diviseur de débit (20₁) et avec une deuxième extrémité de tube de mesure côté sortie dans une deuxième ouverture d'écoulement (20_{2B}) du deuxième diviseur de débit (20₂),
-- un troisième tube de mesure (18₃) débouche avec une première extrémité de tube de mesure côté entrée dans une troisième ouverture d'écoulement (20_{1C}) du premier diviseur de débit (20₁) et avec une deuxième extrémité de tube de mesure côté sortie dans une troisième ouverture d'écoulement (20_{2C}) du deuxième diviseur de débit (20₂),
-- un quatrième tube de mesure (18₄), notamment au moins partiellement parallèle au troisième tube de mesure, débouche avec une première extrémité de tube de mesure côté entrée dans une quatrième ouverture d'écoulement (20_{1D}) du premier diviseur de débit (20₁) et avec une deuxième extrémité de tube de mesure côté sortie dans une quatrième ouverture d'écoulement (20_{2D}) du deuxième diviseur de débit (20₂),
-- un cinquième tube de mesure (18₅) débouche avec une première extrémité de tube de mesure côté entrée dans une cinquième ouverture d'écoulement (20_{1E}) du premier diviseur de débit (20₁) et avec une deuxième extrémité de tube de mesure côté sortie dans une cinquième ouverture d'écoulement (20_{2E}) du deuxième diviseur de débit (20₂),
-- un sixième tube de mesure (18₆), notamment au moins partiellement parallèle au cinquième tube de mesure, débouche avec une première extrémité de tube de mesure côté entrée dans une sixième ouverture d'écoulement (20_{1F}) du premier diviseur de débit (20₁) et avec une deuxième extrémité de tube de mesure côté sortie dans une sixième ouverture d'écoulement (20_{2F}) du deuxième diviseur de débit (20₂),
-- un septième tube de mesure (18₇) débouche avec une première extrémité de tube de mesure côté entrée dans une septième ouverture d'écoulement (20_{1G}) du premier diviseur de débit (20₁) et avec une deuxième extrémité de tube de mesure côté sortie dans une septième ouverture d'écoulement (20_{2G}) du deuxième diviseur de débit (20₂), et
-- un huitième tube de mesure (18₈), notamment au moins partiellement parallèle au septième tube de mesure, débouche avec une première extrémité de tube de mesure côté entrée dans une huitième ouverture d'écoulement (20_{1H}) du premier diviseur de débit (20₁) et avec une deuxième extrémité de tube de mesure côté sortie dans une huitième ouverture d'écoulement (20_{2H}) du deuxième diviseur de débit (20₂) ; ainsi que
- un circuit d'excitation électromécanique (5) constitué d'un
-- premier générateur de vibrations (5₁), notamment électrodynamique, générant de façon différentielle des vibrations du premier tube de mesure (18₁) par rapport au deuxième tube de mesure (18₂),
-- deuxième générateur de vibrations (5₂), notamment électrodynamique et/ou de conception identique au premier générateur de vibrations (5₁), générant de façon différentielle des vibrations du troisième tube de mesure (18₃) par rapport au quatrième tube de mesure (18₄),
-- troisième générateur de vibrations (5₃), notamment électrodynamique et/ou de conception identique au premier générateur de vibrations (5₁), générant de façon différentielle des vibrations du cinquième tube de mesure (18₅) par rapport au sixième tube de mesure (18₆),
-- et d'un quatrième générateur de vibrations (5₄), notamment électrodynamique et/ou de conception identique au premier générateur de vibrations (5₁), générant de façon différentielle des vibrations du septième tube de mesure (18₇) par rapport au huitième tube de mesure (18₈), lequel circuit est destiné à générer et/ou maintenir les vibrations de flexion, notamment correspondant à un mode de vibration naturel de l'agencement de tubes, de chacun des huit tubes de mesure (18₁, 18₂, 18₃, 18₄, 18₅, 18₆, 18₇, 18₈).

2. Capteur selon l'une des revendications précédentes,
- pour lequel les deux diviseurs de débit (20₁, 20₂) sont conçus et disposés dans le capteur de telle sorte
-- qu'un premier axe de liaison imaginaire (Z₁) du capteur, reliant de façon imaginaire la première ouverture d'écoulement (20_{1A}) du premier diviseur de débit (20₁) avec la première ouverture d'écoulement (20_{2A}) du deuxième diviseur de débit (20₂), est parallèle à un deuxième axe de liaison imaginaire (Z₂) du capteur, reliant de façon imaginaire la deuxième ouverture d'écoulement (20_{1B}) du premier diviseur de débit (20₁) avec la deuxième ouverture d'écoulement (20_{2B}) du deuxième diviseur de débit (20₂), et
-- qu'un troisième axe de liaison imaginaire (Z₃) du capteur, reliant de façon imaginaire la troisième ouverture d'écoulement (20_{1C}) du premier diviseur de débit (20₁) avec la troisième ouverture d'écoulement (20_{2C}) du deuxième diviseur de débit (20₂), est parallèle à un quatrième axe de liaison imaginaire (Z₄) du capteur, reliant de façon imaginaire la quatrième ouverture d'écoulement (20_{1D}) du premier diviseur de débit (20₁) avec la quatrième ouverture d'écoulement (20_{2B}) du deuxième diviseur de débit (20₂).

3. Capteur selon la revendication précédente,
- pour lequel les deux diviseurs de débit (20₁, 20₂) sont conçus et disposés dans le capteur de telle sorte
-- qu'un cinquième axe de liaison imaginaire (Z₅ du capteur, reliant de façon imaginaire la cinquième ouverture d'écoulement (20_{1E}) du premier diviseur de débit (20₁) avec la cinquième ouverture d'écoulement (20_{2E}) du deuxième diviseur de débit (20₂) est parallèle à un sixième axe de liaison imaginaire (Z₆) du capteur, reliant de façon imaginaire la sixième ouverture d'écoulement (20_{1F}) du premier diviseur de débit (20₁) avec la sixième ouverture d'écoulement (20_{2F}) du deuxième diviseur de débit (20₂), et
-- qu'un septième axe de liaison imaginaire (Z₇) du capteur, reliant de façon imaginaire la septième ouverture d'écoulement (20_{1G}) du premier diviseur de débit (20₁) avec la septième ouverture d'écoulement (20_{2G}) du deuxième diviseur de débit (20₂) est parallèle à un huitième axe de liaison imaginaire (Z₈) du capteur, reliant de façon imaginaire la huitième ouverture d'écoulement (20_{1H}) du premier diviseur de débit (20₁) avec la huitième ouverture d'écoulement (20_{2H}) du deuxième diviseur de débit (20₂).

4. Capteur selon l'une des revendications précédentes, pour lequel les tubes de mesure sont conçus et disposés dans le capteur de telle sorte que l'agencement de tubes présente un premier plan en coupe longitudinale imaginaire (XZ), situé à la fois entre le premier tube de mesure et le troisième tube de mesure, et entre le deuxième tube de mesure et le quatrième tube de mesure, notamment parallèle au premier, deuxième, troisième et quatrième tube de mesure, plan par rapport auquel l'agencement de tubes est en symétrie miroir.

5. Capteur selon la revendication 4, pour lequel les tubes de mesure sont conçus et disposés dans le capteur de telle sorte que l'agencement de tubes présente un deuxième plan en coupe longitudinale imaginaire (YZ), situé à la fois entre le cinquième tube de mesure et le sixième tube de mesure, et entre le septième tube de mesure et le huitième tube de mesure, notamment parallèle au cinquième, sixième, septième et huitième tube de mesure et/ou perpendiculaire au premier plan en coupe longitudinale imaginaire (XZ), deuxième plan par rapport auquel l'agencement de tubes est également en symétrie miroir.

6. Capteur selon la revendication 5,
- pour lequel le circuit d'excitation est conçu de telle sorte que le premier tube de mesure (18₁) et le deuxième tube de mesure (18₂) peuvent être excités en vibrations de flexion diamétralement opposées par rapport au deuxième plan en coupe longitudinale imaginaire (YZ), notamment symétriques par rapport au deuxième plan en coupe longitudinale imaginaire (YZ),et le troisième tube de mesure (18₃) et le quatrième tube de mesure (18₄) de façon diamétralement opposée par rapport au deuxième plan en coupe longitudinale imaginaire (YZ), notamment symétriques par rapport au deuxième plan en coupe longitudinale imaginaire (YZ) ; et/ou pour lequel le circuit d'excitation est conçu de telle sorte que le cinquième tube de mesure (18₅) et le sixième tube de mesure (18₆) peuvent être excités en vibrations de flexion diamétralement opposées par rapport au premier plan en coupe longitudinale imaginaire (XZ), notamment symétriques par rapport au premier plan en coupe longitudinale imaginaire (XZ), et le septième tube de mesure (18₇) et le huitième tube de mesure (18₈) de façon diamétralement opposée par rapport au premier plan en coupe longitudinale imaginaire (XZ), notamment symétriques par rapport au premier plan en coupe longitudinale imaginaire (XZ).

7. Capteur selon l'une des revendications 5 à 6, pour lequel l'agencement de tubes présente au moins un mode de vibration naturel, utilisable notamment pour la génération de forces de Coriolis dans le produit s'écoulant à travers les tubes de mesure,
- mode de vibration dans lequel à la fois le premier tube de mesure et le troisième tube de mesure peuvent exécuter ou exécutent des vibrations de flexion diamétralement opposées par rapport au premier plan en coupe longitudinale imaginaire (XZ), notamment symétriques par rapport au premier plan en coupe longitudinale imaginaire (XZ), autour d'une position de repos statique relative au tube de mesure respectif, notamment des vibrations de flexion en porte-à-faux autour d'un axe de vibration imaginaire parallèle à au moins deux des axes de liaison imaginaires, et également le deuxième tube de mesure et le quatrième tube de mesure peuvent exécuter ou exécutent des vibrations de flexion diamétralement opposées par rapport au premier plan en coupe longitudinale imaginaire (XZ), notamment symétriques par rapport au premier plan en coupe longitudinale imaginaire (XZ), autour d'une position de repos statique relative au tube de mesure respectif, notamment des vibrations de flexion en porte-à-faux autour d'un axe de vibration imaginaire parallèle à au moins deux des axes de liaison imaginaires, notamment de telle sorte que, par rapport au deuxième plan en coupe longitudinale imaginaire (YZ), à la fois les mêmes vibrations de flexion du premier tube de mesure sont diamétralement opposées aux mêmes vibrations de flexion du deuxième tube de mesure, et également les mêmes vibrations de flexion du troisième tube de mesure sont diamétralement opposées aux mêmes vibrations de flexion du quatrième tube de mesure ; et/ou
- mode de vibration dans lequel à la fois le cinquième tube de mesure et le septième tube de mesure peuvent exécuter ou exécutent des vibrations de flexion diamétralement opposées par rapport au premier plan en coupe longitudinale imaginaire (XZ), notamment symétriques par rapport au premier plan en coupe longitudinale imaginaire (XZ), autour d'une position de repos statique relative au tube de mesure respectif, notamment des vibrations de flexion en porte-à-faux autour d'un axe de vibration imaginaire parallèle à au moins deux des axes de liaison imaginaires, et également le sixième tube de mesure et le huitième tube de mesure peuvent exécuter ou exécutent des vibrations de flexion diamétralement opposées par rapport au premier plan en coupe longitudinale imaginaire (XZ), notamment symétriques par rapport au premier plan en coupe longitudinale imaginaire (XZ), autour d'une position de repos statique relative au tube de mesure respectif, notamment des vibrations de flexion en porte-à-faux autour d'un axe de vibration imaginaire parallèle à au moins deux des axes de liaison imaginaires, notamment de telle sorte que par rapport au deuxième plan en coupe longitudinale imaginaire (YZ), à la fois les mêmes vibrations de flexion du cinquième tube de mesure sont diamétralement opposées aux mêmes vibrations de flexion du sixième tube de mesure, et également les mêmes vibrations de flexion du septième tube de mesure sont diamétralement opposées aux mêmes vibrations de flexion du huitième tube de mesure ; et/ou
- mode de vibration dans lequel
-- le premier tube de mesure et le cinquième tube de mesure peuvent exécuter ou exécutent en phase des vibrations de flexion autour de la position de repos statique relative au tube de mesure respectif, notamment des vibrations de flexion en porte-à-faux autour d'un axe de vibration imaginaire parallèle à au moins deux des axes de liaison imaginaires,
-- le deuxième tube de mesure et le sixième tube de mesure peuvent exécuter ou exécutent en phase des vibrations de flexion autour de la position de repos statique relative au tube de mesure respectif, notamment des vibrations de flexion en porte-à-faux autour d'un axe de vibration imaginaire parallèle à au moins deux des axes de liaison imaginaires,
-- le troisième tube de mesure et le septième tube de mesure peuvent exécuter ou exécutent en phase des vibrations de flexion autour de la position de repos statique relative au tube de mesure respectif, notamment des vibrations de flexion en porte-à-faux autour d'un axe de vibration imaginaire parallèle à au moins deux des axes de liaison imaginaires,et
-- le quatrième tube de mesure et le huitième tube de mesure peuvent exécuter ou exécutent en phase des vibrations de flexion autour de la position de repos statique relative au tube de mesure respectif, notamment des vibrations de flexion en porte-à-faux autour d'un axe de vibration imaginaire parallèle à au moins deux des axes de liaison imaginaires.

8. Capteur selon la revendication précédente, pour lequel le même mode de vibration peut être excité au moyen du circuit d'excitation.

9. Capteur selon l'une des revendications 5 à 8,
- pour lequel l'agencement de tubes présente au moins un mode de vibration naturel de premier type, utilisable notamment pour la génération de forces de Coriolis dans le produit s'écoulant à travers les tubes de mesure et/ou pour la mesure d'un débit massique du produit s'écoulant à travers les tubes de mesure,
-- mode de vibration de premier type dans lequel le premier tube de mesure et le troisième tube de mesure peuvent exécuter ou exécutent des vibrations de flexion diamétralement opposées par rapport au premier plan en coupe longitudinale imaginaire (XZ), notamment symétriques par rapport au premier plan en coupe longitudinale imaginaire (XZ), autour d'une position de repos statique relative au tube de mesure respectif, notamment des vibrations de flexion en porte-à-faux autour d'un axe de vibration imaginaire parallèle à au moins deux des axes de liaison imaginaires, et également le deuxième tube de mesure et le quatrième tube de mesure peuvent exécuter ou exécutent des vibrations de flexion diamétralement opposées par rapport au premier plan en coupe longitudinale imaginaire (XZ), notamment symétriques par rapport au premier plan en coupe longitudinale imaginaire (XZ), autour d'une position de repos statique relative au tube de mesure respectif, notamment des vibrations de flexion en porte-à-faux autour d'un axe de vibration imaginaire parallèle à au moins deux des axes de liaison imaginaires, et
-- mode de vibration de premier type dans lequel à la fois le cinquième tube de mesure et le septième tube de mesure exécutent des vibrations de flexion diamétralement opposées par rapport au premier plan en coupe longitudinale imaginaire (XZ), notamment symétriques par rapport au premier plan en coupe longitudinale imaginaire (XZ), autour d'une position de repos statique relative au tube de mesure respectif, notamment des vibrations de flexion en porte-à-faux autour d'un axe de vibration imaginaire parallèle à au moins deux des axes de liaison imaginaires, et également le sixième tube de mesure et le huitième tube de mesure peuvent exécuter ou exécutent des vibrations de flexion diamétralement opposées par rapport au premier plan en coupe longitudinale imaginaire (XZ), notamment symétriques par rapport au premier plan en coupe longitudinale imaginaire (XZ), autour d'une position de repos statique relative au tube de mesure respectif, notamment des vibrations de flexion en porte-à-faux autour d'un axe de vibration imaginaire parallèle à au moins deux des axes de liaison imaginaires, de telle sorte,
--- que par rapport au deuxième plan en coupe longitudinale imaginaire (YZ), à la fois les mêmes vibrations de flexion du premier tube de mesure sont diamétralement opposées aux mêmes vibrations de flexion du deuxième tube de mesure, et également les mêmes vibrations de flexion du troisième tube de mesure sont diamétralement opposées aux mêmes vibrations de flexion du quatrième tube de mesure,
--- que par rapport au deuxième plan en coupe longitudinale imaginaire (YZ), à la fois les mêmes vibrations de flexion du cinquième tube de mesure sont diamétralement opposées aux mêmes vibrations de flexion du sixième tube de mesure, et également les mêmes vibrations de flexion du septième tube de mesure sont diamétralement opposées aux mêmes vibrations de flexion du huitième tube de mesure, et
-- de telle sorte que les vibrations de flexion du premier tube de mesure sont en phase avec les vibrations de flexion du cinquième tube de mesure, les vibrations de flexion du deuxième tube de mesure sont en phase avec les vibrations de flexion du sixième tube de mesure, les vibrations de flexion du troisième tube de mesure sont en phase avec les vibrations de flexion du septième tube de mesure, et les vibrations de flexion du quatrième tube de mesure sont en phase avec les vibrations de flexion du huitième tube de mesure,
- et pour lequel le même mode de vibration de premier type peut être excité au moyen du circuit d'excitation.

10. Capteur selon la revendication 9, pour lequel l'agencement de tubes présente au moins un mode de vibration naturel de second type, utilisable notamment pour la génération de forces de Coriolis dans le produit s'écoulant à travers les tubes de mesure et/ou pour la mesure d'un débit massique du produit s'écoulant à travers les tubes de mesure,
- mode de vibration de second type dans lequel le premier tube de mesure et le troisième tube de mesure peuvent exécuter ou exécutent des vibrations de flexion diamétralement opposées par rapport au premier plan en coupe longitudinale imaginaire (XZ), notamment symétriques par rapport au premier plan en coupe longitudinale imaginaire (XZ), autour d'une position de repos statique relative au tube de mesure respectif, notamment des vibrations de flexion en porte-à-faux autour d'un axe de vibration imaginaire parallèle à au moins deux des axes de liaison imaginaires, et également le deuxième tube de mesure et le quatrième tube de mesure peuvent exécuter ou exécutent des vibrations de flexion diamétralement opposées par rapport au premier plan en coupe longitudinale imaginaire (XZ), notamment symétriques par rapport au premier plan en coupe longitudinale imaginaire (XZ), autour d'une position de repos statique relative au tube de mesure respectif, notamment des vibrations de flexion en porte-à-faux autour d'un axe de vibration imaginaire parallèle à au moins deux des axes de liaison imaginaires, et
- mode de vibration de second type dans lequel à la fois le cinquième tube de mesure et le septième tube de mesure exécutent des vibrations de flexion diamétralement opposées par rapport au premier plan en coupe longitudinale imaginaire (XZ), notamment symétriques par rapport au premier plan en coupe longitudinale imaginaire (XZ), autour d'une position de repos statique relative au tube de mesure respectif, notamment des vibrations de flexion en porte-à-faux autour d'un axe de vibration imaginaire parallèle à au moins deux des axes de liaison imaginaires, et également le sixième tube de mesure et le huitième tube de mesure peuvent exécuter ou exécutent des vibrations de flexion diamétralement opposées par rapport au premier plan en coupe longitudinale imaginaire (XZ), notamment symétriques par rapport au premier plan en coupe longitudinale imaginaire (XZ), autour d'une position de repos statique relative au tube de mesure respectif, notamment des vibrations de flexion en porte-à-faux autour d'un axe de vibration imaginaire parallèle à au moins deux des axes de liaison imaginaires, de telle sorte,
-- que par rapport au deuxième plan en coupe longitudinale imaginaire (YZ), à la fois les mêmes vibrations de flexion du premier tube de mesure sont diamétralement opposées aux mêmes vibrations de flexion du deuxième tube de mesure, et également les mêmes vibrations de flexion du troisième tube de mesure sont diamétralement opposées aux mêmes vibrations de flexion du quatrième tube de mesure,
-- que par rapport au deuxième plan en coupe longitudinale imaginaire (YZ), à la fois les mêmes vibrations de flexion du cinquième tube de mesure sont diamétralement opposées aux mêmes vibrations de flexion du sixième tube de mesure, et également les mêmes vibrations de flexion du septième tube de mesure sont diamétralement opposées aux mêmes vibrations de flexion du huitième tube de mesure, et
- de telle sorte que les vibrations de flexion du premier tube de mesure sont diamétralement opposées aux vibrations de flexion du cinquième tube de mesure, les vibrations de flexion du deuxième tube de mesure sont diamétralement opposées aux vibrations de flexion du sixième tube de mesure, les vibrations de flexion du troisième tube de mesure sont diamétralement opposées aux vibrations de flexion du septième tube de mesure, et les vibrations de flexion du quatrième tube de mesure sont diamétralement opposées aux vibrations de flexion du huitième tube de mesure.

11. Capteur selon l'une des revendications précédentes, comprenant en outre :
- Un premier élément de couplage (24₁) de premier type, notamment en forme de plaque, qui est fixé pour le réglage de fréquences propres de modes de vibration naturels de l'agencement de tubes, utilisables notamment pour la génération de forces de Coriolis dans le produit s'écoulant à travers les tubes de mesure et/ou pour la mesure d'un débit massique du produit s'écoulant à travers les tubes de mesure et/ou pour la constitution de noeuds de vibration côté entrée à la fois pour les vibrations, notamment les vibrations de flexion, du premier tube de mesure et également pour les vibrations diamétralement opposées à celles-ci, notamment les vibrations de flexion, du deuxième tube de mesure espacé du premier diviseur de débit côté entrée, notamment seulement sur le premier tube de mesure et sur le deuxième tube de mesure, notamment sinon sur aucun autre des huit tubes de mesure ;
- Un deuxième élément de couplage (24₂) de premier type, notamment en forme de plaque et/ou de conception identique au premier élément de couplage (24₁) de premier type, lequel deuxième élément de couplage est fixé pour le réglage de fréquences propres de modes de vibration naturels de l'agencement de tubes, utilisables notamment pour la génération de forces de Coriolis dans le produit s'écoulant à travers les tubes de mesure et/ou pour la mesure d'un débit massique du produit s'écoulant à travers les tubes de mesure et/ou pour la constitution de noeuds de vibration côté sortie à la fois pour les vibrations, notamment les vibrations de flexion, du premier tube de mesure et également pour les vibrations diamétralement opposées à celles-ci, notamment les vibrations de flexion, du deuxième tube de mesure espacé du premier diviseur de débit côté entrée, notamment seulement sur le premier tube de mesure et sur le deuxième tube de mesure, notamment sinon sur aucun autre des huit tubes de mesure ;
- Un troisième élément de couplage (24₃) de premier type, notamment en forme de plaque et/ou de conception identique au premier élément de couplage (24₁) de premier type et/ou parallèle au deuxième élément de couplage (24₂) de premier type, lequel troisième élément de couplage est fixé pour le réglage de fréquences propres de modes de vibration naturels de l'agencement de tubes, utilisables notamment pour la génération de forces de Coriolis dans le produit s'écoulant à travers les tubes de mesure et/ou pour la mesure d'un débit massique du produit s'écoulant à travers les tubes de mesure et/ou pour la constitution de noeuds de vibration côté entrée à la fois pour les vibrations, notamment les vibrations de flexion, du troisième tube de mesure et également pour les vibrations diamétralement opposées à celles-ci, notamment les vibrations de flexion, du quatrième tube de mesure espacé du premier diviseur de débit côté entrée, notamment seulement sur le troisième tube de mesure et sur le quatrième tube de mesure, notamment sinon sur aucun autre des huit tubes de mesure ;
- Un quatrième élément de couplage (24₄) de premier type, notamment en forme de plaque et/ou de conception identique au premier élément de couplage (24₁) de premier type et/ou parallèle au premier élément de couplage (24₁) de premier type, lequel quatrième élément de couplage est fixé pour le réglage de fréquences propres de modes de vibration naturels de l'agencement de tubes, utilisables notamment pour la génération de forces de Coriolis dans le produit s'écoulant à travers les tubes de mesure et/ou pour la mesure d'un débit massique du produit s'écoulant à travers les tubes de mesure et/ou pour la constitution de noeuds de vibration côté sortie à la fois pour les vibrations, notamment les vibrations de flexion, du troisième tube de mesure et également pour les vibrations diamétralement opposées à celles-ci, notamment les vibrations de flexion, du quatrième tube de mesure espacé du deuxième diviseur de débit côté sortie, notamment seulement sur le troisième tube de mesure et sur le quatrième tube de mesure, notamment sinon sur aucun autre des huit tubes de mesure ;
- Un cinquième élément de couplage (24₅) de premier type, notamment en forme de plaque et/ou de conception identique au premier élément de couplage (24₁) de premier type, lequel cinquième élément de couplage est fixé pour le réglage de fréquences propres de modes de vibration naturels de l'agencement de tubes, utilisables notamment pour la génération de forces de Coriolis dans le produit s'écoulant à travers les tubes de mesure et/ou pour la mesure d'un débit massique du produit s'écoulant à travers les tubes de mesure et/ou pour la constitution de noeuds de vibration côté entrée à la fois pour les vibrations, notamment les vibrations de flexion, du cinquième tube de mesure et également pour les vibrations diamétralement opposées à celles-ci, notamment les vibrations de flexion, du sixième tube de mesure espacé du premier diviseur de débit côté entrée, notamment seulement sur le cinquième tube de mesure et sur le sixième tube de mesure, notamment sinon sur aucun autre des huit tubes de mesure ;
- Un sixième élément de couplage (24₂) de premier type, notamment en forme de plaque et/ou de conception identique au cinquième élément de couplage (24₁) de premier type, lequel sixième élément de couplage est fixé pour le réglage de fréquences propres de modes de vibration naturels de l'agencement de tubes, utilisables notamment pour la génération de forces de Coriolis dans le produit s'écoulant à travers les tubes de mesure et/ou pour la mesure d'un débit massique du produit s'écoulant à travers les tubes de mesure et/ou pour la constitution de noeuds de vibration côté sortie à la fois pour les vibrations, notamment les vibrations de flexion, du cinquième tube de mesure et également pour les vibrations diamétralement opposées à celles-ci, notamment les vibrations de flexion, du sixième tube de mesure espacé du deuxième diviseur de débit côté sortie, notamment seulement sur le cinquième tube de mesure et sur le sixième tube de mesure, notamment sinon sur aucun autre des huit tubes de mesure ;
- Un septième élément de couplage (24₃) de premier type, notamment en forme de plaque et/ou de conception identique au cinquième élément de couplage (24₁) de premier type et/ou parallèle au sixième élément de couplage (24₂) de premier type, lequel septième élément de couplage est fixé pour la constitution de noeuds de vibration côté entrée à la fois pour les vibrations, notamment les vibrations de flexion, du septième tube de mesure et également pour les vibrations diamétralement opposées à celles-ci, notamment les vibrations de flexion, du huitième tube de mesure espacé du premier diviseur de débit côté entrée, notamment seulement sur le septième tube de mesure et sur le huitième tube de mesure, notamment sinon sur aucun autre des huit tubes de mesure ; ainsi que
- Un huitième élément de couplage (24₄) de premier type, notamment en forme de plaque et/ou de conception identique au premier élément de couplage (24₁) de premier type et/ou parallèle au cinquième élément de couplage (24₁) de premier type, lequel huitième élément de couplage est fixé pour le réglage de fréquences propres de modes de vibration naturels de l'agencement de tubes, utilisables notamment pour la génération de forces de Coriolis dans le produit s'écoulant à travers les tubes de mesure et/ou pour la mesure d'un débit massique du produit s'écoulant à travers les tubes de mesure et/ou pour la constitution de noeuds de vibration côté sortie à la fois pour les vibrations, notamment les vibrations de flexion, du septième tube de mesure et également pour les vibrations diamétralement opposées à celles-ci, notamment les vibrations de flexion, du huitième tube de mesure espacé du deuxième diviseur de débit côté sortie, notamment seulement sur le septième tube de mesure et sur le huitième tube de mesure, notamment sinon sur aucun autre des huit tubes de mesure ;

12. Capteur selon la revendication 11, comprenant en outre :
- Un premier élément de couplage (25₁) de second type, notamment en forme de plaque ou en forme de tige, à la fois espacé du premier diviseur de débit et du deuxième diviseur de débit, lequel premier élément de couplage est fixé, notamment seulement sur le premier tube de mesure et sur le cinquième tube de mesure, notamment sinon sur aucun autre des huit tubes de mesure, pour le réglage de fréquences propres de modes de vibration naturels de l'agencement de tubes, utilisables notamment pour la génération de forces de Coriolis dans le produit s'écoulant à travers les tubes de mesure et/ou pour la mesure d'un débit massique du produit s'écoulant à travers les tubes de mesure ;
- Un deuxième élément de couplage (25₂) de second type, notamment en forme de plaque ou en forme de tige, à la fois espacé du premier diviseur de débit et du deuxième diviseur de débit, lequel deuxième élément de couplage est fixé, notamment seulement sur le deuxième tube de mesure et sur le sixième tube de mesure, notamment sinon sur aucun autre des huit tubes de mesure, pour le réglage de fréquences propres de modes de vibration naturels de l'agencement de tubes, utilisables notamment pour la génération de forces de Coriolis dans le produit s'écoulant à travers les tubes de mesure et/ou pour la mesure d'un débit massique du produit s'écoulant à travers les tubes de mesure ;
- Un troisième élément de couplage (25₃) de second type, notamment en forme de plaque ou en forme de tige, à la fois espacé du premier diviseur de débit et du deuxième diviseur de débit, lequel troisième élément de couplage est fixé, notamment seulement sur le troisième tube de mesure et sur le septième tube de mesure, notamment sinon sur aucun autre des huit tubes de mesure, pour le réglage de fréquences propres de modes de vibration naturels de l'agencement de tubes, utilisables notamment pour la génération de forces de Coriolis dans le produit s'écoulant à travers les tubes de mesure et/ou pour la mesure d'un débit massique du produit s'écoulant à travers les tubes de mesure ; ainsi que
- Un quatrième élément de couplage (25₄) de second type, notamment en forme de plaque ou en forme de tige, à la fois espacé du premier diviseur de débit et du deuxième diviseur de débit, lequel troisième élément de couplage est fixé, notamment seulement sur le quatrième tube de mesure et sur le huitième tube de mesure, notamment sinon sur aucun autre des huit tubes de mesure, pour le réglage de fréquences propres de modes de vibration naturels de l'agencement de tubes, utilisables notamment pour la génération de forces de Coriolis dans le produit s'écoulant à travers les tubes de mesure et/ou pour la mesure d'un débit massique du produit s'écoulant à travers les tubes de mesure.

13. Capteur selon la revendication précédente,
- pour lequel le premier élément de couplage de second type est fixé à la fois sur un segment de tube - s'étendant entre le premier élément de couplage de premier type et le deuxième élément de couplage de premier type - du premier tube de mesure (18₁) et également sur un segment de tube - s'étendant entre le cinquième élément de couplage de premier type et le sixième élément de couplage de premier type - du cinquième tube de mesure (18₅), notamment dans une zone d'un noeud de vibrations du premier tube de mesure tout comme dans une zone d'un noeud de vibrations du cinquième tube de mesure ;
- pour lequel le deuxième élément de couplage de second type est fixé à la fois sur un segment de tube - s'étendant entre le premier élément de couplage de premier type et le deuxième élément de couplage de premier type - du deuxième tube de mesure (18₂) et également sur un segment de tube - s'étendant entre le cinquième élément de couplage de premier type et le sixième élément de couplage de premier type - du sixième tube de mesure (18₆), notamment dans une zone d'un noeud de vibrations du deuxième tube de mesure tout comme dans une zone d'un noeud de vibrations du sixième tube de mesure ;
- pour lequel le troisième élément de couplage de second type est fixé à la fois sur un segment de tube - s'étendant entre le troisième élément de couplage de premier type et le quatrième élément de couplage de premier type - du troisième tube de mesure (18₃) et également sur un segment de tube - s'étendant entre le septième élément de couplage de premier type et le huitième élément de couplage de premier type - du septième tube de mesure (18₇), notamment dans une zone d'un noeud de vibrations du troisième tube de mesure tout comme dans une zone d'un noeud de vibrations du septième tube de mesure ; et
- pour lequel le quatrième élément de couplage de second type est fixé à la fois sur un segment de tube - s'étendant entre le troisième élément de couplage de premier type et le quatrième élément de couplage de premier type - du quatrième tube de mesure (18₄) et également sur un segment de tube - s'étendant entre le septième élément de couplage de premier type et le huitième élément de couplage de premier type - du huitième tube de mesure (18₈), notamment dans une zone d'un noeud de vibrations du quatrième tube de mesure tout comme dans une zone d'un noeud de vibrations du huitième tube de mesure.

14. Capteur selon l'une des revendications 12 à 13,
- pour lequel chacun des huit éléments de couplage de premier type, notamment de taille identique, présente une longueur maximale qui est supérieure à un double d'un calibre, D₁₈, du premier tube de mesure (18₁), notamment inférieure à un triple du calibre, D₁₈, du premier tube de mesure (18₁) ; et/ou
- pour lequel chacun des quatre éléments de couplage de second type, notamment de conception identique, est au moins partiellement incurvé, notamment en arc de cercle, notamment afin de permettre des déformations élastiques de l'élément de couplage respectif à la suite de mouvements relatifs diamétralement opposés des deux tubes de mesure reliés avec cet élément, et/ou afin de minimiser ou d'empêcher des variations de longueur sous l'effet de phénomènes thermiques de l'élément de couplage respectif et/ou des tensions mécaniques des deux tubes de mesure occasionnées par cet élément ; et/ou
- pour lequel chacun des quatre éléments de couplage de second type, notamment de taille identique, présente une longueur - mesurée comme distance la plus courte entre une première extrémité d'élément reliée avec l'un des tubes de mesure et une deuxième extrémité d'élément reliée avec un autre des tubes de mesure - qui est supérieure à une longueur maximale du premier élément de couplage de premier type et/ou qui est supérieure à un triple du calibre, D₁₈, du premier tube de mesure (18₁), notamment supérieure à un quadruple du calibre, D₁₈, du premier tube de mesure (18₁).

15. Capteur selon l'une des revendications 2 à 14, pour lequel les deux diviseurs de débit (20₁, 20₂) sont conçus et disposés dans le capteur de telle sorte
- qu'un premier plan en coupe longitudinale imaginaire (XZ₁) du capteur, plan au sein duquel s'étendent son premier axe de liaison imaginaire (Z₁) - notamment parallèle à un axe d'écoulement principal du capteur, lequel axe est aligné avec la conduite - et son deuxième axe de liaison imaginaire (Z₂), est parallèle à un deuxième plan en coupe longitudinale imaginaire (XZ₂) du capteur, plan au sein duquel s'étendent son troisième axe de liaison imaginaire (Z₃) et son quatrième axe de liaison imaginaire (Z₄) ; notamment de telle sorte que le premier plan en coupe longitudinale imaginaire (XZ) de l'agencement de tubes se situe entre le premier et le deuxième plan en coupe longitudinale imaginaire (XZ₁, XZ₂) du capteur et/ou est parallèle au premier et au deuxième plan en coupe longitudinale imaginaire (XZ₁, XZ₂) du capteur,
- qu'un troisième plan en coupe longitudinale imaginaire (YZ₁) du capteur, plan au sein duquel s'étendent son premier axe de liaison imaginaire (Z₁) et son troisième axe de liaison imaginaire (Z₃), est parallèle à un quatrième plan en coupe longitudinale imaginaire (YZ₂) du capteur, plan au sein duquel s'étendent son deuxième axe de liaison imaginaire (Z₂) et son quatrième axe de liaison imaginaire (Z₄) ; notamment de telle sorte que le deuxième plan en coupe longitudinale imaginaire (YZ) de l'agencement de tubes se situe entre le troisième plan en coupe longitudinale imaginaire (YZ₁) du capteur et le quatrième plan en coupe longitudinale imaginaire (YZ₂) du capteur et/ou est parallèle au troisième et au quatrième plan en coupe longitudinale imaginaire (YZ₁, YZ₂) du capteur,
- qu'un cinquième plan en coupe longitudinale imaginaire (L) du capteur, plan au sein duquel s'étendent son cinquième axe de liaison imaginaire (Z₅) - notamment parallèle à un axe d'écoulement principal du capteur, lequel axe est aligné avec la conduite - et son sixième axe de liaison imaginaire (Z₆), est parallèle à un sixième plan en coupe longitudinale imaginaire (XZ₄) du capteur, plan au sein duquel s'étendent son septième axe de liaison imaginaire (Z₇) et son huitième axe de liaison imaginaire (Z₈) ; notamment de telle sorte que le premier plan en coupe longitudinale imaginaire (XZ) de l'agencement de tubes se situe entre le cinquième et le sixième plan en coupe longitudinale imaginaire (XZ₃, XZ₄) du capteur et/ou est parallèle au cinquième et au sixième plan en coupe longitudinale imaginaire (XZ₃, XZ₄) du capteur, et
- qu'un septième plan en coupe longitudinale imaginaire (YZ₃) du capteur, plan au sein duquel s'étendent son cinquième axe de liaison imaginaire (Z₅) et son septième axe de liaison imaginaire (Z₇), est parallèle à un huitième plan en coupe longitudinale (YZ₄) du capteur, plan au sein duquel s'étendent son sixième axe de liaison imaginaire (Z₆) et son huitième axe de liaison imaginaire (Z₈) ; notamment de telle sorte que le deuxième plan en coupe longitudinale imaginaire (YZ) de l'agencement de tubes se situe entre le septième plan en coupe longitudinale imaginaire (YZ₃) du capteur et le huitième plan en coupe longitudinale imaginaire (YZ₄) du capteur et/ou est parallèle au septième et au huitième plan en coupe longitudinale (YZ₃,YZ₄) du capteur.

16. Capteur selon la revendication 15,
- pour lequel les tubes de mesure sont conçus et disposés de telle sorte
-- que le troisième plan en coupe longitudinale imaginaire (YZ₁) du capteur coupe longitudinalement et de façon imaginaire à la fois le premier tube de mesure et le troisième tube de mesure,
-- que le quatrième plan en coupe longitudinale imaginaire (YZ₂) du capteur coupe longitudinalement et de façon imaginaire à la fois le deuxième tube de mesure et le quatrième tube de mesure,
-- que le cinquième plan en coupe longitudinale imaginaire XZ₃) du capteur coupe longitudinalement et de façon imaginaire à la fois le cinquième tube de mesure et le sixième tube de mesure, et
-- que le sixième plan en coupe longitudinale imaginaire (XZ₄) du capteur coupe longitudinalement et de façon imaginaire à la fois le septième tube de mesure et le huitième tube de mesure ; et/ou
- pour lequel le premier tube de mesure, le deuxième tube de mesure, le troisième tube de mesure ainsi que le quatrième tube de mesure présentent chacun un sommet de tube de mesure, défini comme distance la plus grande du tube de mesure respectif par rapport au premier plan en coupe longitudinale imaginaire (XZ), et pour lequel le cinquième tube de mesure, le sixième tube de mesure, le septième tube de mesure ainsi que le huitième tube de mesure présentent chacun un sommet de tube de mesure, défini comme distance la plus grande du tube de mesure respectif par rapport au deuxième plan en coupe longitudinale imaginaire (YZ) ; et/ou
- pour lequel l'agencement de tubes présente un plan en coupe transversale imaginaire perpendiculaire (XY) à la fois au premier plan en coupe longitudinale imaginaire (XZ) et au deuxième plan en coupe longitudinale imaginaire (YZ), notamment de telle sorte qu'un centre de gravité de l'agencement de tubes se situe dans le plan en coupe transversale imaginaire (XY) et/ou que l'agencement de tubes est en symétrie miroir par rapport au plan en coupe transversale imaginaire (XY) et/ou que le premier tube de mesure, le deuxième tube de mesure, le troisième tube de mesure ainsi que le quatrième tube de mesure présentent chacun un sommet de tube de mesure, défini comme distance la plus grande du tube de mesure respectif par rapport au premier plan en coupe longitudinale imaginaire (XZ), ou le cinquième tube de mesure, le sixième tube de mesure, le septième tube de mesure ainsi que le huitième tube de mesure présentent chacun un sommet de tube de mesure, défini comme distance la plus grande du tube de mesure respectif par rapport au deuxième plan en coupe longitudinale imaginaire (YZ), et de telle sorte que le plan en coupe transversale imaginaire (XY) coupe chacun des huit tubes de mesure en son sommet de tube de mesure respectif.

17. Capteur selon l'une des revendications précédentes,
- pour lequel le premier tube de mesure présente un calibre égal à un calibre du deuxième tube de mesure, notamment également égal à un calibre du troisième tube de mesure, ainsi qu'égal à un calibre du quatrième tube de mesure ; et/ou
- pour lequel les huit tubes de mesure sont - concernant un matériau avec lequel sont constitués leurs parois, et/ou concernant leurs dimensions géométriques, notamment une longueur de tube, une épaisseur de paroi de tube, un diamètre extérieur de tube et/ou un calibre - de conception identique ; et/ou
- pour lequel un matériau, avec lequel sont constitués au moins partiellement les parois des huit tubes de mesure, est en titane et/ou en zirconium et/ou en acier inox et/ou en acier duplex et/ou en acier superduplex ; et/ou
- pour lequel le boîtier de capteur (7₁), les diviseurs de débit (20₁, 20₂) et les parois des huit tubes de mesure sont constitués respectivement d'acier, notamment inoxydable et/ou haute résistance ; et/ou
- pour lequel chacun des au moins huit tubes de mesure (18₁, 18₂, 18₃, 18₄, 18₅, 18₆, 18₇, 18₈), notamment de taille identique, présente un calibre, D₁₈, supérieur à 10 mm, notamment supérieur à 30 mm ; et/ou
- pour lequel les tubes de mesure (18₁, 18₂, 18₃, 18₄) sont incurvés et disposés de telle sorte qu'un rapport calibre-hauteur, D₁₈/Q₁₈, de l'agencement de tubes, défini par un rapport d'un calibre, D₁₈, du premier tube de mesure par rapport à un allongement latéral maximal, Q₁₈, de l'agencement de tubes, mesuré entre un sommet du premier tube de mesure (18₁) et un sommet du troisième tube de mesure (18₃), est supérieur à 0,05, notamment supérieur à 0,07 et/ou inférieur à 0,5, notamment inférieur à 0,4 ; et/ou
- pour lequel un diamètre nominal, D₁₁, du capteur, correspondant à un rapport calibre-diamètre nominal, D₁₈/D₁₁, du capteur, défini par un rapport entre un calibre, D₁₈, du premier tube de mesure et un calibre de la conduite, dans la trajectoire de laquelle le capteur doit être inséré, est inférieur à 0,4, notamment inférieur à 0,35 et/ou supérieur à 0,21 ; et/ou
- pour lequel un diamètre nominal du capteur, correspondant à un calibre de la conduite, dans la trajectoire de laquelle le capteur doit être inséré, est supérieur à 50 mm, notamment supérieur à 100 mm ; et/ou
- pour lequel le premier diviseur de débit (20₁) comporte une bride (6₁) permettant de raccorder le capteur à un segment de tube de la conduite destiné à acheminer le produit au capteur, et le deuxième diviseur de débit (20₂) comporte une bride (6₂) permettant de raccorder le capteur à un segment de tube de la conduite destiné à évacuer le produit du capteur ; et/ou
- pour lequel une longueur de tube de mesure, L₁₈, du premier tube de mesure (18₁) correspondant à une longueur d'un segment d'une ligne de flexion du premier tube de mesure s'étendant entre la première ouverture d'écoulement (20_{1A}) du premier diviseur de débit (20₁) et la première ouverture d'écoulement (20_{2A}) du deuxième diviseur de débit (20₂), est supérieure à 1 000 mm, notamment supérieure à 1 200 mm et/ou inférieure à 3 000 mm, notamment inférieure à 2 500 mm ; et/ou
- pour lequel le premier diviseur de débit (20₁) présente un corps d'écoulement, notamment conique ou paraboloïdal, placé entre ses ouvertures d'écoulement, destiné à réduire une résistance à l'écoulement du premier diviseur de débit (20₁) et pour lequel le deuxième diviseur de débit (20₂) présente un corps d'écoulement, notamment conique ou paraboloïdal, placé entre ses ouvertures d'écoulement, destiné à réduire une résistance à l'écoulement du deuxième diviseur de débit (20₁) ; et/ou
- pour lequel chacun des huit tubes de mesure (18₁, 18₂, 18₃, 18₄, 18₅, 18₆, 18₇, 18₈) peut être excité, notamment simultanément, en vibrations de flexion au moyen du circuit d'excitation.

18. Capteur selon l'une des revendications précédentes, comprenant en outre un agencement de capteurs (19) réagissant aux vibrations, notamment aux vibrations de flexion des tubes de mesure générées au moyen du circuit d'excitation, notamment électrodynamique et/ou constitué de capteurs de vibrations (19₁, 19₂, 19₃, 19₄, 19₅, 19₆, 19₇, 19₈) de conception identique, lequel agencement est destiné à générer des signaux de vibration représentant les vibrations, notamment les vibrations de flexion des tubes de mesure.

19. Capteur selon la revendication précédente, pour lequel l'agencement de capteurs (19) est constitué :
- d'un premier capteur de vibrations (19₁) côté entrée, notamment électrodynamique et/ou mesurant de façon différentielle les vibrations du premier tube de mesure (18₁) par rapport au deuxième tube de mesure (18₂), ainsi que d'un deuxième capteur de vibrations (19₂) côté sortie, notamment électrodynamique et/ou mesurant de façon différentielle les vibrations du premier tube de mesure (18₁) par rapport au deuxième tube de mesure (18₂),
- d'un troisième capteur de vibrations (19₃) côté entrée, notamment électrodynamique et/ou mesurant de façon différentielle les vibrations du troisième tube de mesure (18₃) par rapport au quatrième tube de mesure (18₄) et/ou couplé électriquement en série avec le premier capteur de vibrations (19₁), ainsi que d'un quatrième capteur de vibrations (19₄) côté sortie, notamment électrodynamique et/ou mesurant de façon différentielle les vibrations du troisième tube de mesure (18₃) par rapport au quatrième tube de mesure (18₄) et/ou couplé électriquement en série avec le deuxième capteur de vibrations (19₂),
- d'un cinquième capteur de vibrations (18₅) côté entrée, notamment électrodynamique et/ou mesurant de façon différentielle les vibrations du cinquième tube de mesure (18₅) par rapport au sixième tube de mesure (18₆) et/ou couplé électriquement en série avec le premier capteur de vibrations (19₁), ainsi que d'un sixième capteur de vibrations (19₆) côté sortie, notamment électrodynamique et/ou mesurant de façon différentielle les vibrations du cinquième tube de mesure (18₅) par rapport au sixième tube de mesure (18₆) et/ou couplé électriquement en série avec le deuxième capteur de vibrations (19₂), ainsi que
- d'un septième capteur de vibrations (19₇) côté entrée, notamment électrodynamique, et/ou mesurant de façon différentielle les vibrations du septième tube de mesure (18₇) par rapport au huitième tube de mesure (18₈) et/ou couplé électriquement en série avec le premier capteur de vibrations (19₁), ainsi que d'un huitième capteur de vibrations (19₈) côté sortie, notamment électrodynamique, et/ou mesurant de façon différentielle les vibrations du septième tube de mesure (18₇) par rapport au huitième tube de mesure (18₈) et/ou couplé électriquement en série avec le deuxième capteur de vibrations (19₂).

20. Système de mesure destiné à mesurer une densité et/ou un débit massique, notamment également un débit massique total, totalisé pendant un intervalle de temps, d'un produit s'écoulant au moins temporairement dans une conduite, notamment avec un débit massique supérieur à 1 000 t/h, notamment un gaz, un liquide, une poudre ou une autre substance apte à s'écouler, lequel système de mesure est, en tant qu'appareil de mesure en ligne et ou en tant qu'appareil de mesure compact, constitué d'un capteur selon l'une des revendications 1 à 19, ainsi qu'une électronique de transmetteur couplée électriquement avec le capteur, notamment disposée dans un boîtier d'électronique relié mécaniquement avec le boîtier de capteur, laquelle électronique est destinée à piloter le capteur, notamment de son circuit d'excitation, et à exploiter les signaux de vibration fourni par le capteur.

21. Système de mesure selon la revendication 20,
- pour lequel les huit tubes de mesure, excités en fonctionnement par le circuit d'excitation, exécutent simultanément des vibrations de flexion, notamment des vibrations de flexion dans un mode de vibration naturel immanent à l'agencement de tubes ; et/ou
- pour lequel le circuit d'excitation provoque des vibrations des tubes de mesure en ce qu'une force d'excitation générée au moyen du premier générateur de vibrations et agissant sur le premier tube de mesure s'oppose, notamment de façon diamétralement opposée, à une force d'excitation générée simultanément au moyen du premier générateur de vibrations et agissant sur le deuxième tube de mesure ; et/ou
- pour lequel l'électronique de transmetteur génère, au moyen d'une puissance d'excitation électrique convertie dans le circuit d'excitation, une valeur mesurée de viscosité représentant la viscosité du produit en écoulement ; et/ou
- pour lequel l'électronique de transmetteur génère, au moyen des signaux de vibration fournis par le capteur, une valeur mesurée de débit massique représentant le débit massique du produit en écoulement ; et/ou
- pour lequel l'électronique de transmetteur génère, au moyen des signaux de vibration fournis par le capteur, une valeur mesurée de densité représentant la densité du produit en écoulement ; et/ou
- pour lequel l'électronique de transmetteur (12) injecte dans le circuit d'excitation une puissance d'excitation électrique au moyen d'au moins un signal d'attaque électrique, acheminé au circuit d'excitation, variable et/ou temporairement périodique, notamment avec au moins une fréquence de signal correspondant à une fréquence de résonance d'un mode de vibration naturel de l'agencement de tubes, notamment avec un niveau de tension maximal variable et/ou une intensité de courant maximale variable, et pour lequel le circuit d'excitation (5) convertit la puissance d'excitation électrique, qui dépend notamment d'un niveau de tension et d'une intensité de courant de l'au moins un signal d'attaque, au moins partiellement à la fois en vibrations de flexion du premier tube de mesure (18₁) et en vibrations de flexion du deuxième tube de mesure (18₂) diamétralement opposées aux vibrations de flexion du premier tube de mesure (18₁) par rapport au deuxième plan en coupe longitudinale imaginaire (YZ) de l'agencement de tubes, et également en vibrations de flexion du troisième tube de mesure (18₃) et en vibrations de flexion du quatrième tube de mesure (18₄) diamétralement opposées aux vibrations de flexion du troisième tube de mesure (18₃) par rapport au deuxième plan en coupe longitudinale imaginaire (YZ) de l'agencement de tubes.

22. Utilisation d'un capteur selon l'une des revendications 1 à 19 ou d'un système de mesure selon l'une des revendications 20 à 21, destiné à mesurer une densité et/ou un débit massique, notamment également un débit massique total, totalisé pendant un intervalle de temps, et/ou une viscosité et/ou un nombre de Reynolds d'un produit s'écoulant dans une conduite de process, notamment une conduite, au moins temporairement avec un débit massique supérieur à 1 000 t/h, notamment supérieur à 1 500 t/h, notamment un gaz, un liquide, une poudre ou une autre substance apte à s'écouler.
